(19) Europäisches Patentamt
European Patent Office
Office européen des brevets

(11) EP 1 239 733 B1

(12) **EUROPÄISCHE PATENTSCHRIFT**

(45) Veröffentlichungstag und Bekanntmachung des Hinweises auf die Patenterteilung:
**02.07.2003 Patentblatt 2003/27**

(21) Anmeldenummer: **00985119.7**

(22) Anmeldetag: **30.11.2000**

(51) Int Cl.⁷: **A01N 47/12**

(86) Internationale Anmeldenummer:
**PCT/EP00/11989**

(87) Internationale Veröffentlichungsnummer:
**WO 01/044215 (21.06.2001 Gazette 2001/25)**

(54) **FUNGIZIDE WIRKSTOFFKOMBINATIONEN**

FUNGICIDAL COMBINATIONS OF ACTIVE SUBSTANCES

COMBINAISONS FONGICIDES DE SUBSTANCES ACTIVES

(84) Benannte Vertragsstaaten:
**AT BE CH CY DE DK ES FI FR GB GR IE IT LI LU MC NL PT SE TR**

(30) Priorität: **13.12.1999 DE 19959947**
**03.05.2000 DE 10021412**

(43) Veröffentlichungstag der Anmeldung:
**18.09.2002 Patentblatt 2002/38**

(73) Patentinhaber: **Bayer CropScience AG**
**40789 Monheim (DE)**

(72) Erfinder:
- **WACHENDORFF-NEUMANN, Ulrike**
**56566 Neuwied (DE)**
- **GAYER, Herbert**
**40789 Monheim (DE)**
- **HEINEMANN, Ulrich**
**42799 Leichlingen (DE)**
- **SEITZ, Thomas**
**40764 Langenfeld (DE)**
- **KRÜGER, Bernd-Wieland**
**51467 Bergisch Gladbach (DE)**
- **KRÄMER, Wolfgang**
**51399 Burscheid (DE)**
- **ASSMANN, Lutz**
**40764 Langenfeld (DE)**

(56) Entgegenhaltungen:
**EP-A- 0 610 764** **EP-A- 0 775 696**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 239 733 B1

Printed by Jouve, 75001 PARIS (FR)

## Beschreibung

Die vorliegende Erfindung betrifft neue Wirkstoffkombinationen, die aus einem bekannten Fluor-benzothiazol-Derivat einerseits und weiteren bekannten Wirkstoffen andererseits bestehen und sehr gut zur Bekämpfung von phytopathogenen Pilzen geeignet sind.

Es ist bereits bekannt, dass Isopropyl 1-({[1-(6-fluor-1,3-benzothiazol-2-yl)ethyl]-amino}carbonyl)-2-methylpropylcarbamat fungizide Eigenschaften besitzt (vgl. EP-A1-775 696). Die Wirksamkeit dieses Stoffes ist gut, lässt aber bei niedrigen Aufwandmengen in manchen Fällen zu wünschen übrig.

Ferner ist schon bekannt, dass zahlreiche Triazol-Derivate, Anilin-Derivate, Dicarboximide und andere Heterocyclen zur Bekämpfung von Pilzen eingesetzt werden können (vgl. EP-A 0 040 345, DE-A 22 01 063, DE-A 23 24 010, Pesticide Manual, 9th. Edition (1991), Seiten 249 und 827, EP-A 0 382 375 und EP-A 0 515 901). Auch die Wirkung dieser Stoffe ist aber bei niedrigen Aufwandmengen nicht immer ausreichend.

Schließlich ist auch bekannt, dass 1-[(6-Chlor-3-pyridinyl)-methyl]-N-nitro-2-imidazolidinimin zur Bekämpfung tierischer Schädlinge, wie Insekten, verwendbar ist (vgl. Pesticide Manual, 9th. Edition (1991), Seite 491). Fungizide Eigenschaften dieses Stoffes wurden aber bisher noch nicht beschrieben.

Ferner ist bereits bekannt, dass 1-(3,5-Dimethyl-isoxazol-4-sulfonyl)-2-chlor-6,6-difluor-[1,3]-dioxolo-[4,5f]-benzimidazol fungizide Eigenschaften besitzt (vgl. WO 97-06171).

Ferner ist bereits bekannt, dass substituierte Azadioxacycloalkene eine fungizide Wirkung zeigen (vgl. EP-B-712 396).

Schließlich ist auch bekannt, dass substituierte Halogenpyrimidine fungizide Eigenschaften besitzen (vgl. DE-A1-196 46 407, EP-B-712 396).

Es wurde nun gefunden, dass die neuen Wirkstoffkombinationen aus einem Fluor-benzothiazol-Derivat der Formel

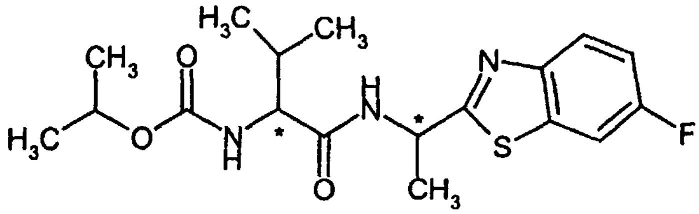

(I)

und

(1) einem Triazol-Derivat der Formel

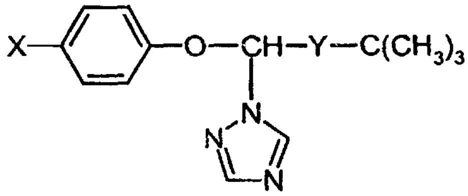

(II),

in welcher

X für Chlor oder Phenyl steht, und

Y für

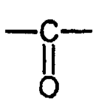

oder

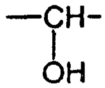

steht,

und/oder

(2) dem Triazol-Derivat der Formel

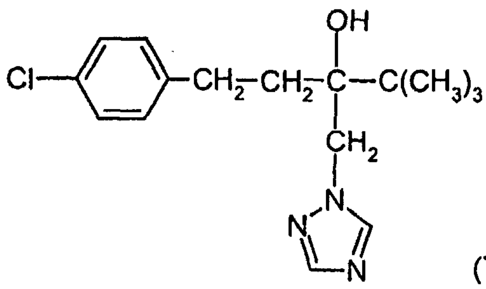

(III),

(Tebuconazole)

und/oder

(3) einem Anilin-Derivat der Formel

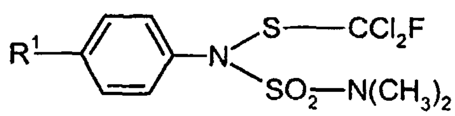

(IV),

in welcher

$R^1$ für Wasserstoff oder Methyl steht,

und/oder

(4) N-[1-(4-Chlor-phenyl)-ethyl]-2,2-dichlor-1-ethyl-3-methyl-cyclopropan-carbonsäureamid der Formel

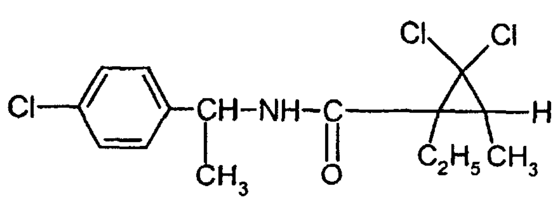

(V)

(Carpropamid)

und/oder

(5) dem Zink-propylen-1,2-bis-(dithiocarbamidat) der Formel

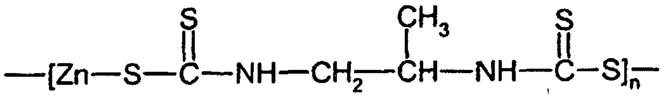

(VI)

n > = 1 (Propineb)

und/oder

(6) mindestens einem Thiocarbamat der Formel

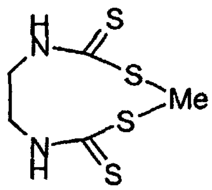

(VII),

Me = Zn oder Mn oder Gemisch aus Zn und Mn

und/oder

(7) dem Anilin-Derivat der Formel

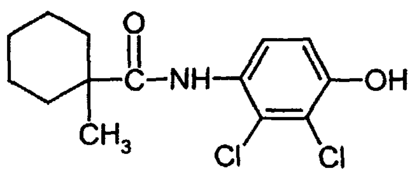

(VIII)

(Fenhexamid)

und/oder

(8) der Verbindung der Formel

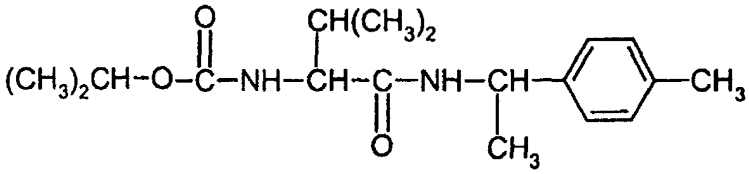

(IX)

(Iprovalicarb)

und/oder

(9) dem Benzothiadiazol-Derivat der Formel

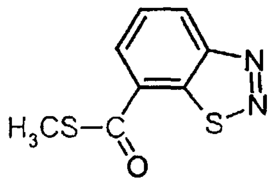

(X)

(Acibenzolar-S-methyl)

und/oder

(10) dem 8-t-Butyl-2-(N-ethyl-N-n-propyl-amino)-methyl-1,4-dioxaspiro[5,4]-decan der Formel

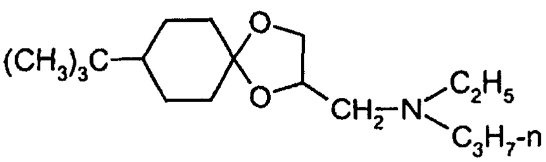

(XI)

(Spiroxamine)

und/oder

(11) der Verbindung der Formel

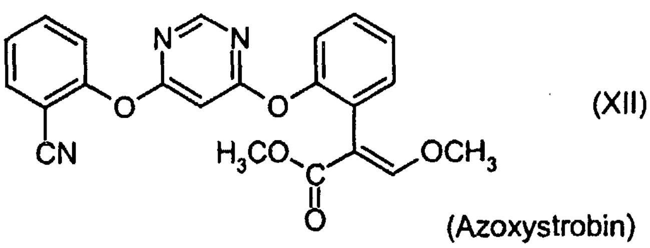

(XII)

(Azoxystrobin)

und/oder

(12) der Verbindung der Formel

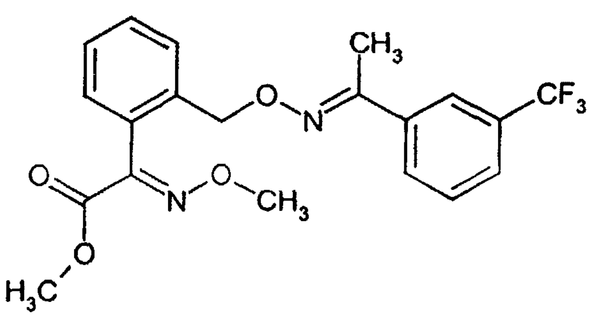

(XIII)

(Trifloxystrobin)

und/oder

(13) der Verbindung der Formel

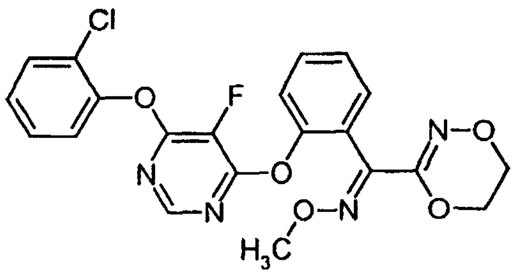

(XIV)

und/oder

(14) dem Cyanoxim-Derivat der Formel

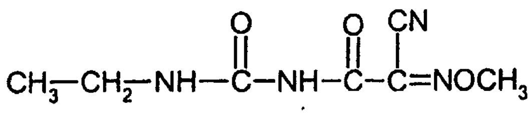

(XV)

(Cymoxanil)

und/oder

(15) einem Pyrimidin-Derivat der Formel

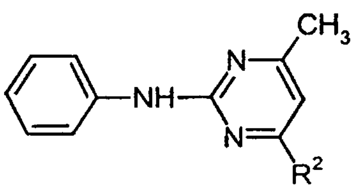

(XVI),

in welcher

$R^2$ für Methyl, $—C{\equiv}C—CH_3$ (Mepanipyrim) oder Cyclopropyl (Cyprodinyl) steht,

und/oder

(16) einem Anilin-Derivat der Formel

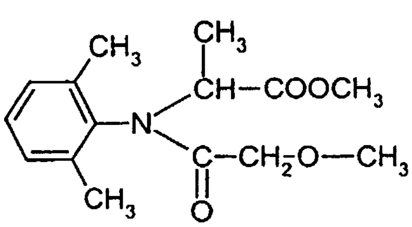

(XVII)

(Metalaxyl bzw. Metalaxyl M)

und/oder

(17) dem Morpholin-Derivat der Formel

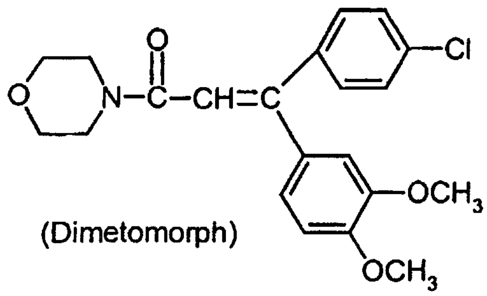

(Dimetomorph)

(XVIII)

und/oder

(18) dem Phthalimid-Derivat der Formel

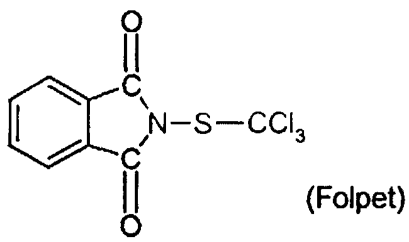

(XIX)

(Folpet)

und/oder

(19) der Phosphor-Verbindung der Formel

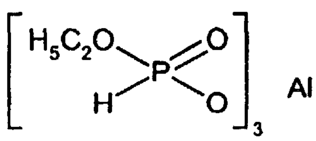

(XX)

(Fosetyl-Al)

und/oder

(20) dem Hydroxyethyl-triazol-Derivat der Formel

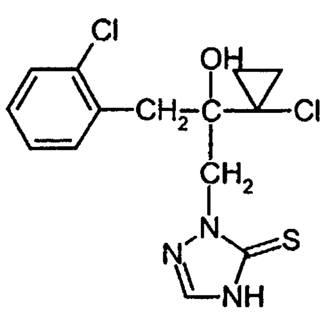

(XXI)

und/oder

(21) dem 1-[(6-Chlor-3-pyridinyl)-methyl]-N-nitro-2-imidazolidinimin der Formel

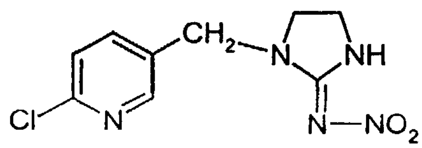

(XXII)

(Imidacloprid)

und/oder

(22) dem Oxazolidindion der Formel

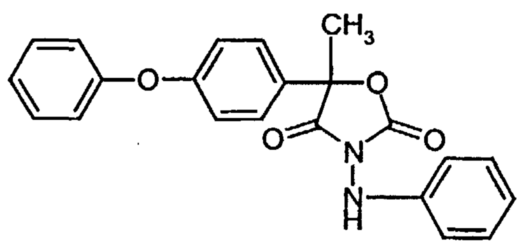

(XXIII)

(Famoxadone)

und/oder

(23) dem Benzamid-Derivat der Formel

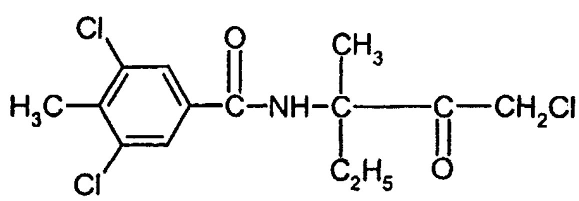

(XXIV)

(Zoxamide)

und/oder

(24) einem Guanidin-Derivat der Formel

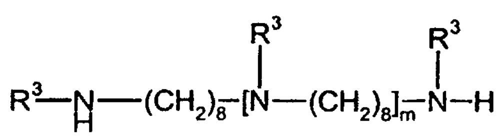

(XXV)

x (2 + m) $CH_3COOH$

in welcher

m für ganze Zahlen von 0 bis 5 steht und

$R^3$ für Wasserstoff (17 bis 23 %) oder den Rest der Formel

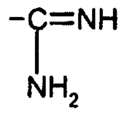

(77 bis 83 %)

steht,
und/oder

(25) dem Triazol-Derivat der Formel

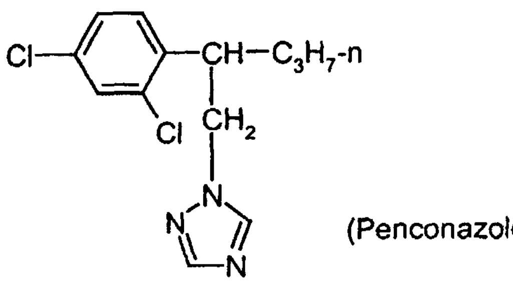

(XXVI)

(Penconazole)

und/oder

(26) dem Halogen-benzimidazol der Formel

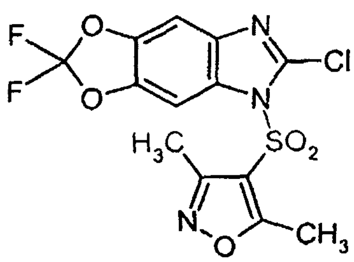

(XXVII)

und/oder

(27) dem Halogenpyrimidin der Formel

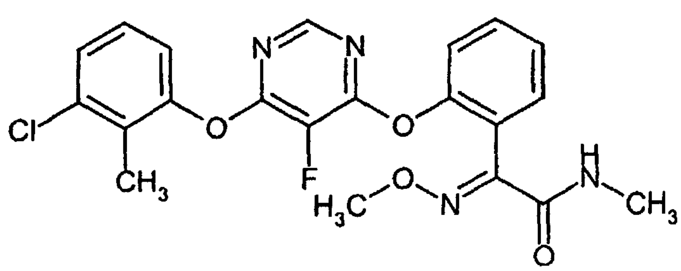

(XXVIII)

und/oder

(28) dem Tetrachlor-isophthalo-dinitril der Formel

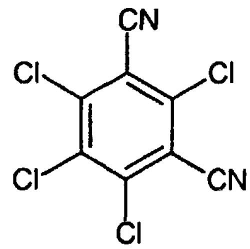

(XXIX)

(Chlorothalonil)

und/oder

(29) der Verbindung der Formel

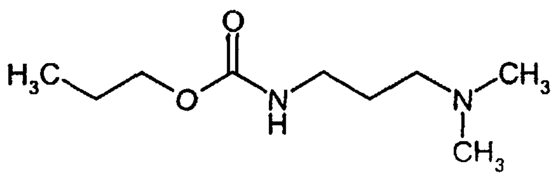

(XXX)

(Propamocarb)

und/oder

(30) dem Pyridinamin der Formel

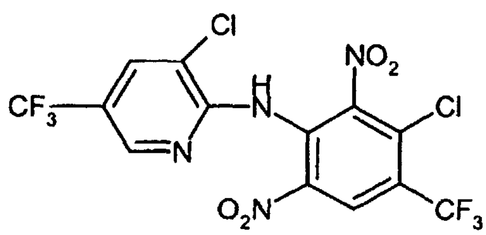

(XXXI)

(Fluazinam)

und/oder

(31) dem Thiazolcarboxamid der Formel

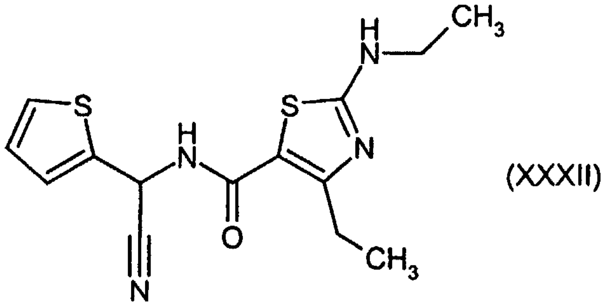

(XXXII)

(Ethaboxam)

und/oder

(32) dem Sulfonamid der Formel

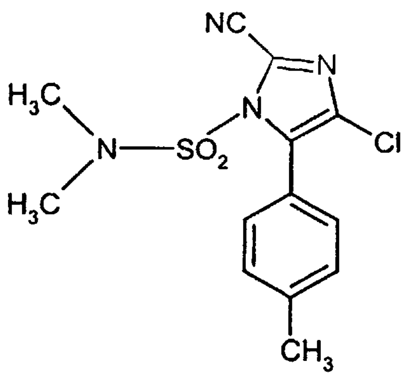

(XXXIII)

(Cyamidazosulfamid)

und/oder

(33) der Verbindung der Formel

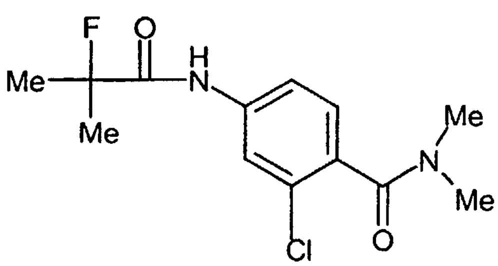

(XXXIV)

und/oder

(34) der Verbindung der Formel

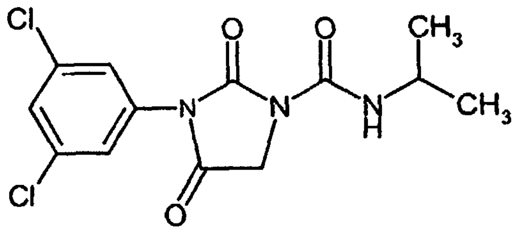

(XXXV)

(Iprodione)

und/oder

(35) der Verbindung der Formel

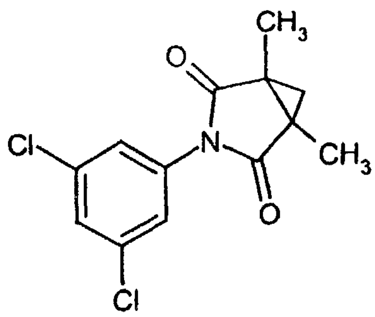

(XXXVI)

(Procymidone)

und/oder

(36) dem Diamid der Formel

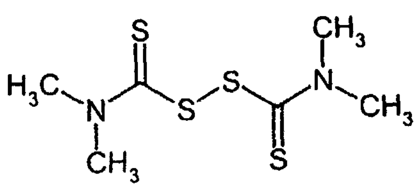

(XXXVII)

(Thiram)

und/oder

(37) dem Methoxyacrylat-Derivat der Formel

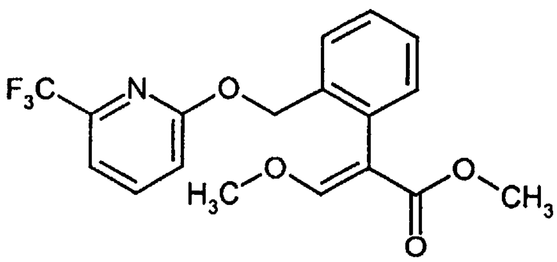

(XXXVIII)

(Picoxystrobin)

und/oder

(38) dem Chinolin-Derivat der Formel

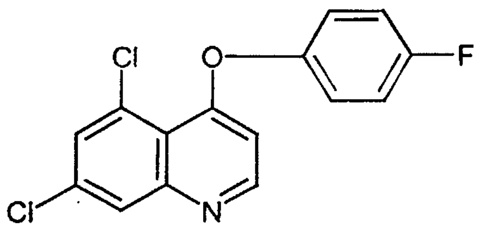

(XXXIX)

(Quinoxyfen)

und/oder

(39) dem Phenylamid-Derivat der Formel

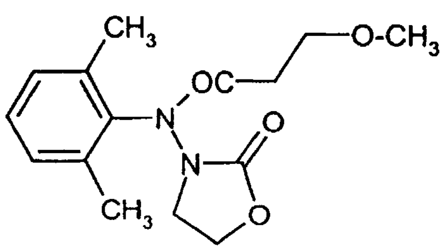

(XXXX)

(Oxadixyl)

und/oder

(40) dem Phenylamid-Derivat der Formel

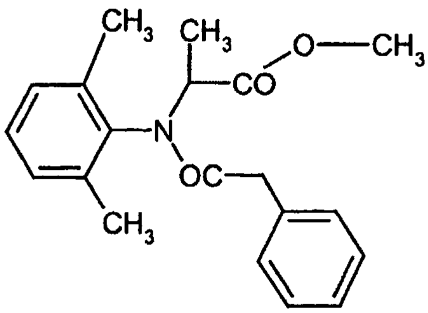

(XXXXI)

(Benalaxyl)

und/oder

(41) das Dicarboxim-Derivat der Formel

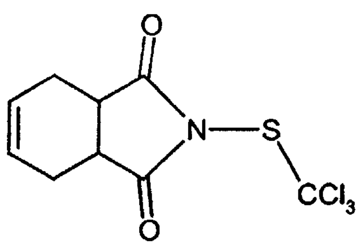

(XXXXIIa)

(Captan)

und/oder

(42) der Phosphonsäure der Formel

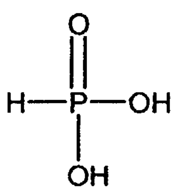

(XXXXIII)

(Phosphonsäure)

und/oder

(43) dem Pyrrol-Derivat der Formel

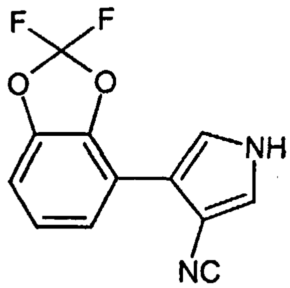

(XXXXIV)

(Fludioxonil)

und/oder

(44) dem Phenylcarbonat der Formel

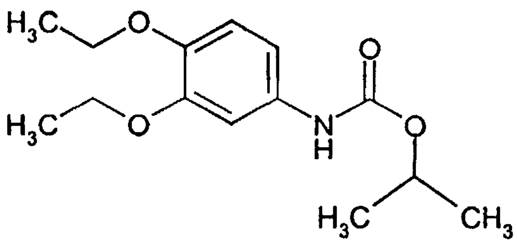

(XXXXV)

(Diethofencarb)

und/oder

(45) den Kupferverbindungen

a)

Kupferoxychlorid (XXXXVIa)

b)

Kupferhydroxid (XXXXVIb)

und/oder

(46) dem Imidazol-Derivat der Formel

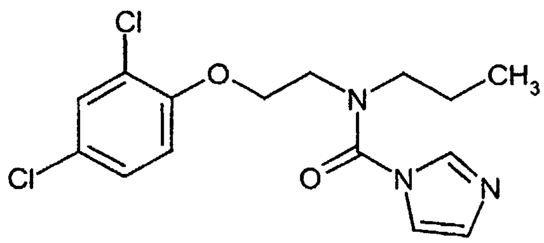

(XXXXVII)

(Prochloraz)

und/oder

(47) einem Triazolderivat der Formel

a)

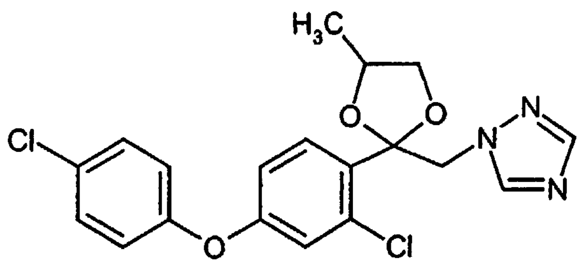

(XXXXVIIIa)

(Difenconazole)

und/oder

b)

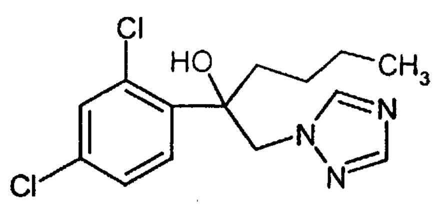

(XXXXVIIIb)

(Hexaconazole)

und/oder

c)

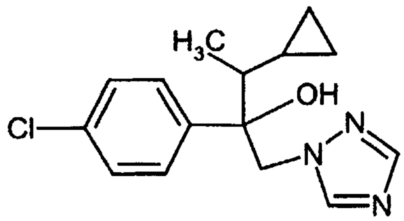

(XXXXVIIIe)

(Cyproconazole)

und/oder

d)

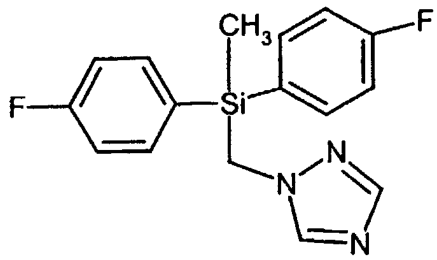

(XXXXVIIId)

(Flusilazole)

und/oder

e)

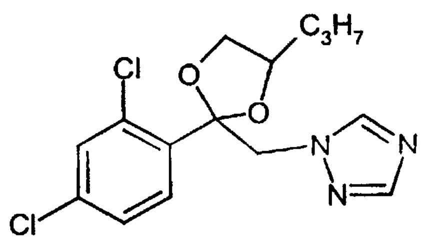

(XXXXVIIIe)

(Propiconazole)

und/oder

f)

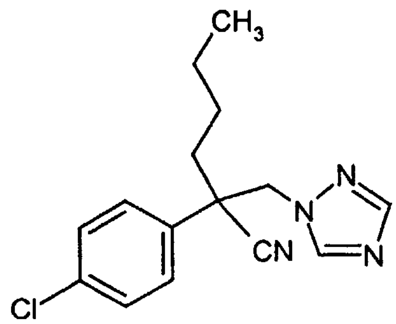

(XXXXVIIIf)

(Myclobutanil)

und/oder

g)

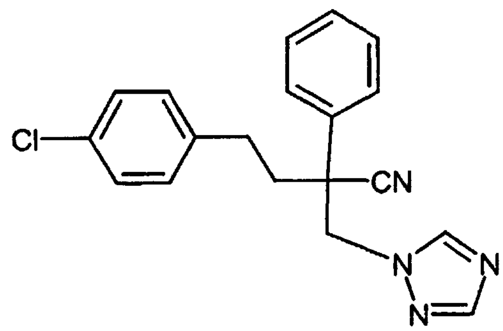

(XXXXVIIIg)

(Fenbuconazole)

und/oder

h)

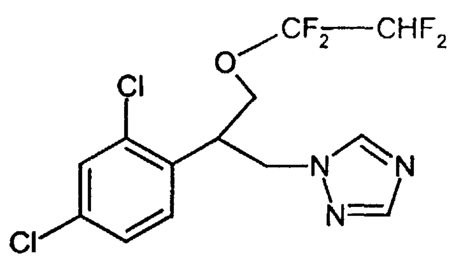

(XXXXVIIIh)

(Tetraconazole)

und/oder

(48) einer Verbindung der allgemeinen Formel

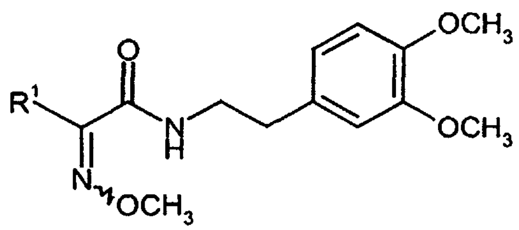

(XXXXIX)

in welcher

$R^1$ für unsubstituiertes oder durch Fluor, Chlor, Brom, Methyl oder Ethyl substituiertes Phenyl, 2-Naphthyl, 1,2,3,4-Tetrahydronaphthyl oder Indanyl steht,

und/oder

(49) N-Methyl-2-(methoxyimino)-2-[2-([1-(3-tri-fluoro-methylphenyl)ethoxy]iminomethyl)phenyl]acetamid der Formel

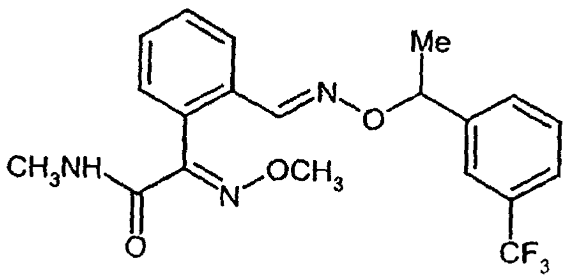

(XXXXX)

und/oder

(50) 2,4-Dihydro-5-methoxy-2-methyl-4-[2-([([1-(3-tri-fluoromethylphenyl)ethylidene]amino)oxy]methyl)phenyl]-3H-1,2,4-triazol-3-one der Formel

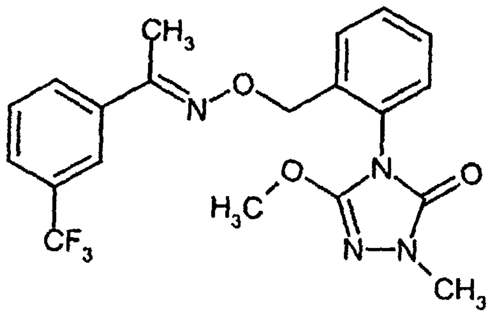

(XXXXXI)

und/oder

(51) der Verbindung der Formel

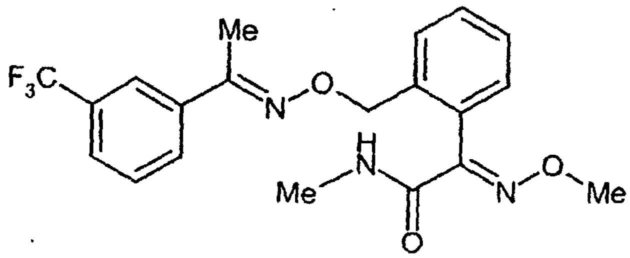

(XXXXXII)

sehr gute fungizide Eigenschaften besitzen.

Überraschenderweise ist die fungizide Wirkung der erfindungsgemäßen Wirkstoffkombinationen wesentlich höher als die Summe der Wirkungen der einzelnen Wirkstoffe. Es liegt also ein nicht vorhersehbarer, echter synergistischer Effekt vor und nicht nur eine Wirkungsergänzung.

Aus der Strukturformel für den Wirkstoff der Formel (I) ist ersichtlich, dass die Verbindung zwei asymmetrisch substituierte Kohlenstoffatome aufweist. Das Produkt kann daher als Gemisch von verschiedenen Isomeren oder auch in Form eines einzigen Isomeren vorliegen.

Bevorzugte Verbindungen der Formel (I) sind Verbindungen, in denen der Aminosäureteil aus i-Propyloxycarbonyl-L-valin gebildet wird und der Fluor-benzothiazolethylaminteil racemisch ist, insbesondere aber die (R)-Konfiguration aufweist.

Die Formel (II) umfasst die Verbindungen

1-(4-Chlor-phenoxy)-3,3-dimethyl-1-(1,2,4-triazol-1-yl)-butan-2-on der Formel

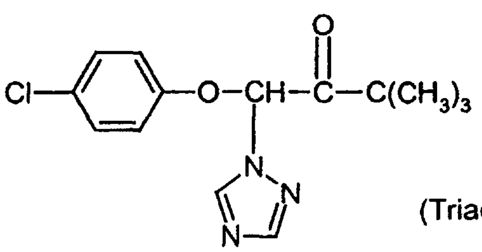

(IIa)

(Triadimefon)

1-(4-Chlor-phenoxy)-3,3-dimethyl-1-(1,2,4-triazol-1-yl)-butan-2-ol der Formel

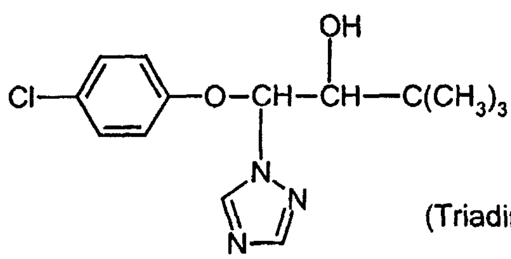

(IIb)

(Triadimenol)

und

1-(4-Phenyl-phenoxy)-3,3-dimethyl-1-(1,2,4-triazol-1-yl)-butan-2-ol der Formel

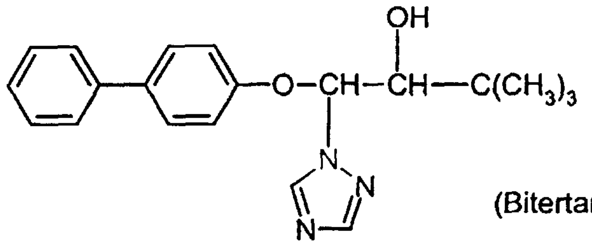

(IIc)

(Bitertanol)

Die Formel (IV) umfasst die Anilin-Derivate der Formeln

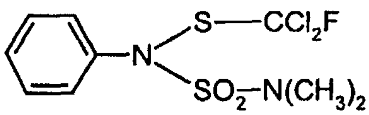

(Dichlofluanid)

(IVa)

und

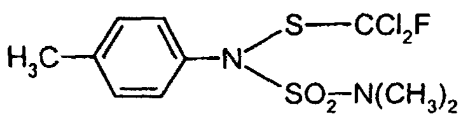

(Tolylfluanid)

(IVb)

Aus der Strukturformel für den Wirkstoff der Formel (V) ist ersichtlich, dass die Verbindung drei asymmetrisch substituierte Kohlenstoffatome aufweist. Das Produkt kann daher als Gemisch von verschiedenen Isomeren oder auch in Form einer einzigen Komponente vorliegen. Besonders bevorzugt sind die Verbindungen N-(R)-[1-(4-Chlor-phenyl)-ethyl]-(1S)-2,2-dichlor-1-ethyl-3t-methyl-1R-cyclopropancarbonsäureamid der Formel

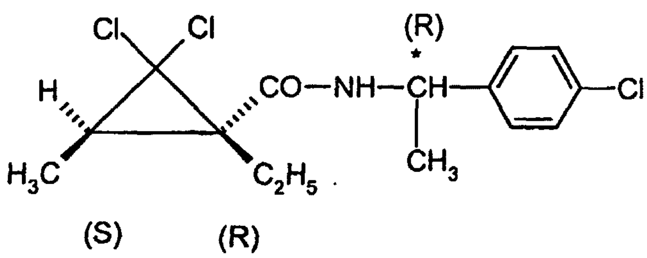

(Va)

und
N-(R)-[1-(4-Chlor-phenyl)-ethyl]-(1R)-2,2-dichlor-1-ethyl-3t-methyl-1R-cyclopropancarbonsäureamid der Formel

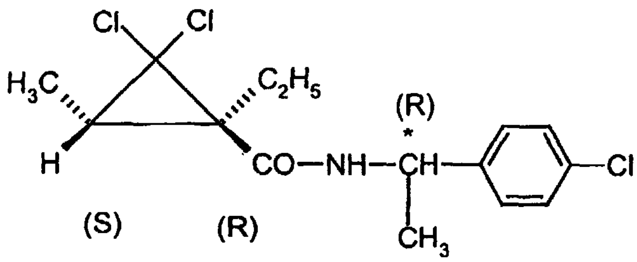

(Vb)

Die Formel (VII) umfasst die Verbindungen

(VIIa) Me = Zn (Zineb),

(VIIb) Me = Mn (Maneb)

und

(VIIc) Mischung aus (VIIa) und (VIIb) (Mancozeb).

Die Formel (XVI) umfasst die Verbindungen

(XVIa) $R^2 = CH_3$ (Pyrimethanil)

und

(XVIb) $R^2 =$ 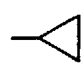 (Cyprodinyl)

(XVIc) $R^2$=-C≡C-$CH_3$ (Mepanipyrim)

Die Verbindung der Formel (XVII) kann als Methyl N-(2,6-dimethylphenyl)-N-(methoxyacetyl)-DL-alaninat (Metalaxyl, XVIIa) oder als Methyl N-(2,6-dimethylphenyl)-N-(methoxyacetyl)-D-alaninat (Metalaxyl-M, XVIIb) vorliegen.

Das Hydroxyethyl-triazol-Derivat der Formel (XXI) kann in der "Thiono"-Form der Formel

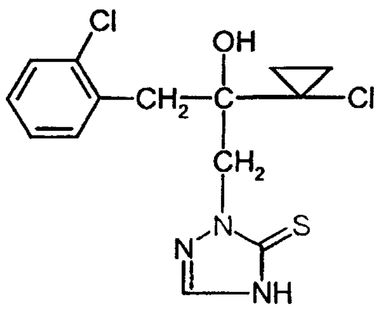

(XXI)

oder in der tautomeren "Mercapto"-Form der Formel

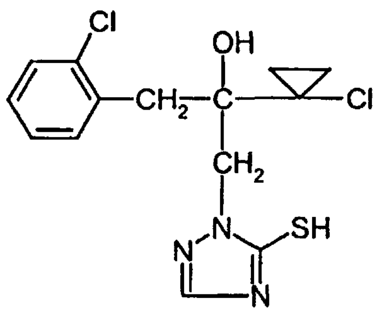

(XXIb)

vorliegen. Der Einfachheit halber wird jeweils nur die "Thiono"-Form aufgeführt.

Bei dem Guanidin-Derivat der Formel (XXV) handelt es sich um ein Substanzgemisch mit dem Commonname Guazatine.

Aus der Strukturformel für die Wirkstoffe der Formel (XXXXIX) ist ersichtlich, dass die Verbindungen als E- oder Z-Isomere vorliegen können. Das Produkt kann daher als Gemisch von verschiedenen Isomeren oder auch in Form eines einzigen Isomeren vorliegen. Bevorzugt sind Verbindungen der Formel (XXXXIX), in denen die Verbindungen der Formel (XXXXIX) als E-Isomer vorliegen. Besonders bevorzugt sind die Verbindungen der Formeln

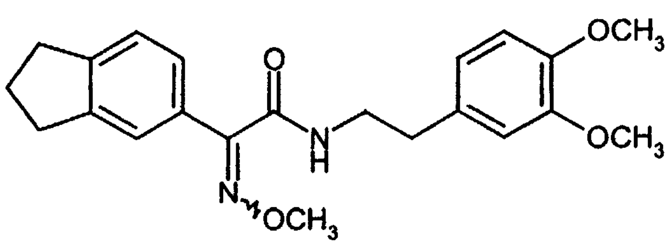

(XXXXIXa) ,

und

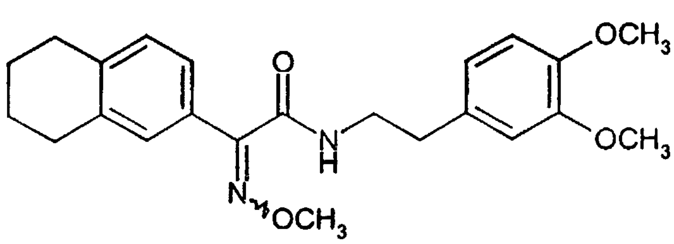

(XXXXIXb)

und

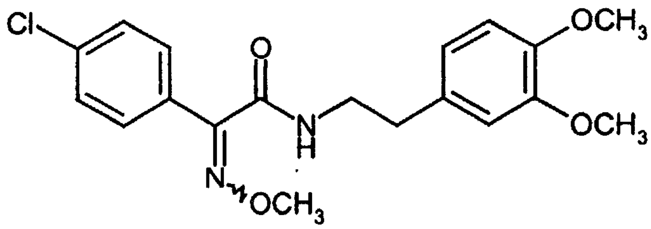 (XXXXIXc)

und

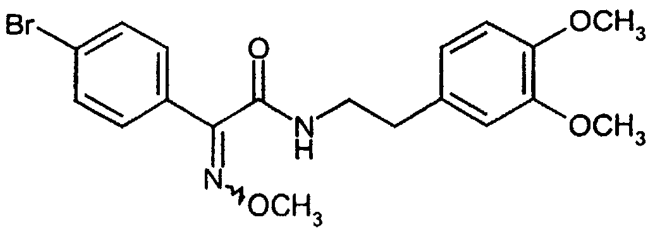 (XXXXIXd)

und

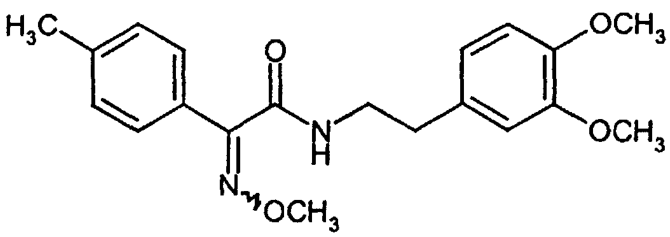 (XXXXIXe)

und

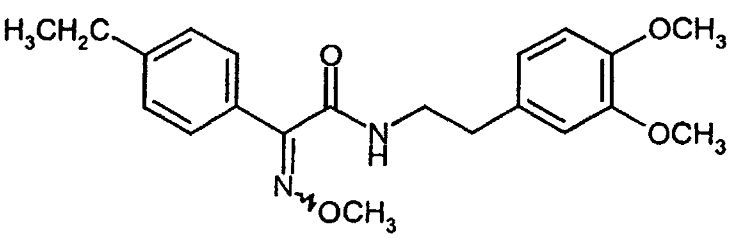 (XXXXIXf)

und deren Isomere.

Als Mischungspartner der Verbindungen der Formel (I) sind die folgenden Wirkstoffe besonders bevorzugt:

(3) Tolylfluanid (IVb),
(5) Propineb (VI),

(6) Mancozeb (VIIc),
(7) Fenhexamid (VIII),
(8) Iprovalicarb (VIII),
(11) Azoxystrobin (XII),
(12) Trifloxystrobin (XIII),
(13) Verbindung der Formel (XIV),
(18) Folpet (XIX),
(20) Verbindung der Formel (XXI),
(26) Verbindung der Formel (XXVII),
(27) Verbindung der Formel (XXVIII),
(28) Chlorothalonil (XXIX),
(30) Fluazinam (XXXI), und
(45) Kupferverbindungen

a)

Kupferoxychlorid (XXXXVIa)

b)

Kupferhydroxid (XXXXVIb).

Die in den erfindungsgemäßen Wirkstoffkombinationen neben einem Halogen-benzimidazol der Formel (XXVII) vorhandenen Komponenten sind ebenfalls bekannt.

Im einzelnen werden die Wirkstoffe in den folgenden Publikationen beschrieben:

(1) Verbindungen der Formel (II)
DE-A 22 01 063
DE-A 23 24 010

(2) Verbindung der Formel (III)
EP-A 0 040 345

(3) Verbindungen der Formel (IV)
Pesticide Manual, 9th. Ed. (1991), Seiten 249 und 827

(4) Verbindung der Formel (V) und deren einzelne Derivate
EP-A 0 341 475

(5) Verbindung der Formel (VI)
Pesticide Manual, 9th. Ed. (1991), Seite 726

(6) Verbindungen der Formel (VII)
Pesticide Manual, 9th. Ed. (1991), Seiten 529, 531 und 866

(7) Verbindung der Formel (VIII)
EP-A 0 339 418

(8) Verbindung der Formel (IX)
EP-A 0 472 996

(9) Verbindung der Formel (X)
EP-A 0 313 512

(10) Verbindung der Formel (XI)
EP-A 0 281 842

(11) Verbindung der Formel (XII)
EP-A 0 382 375

(12) Verbindung der Formel (XIII)
EP-A-460 575

(13) Verbindung der Formel (XIV)
DE-A 196 02 095

(14) Verbindung der Formel (XV)
Pesticide Manual, 9th. Ed. (1991), Seite 206

(15) Verbindungen der Formel (XVI)
EP-A 0 270 111
EP-A 0 310 550

(16) Verbindung der Formel (XVII)
Pesticide Manual, 9th. Ed. (1991), Seite 554

(17) Verbindung der Formel (XVIII)
EP-A 0 219 756

(18) Verbindung der Formel (XIX)
Pesticide Manual, 9th. Ed. (1991), Seite 431

(19) Verbindung der Formel (XX)
Pesticide Manual, 9th. Ed. (1991), Seite 443

(20) Verbindung der Formel (XXI)
WO 96-16048

(21) Verbindung der Formel (XXII)
Pesticide Manual, 9th. Ed. (1991), Seite 491

(22) Verbindung der Formel (XXIII)
EP-A 0 393 911

(23) Verbindung der Formel (XXIV)
EP-A 0 600 629

(24) Substanz der Formel (XXV)
Pesticide Manual, 9th. Ed. (1991), Seite 461

(25) Verbindung der Formel (XXVI)
Pesticide Manual, 9th. Ed. (1991), Seite 654

(26) Verbindung der Formel (XXVII)
WO 97-06171

(27) Verbindung der Formel (XXVIII)
DE-A1-196 46 407, EP-B-0 712 396

(28) Verbindung der Formel (XXIX)
US 3 290 353

(29) Verbindung der Formel (XXX)
DE-A-156 7169

(30) Verbindung der Formel (XXXI)
EP-A-0 031 257

(31) Verbindung der Formel (XXXII)
EP-A-0 639 547

(32) Verbindung der Formel (XXXIII)
EP-A-0 298 196

(33) Verbindung der Formel (XXXIV)
EP-A-600 629

(34) Verbindung der Formel (XXXV)
DE-A-2 149 923

(35) Verbindung der Formel (XXXVI)
DE-A-2 012 656

(36) Verbindung der Formel (XXXVII)
US 1 972 961

(37) Verbindung der Formel (XXXVIII)
EP-A-326 330

(38) Verbindung der Formel (XXXIX)
EP-A 278 595

(39) Verbindung der Formel (XXXX)
DE-A-3 030 026

(40) Verbindung der Formel (XXXXI)
DE-A-2 903 612

(41) Verbindung der Formel (XXXXII)
US-2 553 770

(42) Verbindung der Formel (XXXXIII)
bekannt und käuflich erwerbbar

(43) Verbindung der Formel (XXXXIV)
EP-A-206 999

(44) Verbindung der Formel (XXXXV)
EP-A-78 663

(45)

a) Verbindung der Formel (XXXXVIa)
bekannt und käuflich erwerbbar
b) Verbindung der Formel (XXXXVIb)
bekannt und käuflich erwerbbar

(46) Verbindung der Formel (XXXXVII)
DE-A-2 429 523

(47)

a) Verbindung der Formel (XXXXVIIIa) EP-A-112 284

b) Verbindung der Formel (XXXXVIIIb)
DE-A-3 042 303

c) Verbindung der Formel (XXXXVIIIc)
DE-A-3 406 993

d) Verbindung der Formel (XXXXVIIId)
EP-A-68 813

e) Verbindung der Formel (XXXXVIIIe)
DE-A-2551560

f) Verbindung der Formel (XXXXVIIIf) EP-A-145 294

g) Verbindung der Formel (XXXXVIIIg) DE-A-3 721 786

h) Verbindung der Formel (XXXXVIIIh)
EP-A-234 242

(48) Verbindung der Formel (XXXXIX)
WO 96/23763

(49) Verbindung der Formel (XXXXX)
EP-A-596 254

(50) Verbindung der Formel (XXXXXI)
WO 98/23155

(51) Verbindung der Formel (XXXXXII)
EP-A-569 384 .

Die erfindungsgemäßen Wirkstoffkombinationen enthalten neben einem Wirkstoff der Formel (I) mindestens einen Wirkstoff von den Verbindungen der Gruppen (1) bis (51). Sie können darüberhinaus auch weitere fungizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I)

0,1 bis 50 Gewichtsteile, vorzugsweise 0,2 bis 20 Gewichtsteile an Wirkstoff aus der Gruppe (1),

0,1 bis 50 Gewichtsteile, vorzugsweise 0,2 bis 20 Gewichtsteile an Wirkstoff aus der Gruppe (2),

1 bis 150 Gewichtsteile, vorzugsweise 1 bis 100 Gewichtsteile an Wirkstoff aus der Gruppe (3),

0,1 bis 10 Gewichtsteile, vorzugsweise 0,2 bis 5 Gewichtsteile an Wirkstoff aus der Gruppe (4),

1 bis 150 Gewichtsteile, vorzugweise 5 bis 100 Gewichtsteile an Wirkstoff aus der Gruppe (5),

1 bis 150 Gewichtsteile, vorzugsweise 5 bis 100 Gewichtsteile an Wirkstoff aus der Gruppe (6),

0,1 bis 50 Gewichtsteile, vorzugsweise 1 bis 20 Gewichtsteile an Wirkstoff aus der Gruppe (7),

0,1 bis 50 Gewichtsteile, vorzugsweise 0,2 bis 20 Gewichtsteile an Wirkstoff aus der Gruppe (8),

0,02 bis 50 Gewichtsteile, vorzugsweise 0,1 bis 10 Gewichtsteile an Wirkstoff aus der Gruppe (9),

0,1 bis 50 Gewichtsteile, vorzugsweise 0,2 bis 20 Gewichtsteile an Wirkstoff aus der Gruppe (10),

0,1 bis 50 Gewichtsteile, vorzugsweise 0,2 bis 20 Gewichtsteile an Wirkstoff aus der Gruppe (11),

0,1 bis 50 Gewichtsteile, vorzugsweise 0,2 bis 20 Gewichtsteile an Wirkstoff aus der Gruppe (12).

0,1 bis 50 Gewichtsteile, vorzugweise 0,2 bis 20 Gewichtsteile an Wirkstoff aus der Gruppe (13),

0,1 bis 50 Gewichtsteile, vorzugsweise 0,2 bis 20 Gewichtsteile an Wirkstoff aus der Gruppe (14),

0,2 bis 50 Gewichtsteile, vorzugsweise 1 bis 20 Gewichtsteile an Wirkstoff aus der Gruppe (15),

0,1 bis 50 Gewichtsteile, vorzugsweise 0,2 bis 20 Gewichtsteile an Wirkstoff aus der Gruppe (16),

0,1 bis 50 Gewichtsteile, vorzugsweise 0,2 bis 20 Gewichtsteile an Wirkstoff aus der Gruppe (17),

1 bis 150 Gewichtsteile, vorzugweise 5 bis 100 Gewichtsteile an Wirkstoff aus der Gruppe (18),

0,1 bis 150 Gewichtsteile, vorzugsweise 1 bis 100 Gewichtsteile an Wirkstoff aus der Gruppe (19),

0,02 bis 50 Gewichtsteile, vorzugsweise 0,2 bis 10 Gewichtsteile an Wirkstoff aus der Gruppe (20),

0,05 bis 20 Gewichtsteile, vorzugsweise 0,1 bis 10 Gewichtsteile an Wirkstoff aus der Gruppe (21),

0,1 bis 50 Gewichtsteile, vorzugsweise 0,2 bis 20 Gewichtsteile an Wirkstoff aus der Gruppe (22),

0,1 bis 50 Gewichtsteile, vorzugweise 0,2 bis 20 Gewichtsteile an Wirkstoff aus der Gruppe (23),

0,01 bis 150 Gewichtsteile, vorzugsweise 1 bis 100 Gewichtsteile an Wirkstoff aus der Gruppe (24),

0,1 bis 50 Gewichtsteile, vorzugsweise 0,2 bis 20 Gewichtsteile an Wirkstoff aus der Gruppe (25),

0,1 bis 50 Gewichtsteile, vorzugsweise 0,2 bis 20 Gewichtsteile an Wirkstoff aus der Gruppe (26),

0,1 bis 50 Gewichtsteile, vorzugsweise 0,2 bis 20 Gewichtsteile an Wirkstoff aus der Gruppe (27),

1 bis 150 Gewichtsteile, vorzugsweise 5 bis 100 Gewichtsteile an Wirkstoff aus der Gruppe (28),

1 bis 150 Gewichtsteile, vorzugsweise 5 bis 100 Gewichtsteile an Wirkstoff aus der Gruppe (29),

0,1 bis 50 Gewichtsteile, vorzugsweise 0,2 bis 20 Gewichtsteile an Wirkstoff aus der Gruppe (30),

0,1 bis 50 Gewichtsteile, vorzugsweise 0,2 bis 20 Gewichtsteile an Wirkstoff aus der Gruppe (31),

0,1 bis 50 Gewichtsteile, vorzugsweise 0,2 bis 20 Gewichtsteile an Wirkstoff aus der Gruppe (32),

0,1 bis 50 Gewichtsteile, vorzugsweise 0,2 bis 20 Gewichtsteile an Wirkstoffaus der Gruppe (33),

0,1 bis 50 Gewichtsteile, vorzugweise 1 bis 20 Gewichtsteile an Wirkstoff aus der Gruppe (34),

0,1 bis 50 Gewichtsteile, vorzugsweise 1 bis 10 Gewichtsteile an Wirkstoff aus der Gruppe (35),

1 bis 150 Gewichtsteile, vorzugsweise 5 bis 100 Gewichtsteile an Wirkstoff aus der Gruppe (36),

0,1 bis 50 Gewichtsteile, vorzugsweise 0,2 bis 20 Gewichtsteile an Wirkstoff aus der Gruppe (37).

0,1 bis 50 Gewichtsteile, vorzugsweise 0,2 bis 20 Gewichtsteile an Wirkstoff aus der Gruppe (38),

0,1 bis 50 Gewichtsteile, vorzugsweise 0,2 bis 20 Gewichtsteile an Wirkstoff aus der Gruppe (39),

0,1 bis 50 Gewichtsteile, vorzugsweise 0,2 bis 20 Gewichtsteile an Wirkstoff aus der Gruppe (40),

1 bis 150 Gewichtsteile, vorzugsweise 5 bis 100 Gewichtsteile an Wirkstoff aus der Gruppe (41),

1 bis 150 Gewichtsteile, vorzugsweise 5 bis 100 Gewichtsteile an Wirkstoff aus der Gruppe (42),

0,1 bis 50 Gewichtsteile, vorzugsweise 1 bis 20 Gewichtsteile an Wirkstoff aus der Gruppe (43),

0,1 bis 50 Gewichtsteile, vorzugweise 1 bis 20 Gewichtsteile an Wirkstoff aus der Gruppe (44),

1 bis 150 Gewichtsteile, vorzugsweise 5 bis 100 Gewichtsteile an Wirkstoff aus der Gruppe (45a),

1 bis 150 Gewichtsteile, vorzugsweise 5 bis 100 Gewichtsteile an Wirkstoff aus der Gruppe (45b),

0,1 bis 50 Gewichtsteile, vorzugsweise 0,2 bis 20 Gewichtsteile an Wirkstoff aus der Gruppe (46),

0,1 bis 50 Gewichtsteile, vorzugsweise 0,2 bis 20 Gewichtsteile an Wirkstoff aus der Gruppe (47a),

0,1 bis 50 Gewichtsteile, vorzugsweise 0,2 bis 20 Gewichtsteile an Wirkstoff aus der Gruppe (47b),

0,1 bis 50 Gewichtsteile, vorzugsweise 0,2 bis 20 Gewichtsteile an Wirkstoff aus der Gruppe (47c),

0,1 bis 50 Gewichtsteile, vorzugsweise 0,2 bis 20 Gewichtsteile an Wirkstoff aus der Gruppe (47d),

0,1 bis 50 Gewichtsteile, vorzugsweise 0,2 bis 20 Gewichtsteile an Wirkstoff aus der Gruppe (47e),

0,1 bis 50 Gewichtsteile, vorzugsweise 0,2 bis 20 Gewichtsteile an Wirkstoff aus der Gruppe (47f),

0,1 bis 50 Gewichtsteile, vorzugweise 0,2 bis 20 Gewichtsteile an Wirkstoff aus der Gruppe (47g),

0,1 bis 50 Gewichtsteile, vorzugsweise 0,2 bis 20 Gewichtsteile an Wirkstoff aus der Gruppe (47h),

0,1 bis 50 Gewichtsteile, vorzugweise 0,2 bis 20 Gewichtsteile an Wirkstoff aus der Gruppe (48),

0,1 bis 50 Gewichtsteile, vorzugsweise 0,2 bis 20 Gewichtsteile an Wirkstoff aus der Gruppe (49),

0,1 bis 50 Gewichtsteile, vorzugsweise 0,2 bis 20 Gewichtsteile an Wirkstoff aus der Gruppe (50),

0,1 bis 50 Gewichtsteile, vorzugsweise 0,2 bis 20 Gewichtsteile an Wirkstoff aus der Gruppe (51).

Die erfindungsgemäßen Wirkstoffkombinationen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung Phytophthora infestans und Plasmopara viticola.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens. Die erfindungsgemäßen Wirkstoffkombinationen können zur Blattapplikation oder auch als Beizmittel eingesetzt werden.

Die erfindungsgemäßen Wirkstoffkombinationen eignen sich auch zur Steigerung des Ernteertrages. Sie sind außerdem mindertoxisch und weisen eine gute Pflanzenverträglichkeit auf.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z. B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Die erfindungsgemäßen Wirkstoffkombinationen können in die üblichen Formulierungen überführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffe, vorzugsweise zwischen 0,5 und 90 %.

Die erfindungsgemäßen Wirkstoffkombinationen können als solche oder in ihren Formulierungen auch in Mischung mit bekannten Fungiziden, Bakteriziden, Akariziden, Nematiziden oder Insektiziden verwendet werden, um so z.B. das Wirkungsspektrum zu verbreitern oder Resistenzentwicklungen vorzubeugen. In vielen Fällen erhält man dabei synergistische Effekte, d.h. die Wirksamkeit der Mischung ist größer als die Wirksamkeit der Einzelkomponenten.

Auch eine Mischung mit anderen bekannten Wirkstoffen, wie Herbiziden oder mit Düngemitteln und Wachstumsregulatoren ist möglich.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden. Die Anwendung geschieht in üblicher Weise, z.B. durch Gießen, Verspritzen, Versprühen, Verstreuen, Verstreichen, Trockenbeizen, Feuchtbeizen, Nassbeizen, Schlämmbeizen oder Inkrustieren.

Beim Einsatz der erfindungsgemäßen Wirkstoffkombinationen können die Aufwandmengen je nach Applikationsart innerhalb eines größeren Bereichs variiert werden. Bei der Behandlung von Pflanzenteilen liegen die Aufwandmengen an Wirkstoffkombination im allgemeinen zwischen 0,1 und 10 000 g/ha, vorzugsweise zwischen 10 und 1 000 g/ha. Bei der Saatgutbehandlung liegen die Aufwandmengen an Wirkstoffkombination im allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoffkombination im allgemeinen zwischen 0,1 und 10 000 g/ha, vorzugsweise zwischen 1 und 5 000 g/ha.

Die gute fungizide Wirkung der erfindungsgemäßen Wirkstoffkombinationen geht aus den nachfolgenden

Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby ("Calculating Synergistic and Antagonistic Responses of Herbicide Combinations", Weeds 15 (1967), 20-22) wie folgt berechnet werden:
Wenn

X den Wirkungsgrad beim Einsatz des Wirkstoffes A in einer Aufwandmenge von m g/ha bedeutet,

Y den Wirkungsgrad beim Einsatz des Wirkstoffes B in einer Aufwandmenge von n g/ha bedeutet und

E den Wirkungsgrad beim Einsatz der Wirkstoffe A und B in Aufwandmengen von m und n g/ha bedeutet,

dann ist

$$E = X + Y - \frac{X \cdot Y}{100}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, dass kein Befall beobachtet wird.

Ist die tatsächliche fungizide Wirkung größer als berechnet, so ist die Kombination in ihrer Wirkung überadditiv, d.h. es liegt ein synergistischer Effekt vor. In diesem Fall muss der tatsächlich beobachtete Wirkungsgrad größer sein als der aus der oben angeführten Formel errechnete Wert für den erwarteten Wirkungsgrad (E).

Die Erfindung wird durch die folgenden Beispiele veranschaulicht. Die Erfindung ist jedoch nicht auf die Beispiele limitiert.

## Beispiel 1

Phytophthora-Test (Tomate) / protektiv

| | |
|---|---|
| Lösungsmittel | 47 Gewichtsteile Aceton |
| Emulgator | 3 Gewichtsteile Alkylarylpolyglykolether |

Zur Herstellung einer zweckmäßigen Wirkstoffzubereitung vermischt 1 Gewichtsteil Wirkstoff oder Wirkstoffkombination mit den angegebenen Mengen Lösungsmittel und Emulgator und verdünnt das Konzentrat mit Wasser auf die gewünschte Konzentration oder man verdünnt eine handelsübliche Formulierung von Wirkstoff oder Wirkstoffkombination mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wäßrigen Sporensuspension von Phytophthora infestans inokuliert. Die Pflanzen werden dann in einer Inkubationskabine bei ca. 20°C und 100 % relativer Luftfeuchtigkeit aufgestellt.

3 Tage nach der Inokulation erfolgt die Auswertung. Dabei bedeutet 0% ein Wirkungsgrad, der demjenigen der Kontrolle entspricht, während ein Wirkungsgrad von 100% bedeutet, dass kein Befall beobachtet wird.

Die gefundene Wirkung der erfindungsgemäßen Wirkstoffkombination ist größer als die berechnete, d. h. es liegt ein synergistischer Effekt vor. Die Kombination aus Verbindung der Formel (I) und dem Halogen-benzimidazol der Formel Nr. XXVII besitzt bei einem Mischungsverhältnis von 1:1 und einer Aufwandmenge von 0,1 g/ha einen tatsächlichen Wirkungsgrad von 73 %. Der nach der Colby-Formel berechnete Erwartungswert ist mit 63 % bedeutend geringer.

Wirkstoffe, Aufwandmengen und Versuchsergebnisse gehen aus den folgenden Tabellen hervor.

## Tabelle 1

### Phytophthora-Test (Tomate) / protektiv

| Wirkstoff<br><br>Bekannt: | Aufwandmenge an Wirkstoff in g/ha | Wirkungsgrad in % |
|---|---|---|
| Verbindung der Formel (XXVII)<br>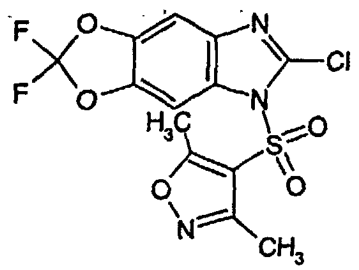 | 0,1 | 30 |
| Verbindung der Formel (I)<br>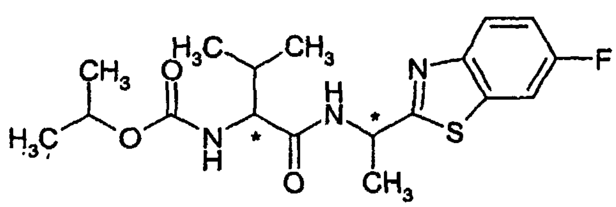 | 0,1 | 47 |

| **Erfindungsgemäße Mischung:** | | | | |
|---|---|---|---|---|
| Wirkstoff | Mischungsverhältnis | Aufwandmenge an Wirkstoff in g/ha | tatsächlicher Wirkungsgrad | Erwartungswert, berechnet mit Colby-Formel |
| XXVII + I | 1:1 | 0,1 + 0,1 | 73 | 63 |

**Tabelle 2**

**Phytophthora-Test (Tomate) / protektiv**

| Wirkstoff<br><br>Bekannt: | Aufwandmenge an Wirkstoff in g/ha | % Wirkungsgrad |
|---|---|---|
| Verbindung der Formel (I)<br>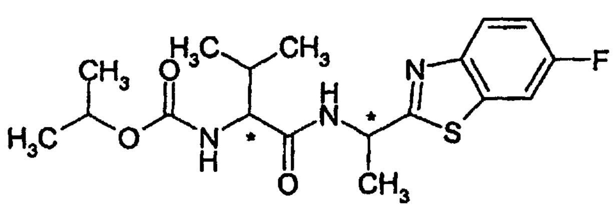 | 1 | 47 |
| Propineb (VI)<br>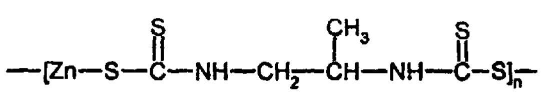 (VI)<br>n > = 1 (Propineb) | 20 | 19 |

| Erfindungsgemäße Mischung: | Mischungs-verhältnis | Aufwand-menge an Wirkstoff in g/ha | tatsächlicher Wirkungs-grad | Erwartungs-wert, berechnet mit Colby-Formel |
|---|---|---|---|---|
| (I) + Propineb (VI) | 1:20 | 1 + 20 | 94 | 57 |

## Tabelle 3

### Phytophthora-Test (Tomate) / protektiv

| Wirkstoff<br><br>Bekannt: | Aufwandmenge an Wirkstoff in g/ha | % Wirkungs-grad |
|---|---|---|
| Verbindung der Formel (I)<br>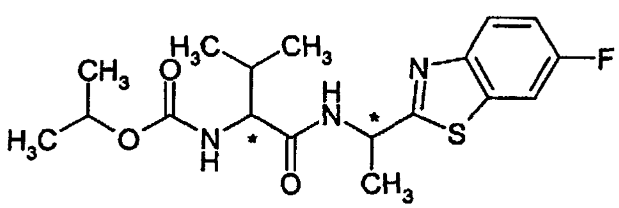 | 1 | 47 |
| Chlorothalonil (XXIX)<br>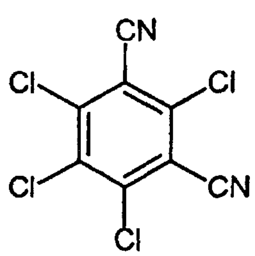 | 20 | 12 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Chlorothalonil (XXIX) | 1:20 | 1 + 20 | 84 | 53 |

## Tabelle 4

**Phytophthora-Test (Tomate) / protektiv**

| Wirkstoff<br><br>Bekannt: | Aufwandmenge an Wirkstoff in g/ha | % Wirkungsgrad |
|---|---|---|
| Verbindung der Formel (I)<br>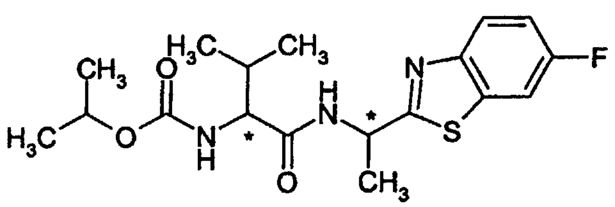 | 1 | 47 |
| Dichlofluanid (IVa)<br>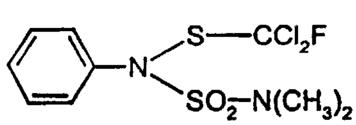 | 20 | 5 |

Erfindungsgemäße Mischung:

| | Mischungs-verhältnis | Aufwand-menge an Wirkstoff in g/ha | tatsächlicher Wirkungs-grad | Erwartungs-wert, berechnet mit Colby-Formel |
|---|---|---|---|---|
| (I) + Dichlofluanid (IVa) | 1:20 | 1 + 20 | 87 | 50 |

**Tabelle 5**

**Phytophthora-Test (Tomate) / protektiv**

| Wirkstoff<br><br>Bekannt: | Aufwandmenge an Wirkstoff in g/ha | % Wirkungs-grad |
|---|---|---|
| Verbindung der Formel (I)<br>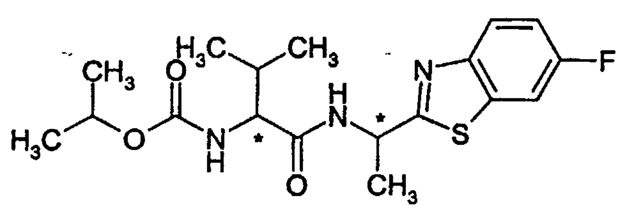 | 1 | 47 |
| Tolylfluanid (IVb)<br>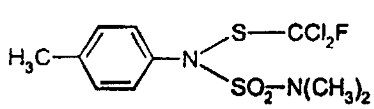 | 20 | 21 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Tolylfluanid (IVa) | 1:20 | 1 + 20 | 95 | 58 |

## Tabelle 6

### Phytophthora-Test (Tomate) / protektiv

| Wirkstoff<br><br>Bekannt: | Aufwandmenge an Wirkstoff in g/ha | % Wirkungsgrad |
|---|---|---|
| Verbindung der Formel (I)<br>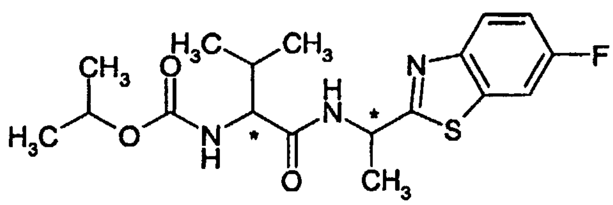 | 1 | 47 |
| Folpet (XIX)<br>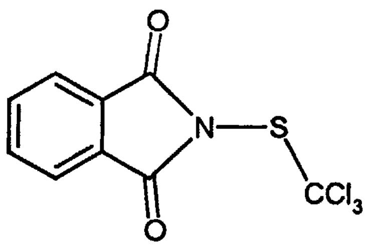 | 20 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Folpet (XIX) | 1:20 | 1 + 20 | 95 | 47 |

Tabelle 7

**Phytophthora-Test (Tomate) / protektiv**

| Wirkstoff<br><br>Bekannt: | Aufwandmenge an Wirkstoff in g/ha | % Wirkungsgrad |
|---|---|---|
| Verbindung der Formel (I)<br>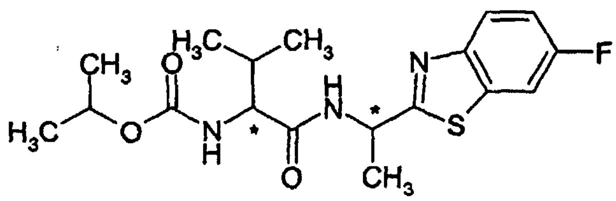 | 1 | 39 |
| Mancozeb (VIIc) | 20 | 28 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Mancozeb (VIIc) | 1:20 | 1 + 20 | 68 | 56 |

## Tabelle 8

### Phytophthora-Test (Tomate) / protektiv

| Wirkstoff<br><br>Bekannt: | Aufwandmenge an Wirkstoff in g/ha | % Wirkungsgrad |
|---|---|---|
| Verbindung der Formel (I)<br>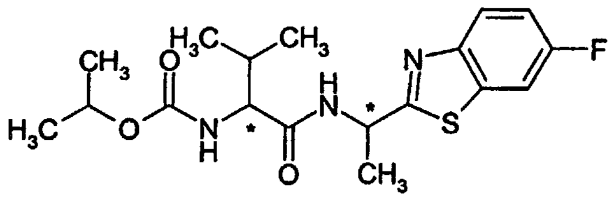 | 1 | 47 |
| Bitertanol (IIc) | 10 | 4 |

Erfindungsgemäße Mischung:

| | Mischungsverhältnis | Aufwandmenge an Wirkstoff in g/ha | tatsächlicher Wirkungsgrad | Erwartungs-wert, berechnet mit Colby-Formel |
|---|---|---|---|---|
| (I)<br>+<br>Bitertanol (IIc) | 1:10 | 1<br>+<br>10 | 73 | 49 |

## Tabelle 9

**Phytophthora-Test (Tomate) / protektiv**

| Wirkstoff<br><br>Bekannt: | Aufwandmenge an Wirkstoff in g/ha | % Wirkungsgrad |
|---|---|---|
| Verbindung der Formel (I)<br>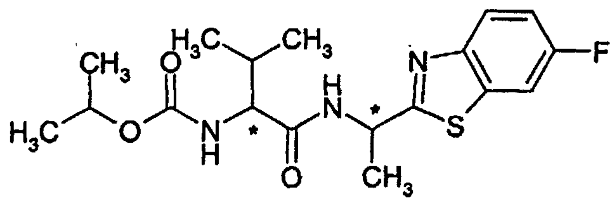 | 1 | 47 |
| Tebuconazole (III)<br>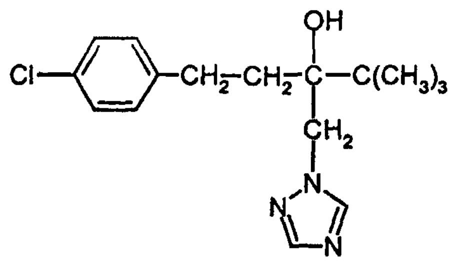 | 10 | 5 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Tebuconazole (III) | 1:10 | 1 + 10 | 73 | 50 |

## Tabelle 10

### Phytophthora-Test (Tomate) / protektiv

| Wirkstoff | Aufwandmenge an Wirkstoff in g/ha | % Wirkungsgrad |
|---|---|---|
| Bekannt: | | |
| Verbindung der Formel (I) 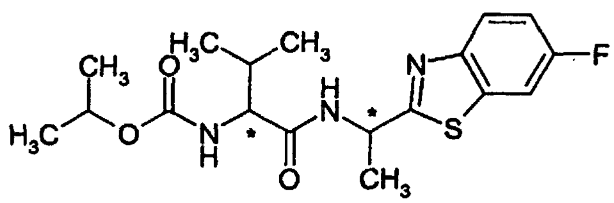 | 1 | 47 |
| Triadimenol (IIb) 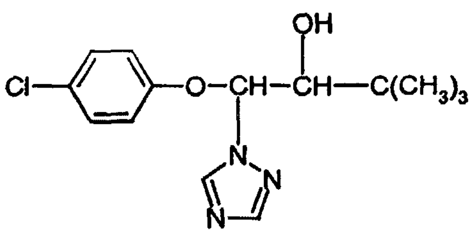 | 10 | 0 |

Erfindungsgemäße Mischung:

| | | Mischungsverhältnis | Aufwandmenge an Wirkstoff in g/ha | tatsächlicher Wirkungsgrad | Erwartungswert, berechnet mit Colby-Formel |
|---|---|---|---|---|---|
| (I) + Triadimenol (IIb) | } | 1:10 | 1 + 10 | 88 | 47 |

## Tabelle 11

**Phytophthora-Test (Tomate) / protektiv**

| Wirkstoff<br><br>Bekannt: | Aufwandmenge an Wirkstoff in g/ha | % Wirkungs-grad |
|---|---|---|
| Verbindung der Formel (I)<br>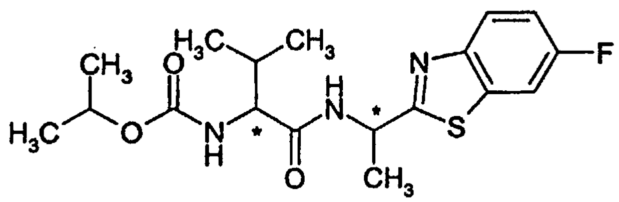 | 1 | 47 |
| Imidacloprid (XXII)<br>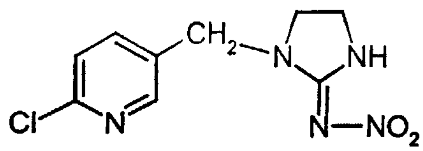 | 10 | 0 |

Erfindungsgemäße Mischung:

| | Mischungs-verhältnis | Aufwand-menge an Wirkstoff in g/ha | tatsächlicher Wirkungs-grad | Erwartungs-wert, berechnet mit Colby-Formel |
|---|---|---|---|---|
| (I) + Imidacloprid (XXII) | 1:10 | 1 + 10 | 71 | 47 |

**Tabelle 12**

**Phytophthora-Test (Tomate) / protektiv**

| Wirkstoff<br><br>Bekannt: | Aufwandmenge an Wirkstoff in g/ha | % Wirkungsgrad |
|---|---|---|
| Verbindung der Formel (I)<br>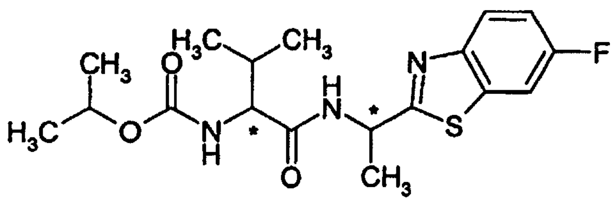 | 1 | 47 |
| Verbindung der Formel (XXI) (20)<br>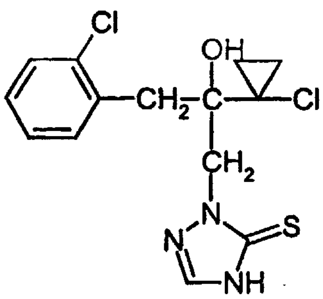 (XXI) | 10 | 2 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + (XXI) (20) | 1:10 | 1 + 10 | 62 | 48 |

## Tabelle 13

**Phytophthora-Test (Tomate) / protektiv**

| Wirkstoff<br><br>Bekannt: | Aufwandmenge an Wirkstoff in g/ha | % Wirkungsgrad |
|---|---|---|
| Verbindung der Formel (I)<br>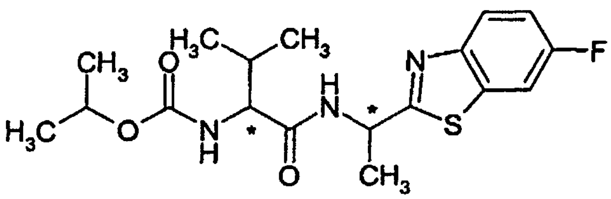 | 1 | 47 |
| Fenhexamid (VIII)<br>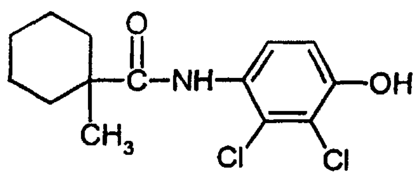 | 10 | 13 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Fenhexamid (VIII) | 1:10 | 1 + 10 | 70 | 54 |

## Tabelle 14

**Phytophthora-Test (Tomate) / protektiv**

| Wirkstoff<br><br>Bekannt: | Aufwandmenge an Wirkstoff in g/ha | % Wirkungsgrad |
|---|---|---|
| Verbindung der Formel (I)<br>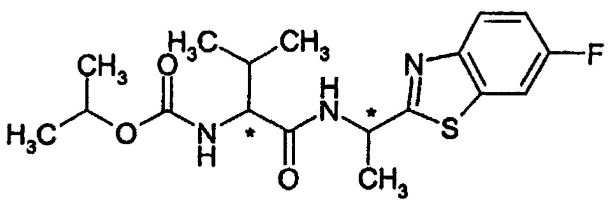 | 1 | 47 |
| Carpropamid (V)<br>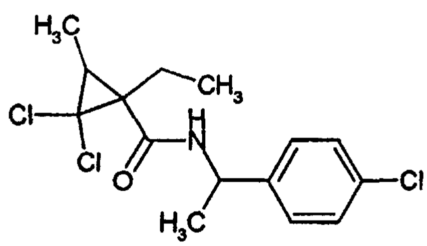 | 10 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Carpropamid (V) | 1:10 | 1 + 10 | 90 | 47 |

## Tabelle 15

### Phytophthora-Test (Tomate) / protektiv

| Wirkstoff<br><br>Bekannt: | Aufwandmenge an Wirkstoff in g/ha | % Wirkungsgrad |
|---|---|---|
| Verbindung der Formel (I)<br>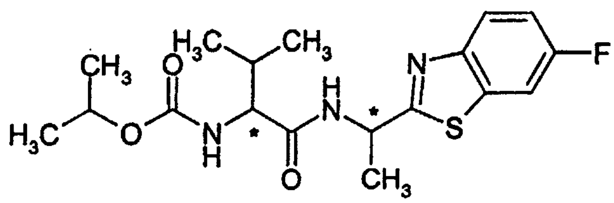 | 1 | 47 |
| Spiroxamine (XI)<br>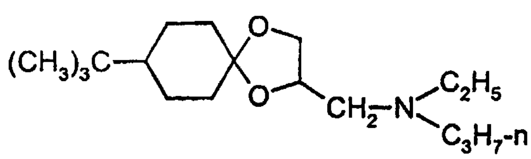 | 10 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Spiroxamine (XI) | 1:10 | 1 + 10 | 86 | 47 |

## Tabelle 16

### Phytophthora-Test (Tomate) / protektiv

| Wirkstoff<br><br>Bekannt: | Aufwandmenge an Wirkstoff in g/ha | % Wirkungsgrad |
|---|---|---|
| Verbindung der Formel (I)<br>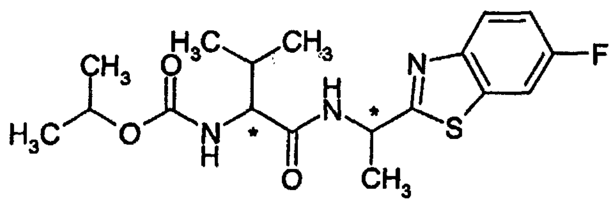 | 1 | 39 |
| Fluazinam (XXXI)<br>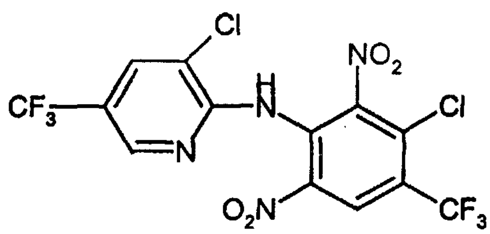 | 10 | 56 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Fluazinam (XXXI) | 1:10 | 1<br>+<br>10 | 87 | 73 |

## Tabelle 17

### Phytophthora-Test (Tomate) / protektiv

| Wirkstoff<br><br>Bekannt: | Aufwandmenge an Wirkstoff in g/ha | % Wirkungsgrad |
|---|---|---|
| Verbindung der Formel (I)<br>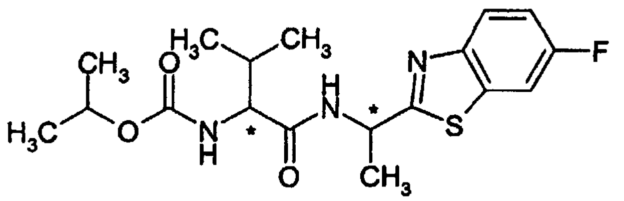 | 1 | 47 |
| Verbindung der Formel (XXVIII) (27)<br>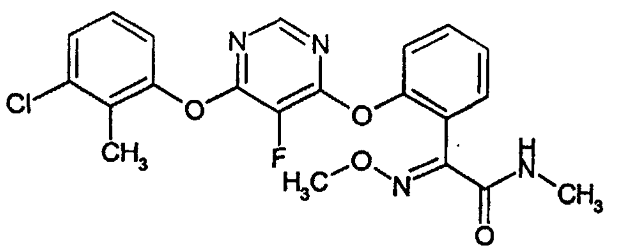 | 1 | 9 |

| Erfindungsgemäße Mischung: | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + (XXVIII) (27) | 1:1 | 1 + 1 | 72 | 52 |

## Tabelle 18

### Phytophthora-Test (Tomate) / protektiv

| Wirkstoff<br><br>Bekannt: | Aufwandmenge an Wirkstoff in g/ha | % Wirkungsgrad |
|---|---|---|
| Verbindung der Formel (I)<br>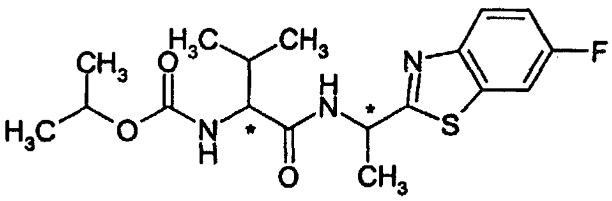 | 1 | 47 |
| Verbindung der Formel (XIV) (13)<br>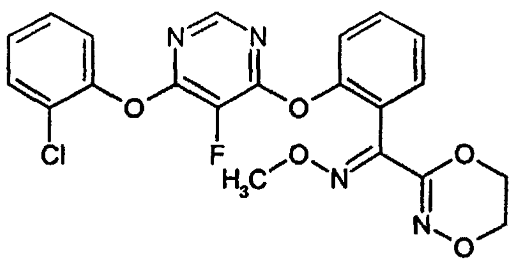 | 1 | 8 |

| Erfindungsgemäße Mischung: | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + (XIV) (13) | 1:1 | 1 + 1 | 62 | 51 |

## Tabelle 19

### Phytophthora-Test (Tomate) / protektiv

| Wirkstoff<br><br>Bekannt: | Aufwandmenge an Wirkstoff in g/ha | % Wirkungsgrad |
|---|---|---|
| Formel (I)<br>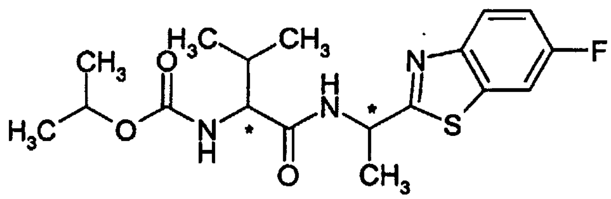 | 1 | 56 |
| Verbindung der Formel (XXXXVIa) (40)<br>Kupferoxychlorid | 50 | 0 |

| Erfindungsgemäße Mischung: | Mischungsverhältnis | Aufwandmenge an Wirkstoff in g/ha | tatsächlicher Wirkungsgrad | Erwartungswert, berechnet mit Colby-Formel |
|---|---|---|---|---|
| Formel (I)<br>+<br>Kupferoxychlorid (XXXXVIa) | **1:50** | 1<br>+<br>50 | **82** | **56** |

## Tabelle 20

### Phytophthora-Test (Tomate) / protektiv

| Wirkstoff<br>Bekannt: | Aufwandmenge an Wirkstoff in g/ha | % Wirkungsgrad |
|---|---|---|
| Formel (I)<br>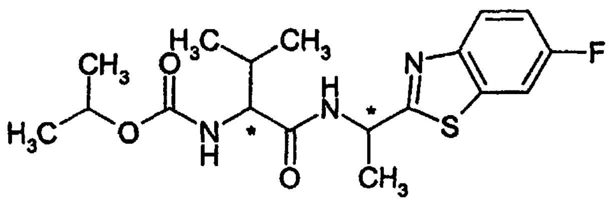 | 1 | 56 |
| Verbindung der Formel (XII) (11)<br>Azoxystrobin<br>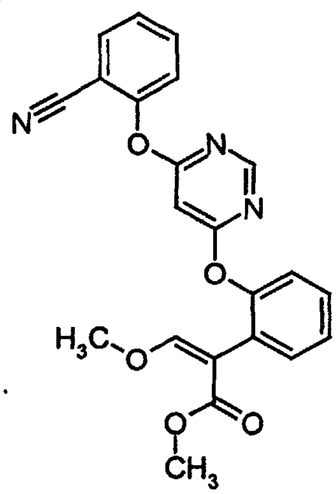 | 1 | 55 |

| Erfindungsgemäße Mischung: | Mischungsverhältnis | Aufwandmenge an Wirkstoff in g/ha | tatsäch-licher Wirkungs-grad | Erwartungswert, berechnet mit Colby-Formel |
|---|---|---|---|---|
| FORMEL (I) + Azoxystrobin (XII) | 1:1 | 1 + 1 | 95 | 80 |

**Tabelle 21**

**Phytophthora-Test (Tomate) / protektiv**

| Wirkstoff<br>Bekannt: | Aufwandmenge an Wirkstoff in g/ha | % Wirkungsgrad |
|---|---|---|
| Formel (I)<br>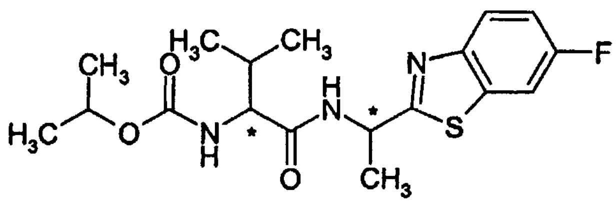 | 1 | 56 |
| Verbindung der Formel (XIII) (12)<br>Trifloxystrobin<br>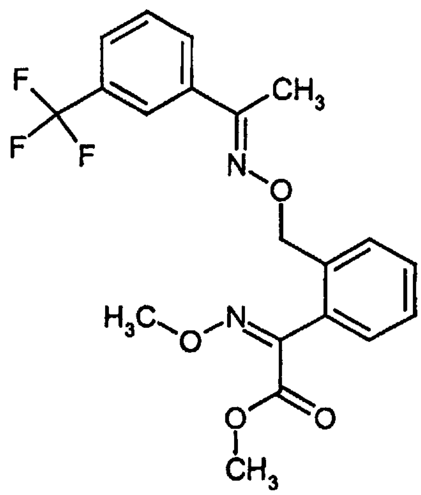 | 1 | 0 |

Erfindungsgemäße Mischung:

| | Mischungsverhältnis | Aufwandmenge an Wirkstoff in g/ha | tatsächlicher Wirkungsgrad | Erwartungs-wert, berechnet mit Colby-Formel |
|---|---|---|---|---|
| FORMEL (I) + Trifloxystrobin (XIII) | 1:1 | 1 + 1 | 68 | 56 |

## Patentansprüche

1. Wirkstoffkombinationen, enthaltend mindestens eine Verbindung der Formel

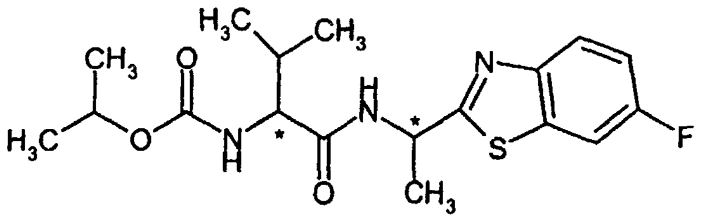 (I)

und

(1) ein Triazol-Derivat der Formel

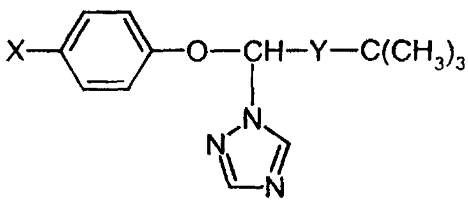 (II),

in welcher

X für Chlor oder Phenyl steht, und

Y für

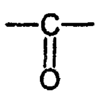

oder

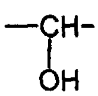

steht,

und/oder

(2) das Triazol-Derivat der Formel

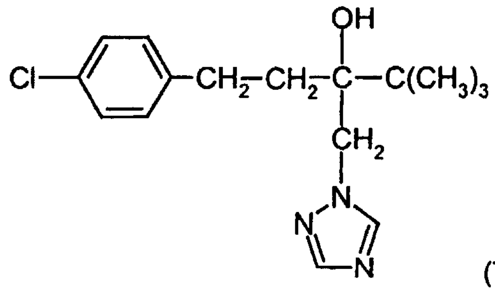

(III),

(Tebuconazole)

und/oder

(3) ein Anilin-Derivat der Formel

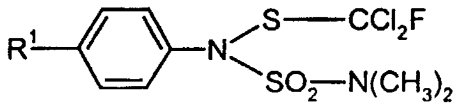

(IV),

in welcher

$R^1$ für Wasserstoff oder Methyl steht,

und/oder

(4) N-[1-(4-Chlor-phenyl)-ethyl]-2,2-dichlor-1-ethyl-3-methylcyclopropan-carbonsäureamid der Formel

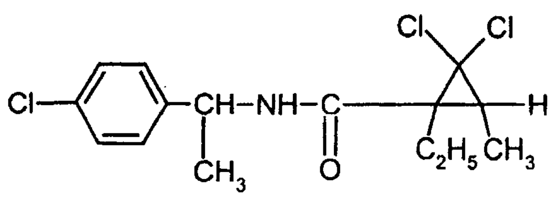

(V)

(Carpropamid)

und/oder

(5) das Zink-propylen-1,2-bis-(dithiocarbamidat) der Formel

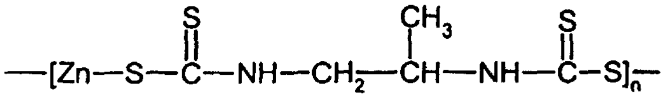

(VI)

n > = 1

(Propineb)

und/oder

(6) mindestens ein Thiocarbamat der Formel

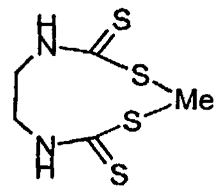

(VII),

Me = Zn oder Mn oder Gemisch aus Zn und Mn

und/oder

(7) das Anilin-Derivat der Formel

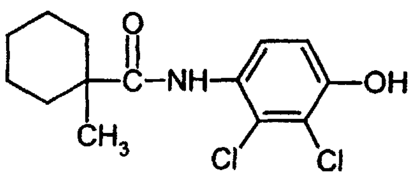

(VIII)

(Fenhexamid)

und/oder

(8) die Verbindung der Formel

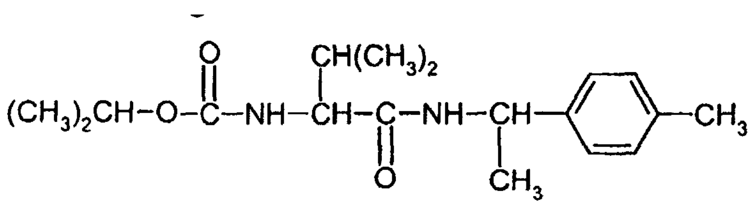

(IX)

(Iprovalicarb)

und/oder

(9) das Benzothiadiazol-Derivat der Formel

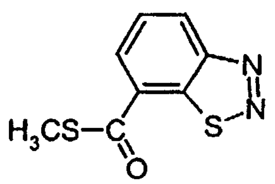

(X)

(Acibenzolar-S-methyl)

und/oder

(10) das 8-t-Butyl-2-(N-ethyl-N-n-propyl-amino)-methyl-1,4-dioxaspiro[5,4]-decan der Formel

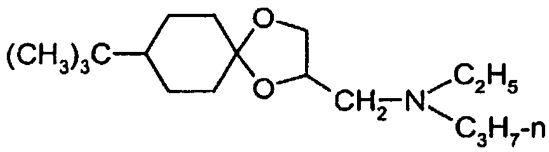

(XI)

(Spiroxamine)

und/oder

(11) die Verbindung der Formel

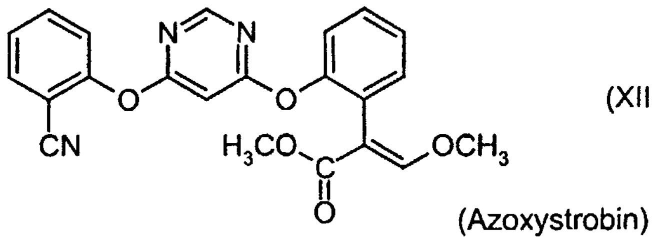

(XII)

(Azoxystrobin)

und/oder

(12) die Verbindung der Formel

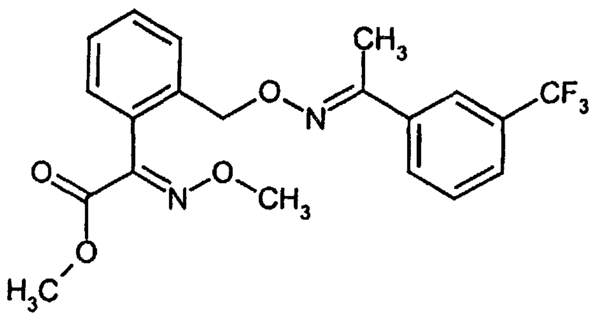

(XIII)

(Trifloxystrobin)

und/oder

(13) die Verbindung der Formel

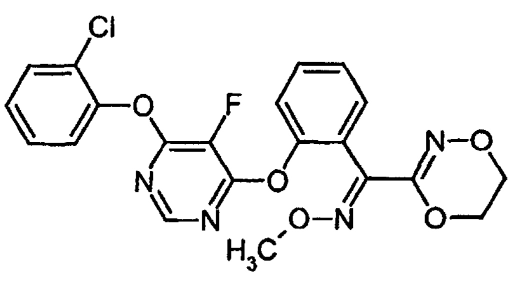

(XIV)

und/oder

(14) das Cyanoxim-Derivat der Formel

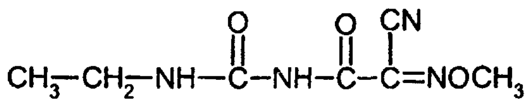

(XV)

(Cymoxanil)

und/oder

(15) ein Pyrimidin-Derivat der Formel

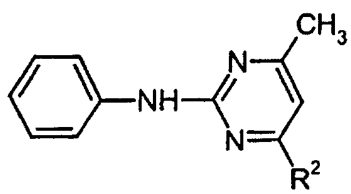

(XVI),

in welcher

$R^2$ für Methyl, $—C{\equiv}C—CH_3$ (Mepanipyrim) oder Cyclopropyl (Cyprodinyl) steht,

und/oder

(16) ein Anilin-Derivat der Formel

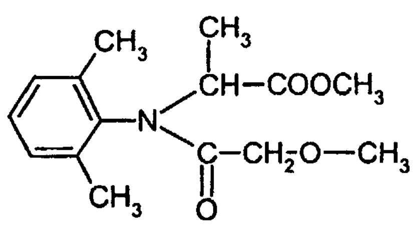

(XVII)

(Metalaxyl bzw. Metalaxyl M)

und/oder

(17) das Morpholin-Derivat der Formel

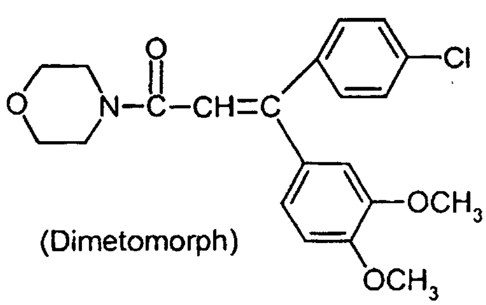

(XVIII)

(Dimetomorph)

und/oder

(18) das Phthalimid-Derivat der Formel

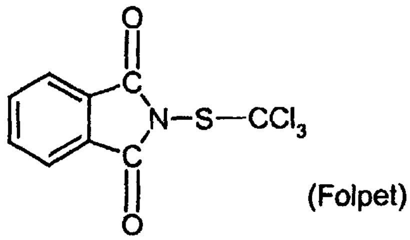

(XIX)

(Folpet)

und/oder

(19) die Phosphor-Verbindung der Formel

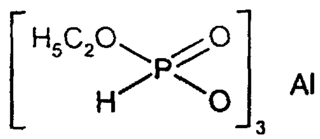

(XX)

(Fosetyl-Al)

und/oder

(20) das Hydroxyethyl-triazol-Derivat der Formel

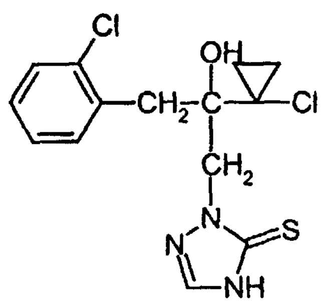

(XXI)

und/oder

(21) das 1-[(6-Chlor-3-pyridinyl)-methyl]-N-nitro-2-imidazolidinimin der Formel

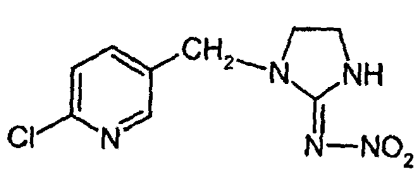

(XXII)

(Imidacloprid)

und/oder

(22) das Oxazolidindion der Formel

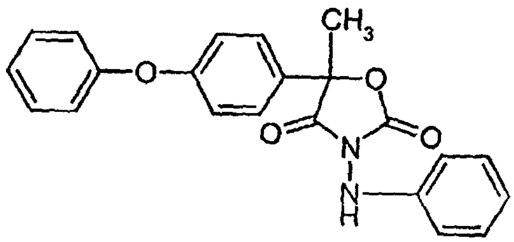

(XXIII)

(Famoxadone)

und/oder

(23) das Benzamid-Derivat der Formel

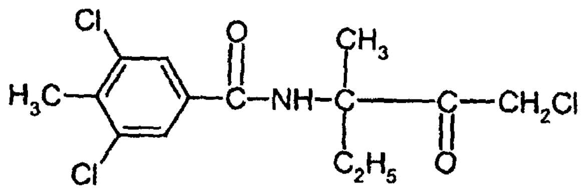

(XXIV)

(Zoxamide)

und/oder

(24) das Guanidin-Derivat der Formel

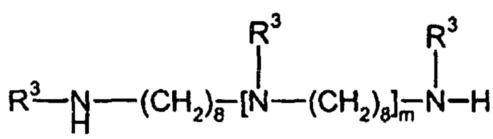

(XXV)

$x\ (2 + m)\ CH_3COOH$

in welcher

m für ganze Zahlen von 0 bis 5 steht und

$R^3$ für Wasserstoff (17 bis 23 %) oder den Rest der Formel

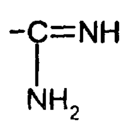

(77 bis 83 %)

steht,

und/oder

(25) das Triazol-Derivat der Formel

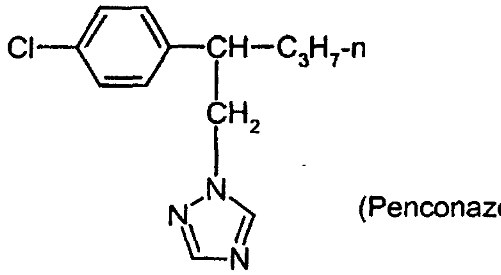

(XXVI)

(Penconazol)

und/oder

(26) das Halogen-benzimidazol der Formel

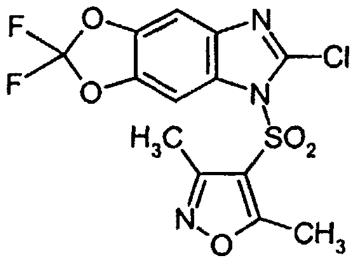

(XXVII)

und/oder

(27) das Halogenpyrimidin der Formel

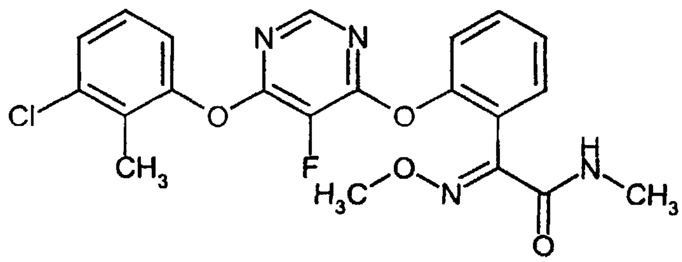

(XXVIII)

und/oder

(28) das Tetrachlor-isophthalo-dinitril der Formel

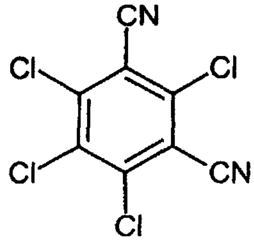

(XXIX)

(Chlorothalonil)

und/oder

(29) die Verbindung der Formel

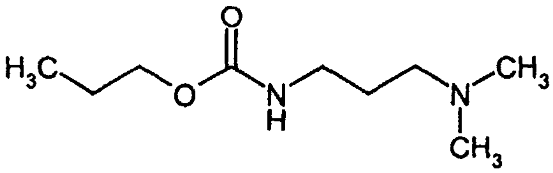

(XXX)

(Propamocarb)

und/oder

(30) das Pyridinamin der Formel

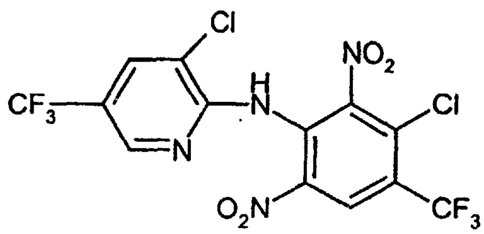

(XXXI)

(Fluazinam)

und/oder

(31) das Thiazolcarboxamid der Formel

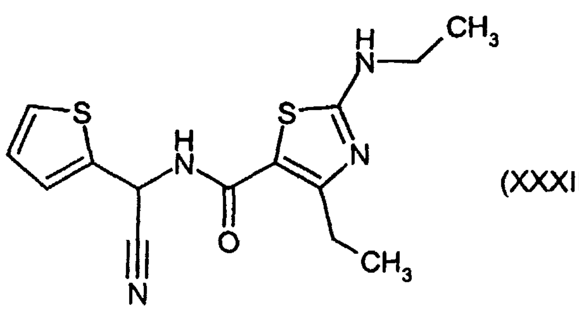

(XXXII)

(Ethaboxam)

und/oder

(32) das Sulfonamid der Formel

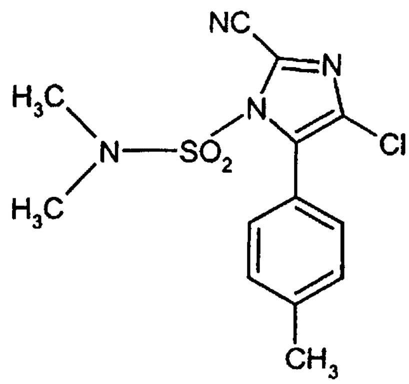

(XXXIII)

(Cyamidazosulfamid)

und/oder

(33) der Verbindung der Formel

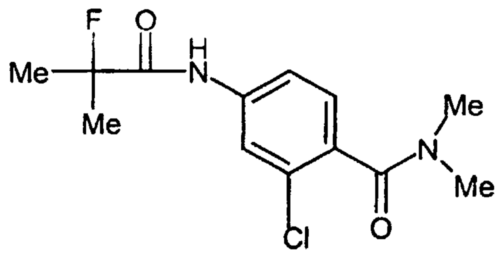

(XXXIV)

und/oder

(34) die Verbindung der Formel

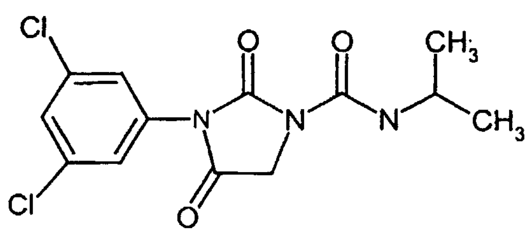

(XXXV)

(Iprodione)

und/oder

(35) die Verbindung der Formel

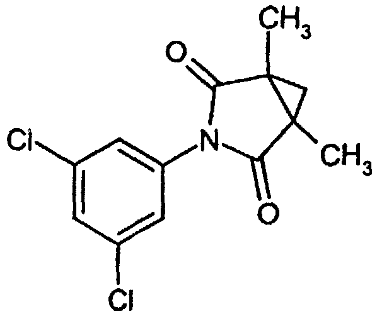

(XXXVI)

(Procymidone)

und/oder

(36) dem Diamid der Formel

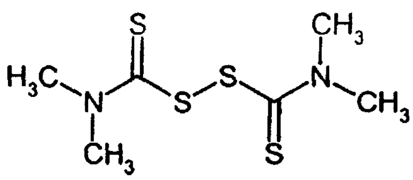

(XXXVII)

(Thiram)

und/oder

(37) das Methoxyacrylat-Derivat der Formel

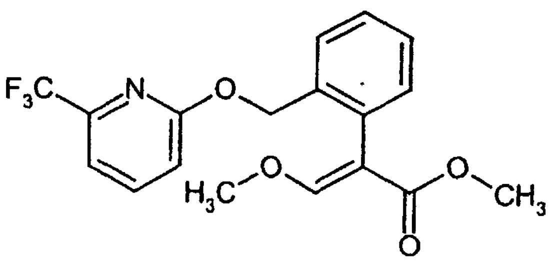

(XXXVIII)

(Picoxystrobin)

und/oder

(38) das Chinolin-Derivat der Formel

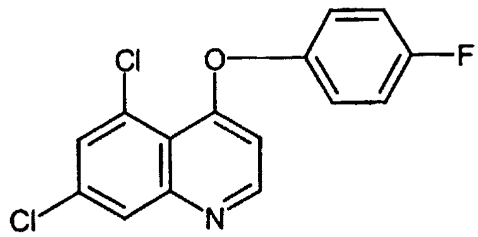

(XXXIX)

(Quinoxyfen)

und/oder

(39) das Phenylamid-Derivat der Formel

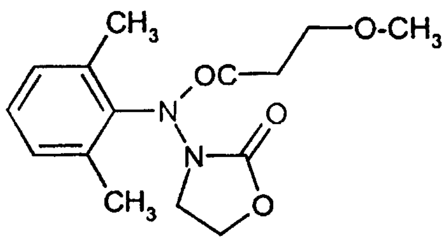

(XXXX)

(Oxadixyl)

und/oder

(40) das Phenylamid-Derivat der Formel

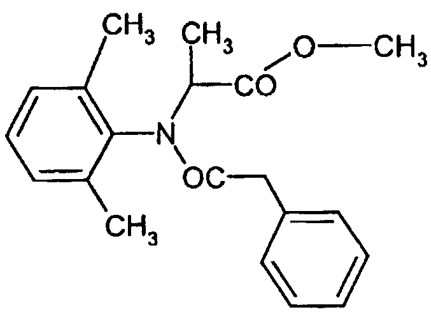

(XXXXI)

(Benalaxyl)

und/oder

(41) das Dicarboxim-Derivat der Formel

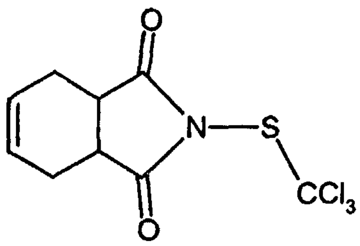

(XXXXIIa)

(Captan)

und/oder

(42) die Phosphonsäure der Formel

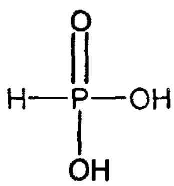

(XXXXIII)

(Phosphonsäure)

und/oder

(43) das Pyrrol-Derivat der Formel

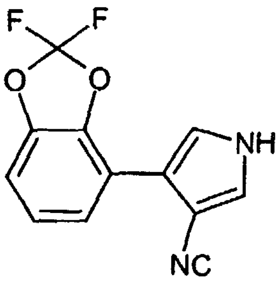

(XXXXIV)

(Fludioxonil)

und/oder

(44) das Phenylcarbonat der Formel

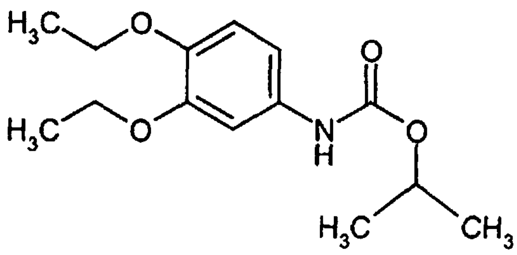

(XXXXV)

(Diethofencarb)

und/oder

(45) die Kupferverbindungen

a)

Kupferoxychlorid (XXXXVIa)

b)

Kupferhydroxid (XXXXVIb)

und/oder

(46) das Imidazol-Derivat der Formel

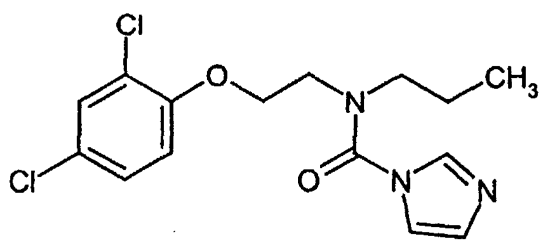

(XXXXVII)

(Prochloraz)

und/oder

(47) das Triazolderivat der Formel

a)

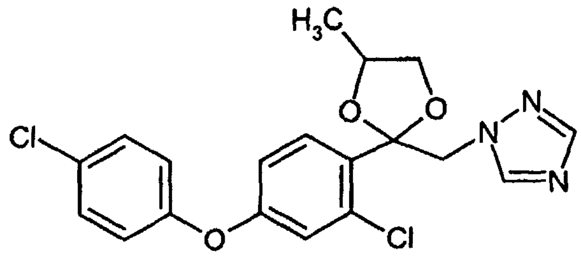

(XXXXVIIIa)

(Difenconazole)

und/oder

b)

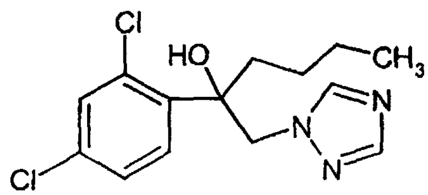

(XXXXVIIIb)

(Hexaconazole)

und/oder

c)

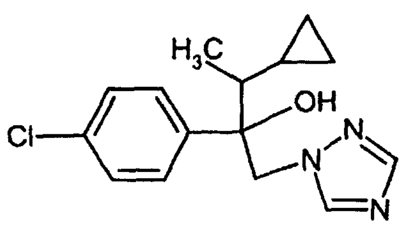

(XXXXVIIIe)

(Cyproconazole)

und/oder

d)

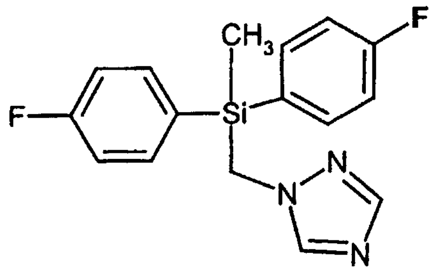

(XXXXVIIId)

(Flusilazole)

und/oder

e)

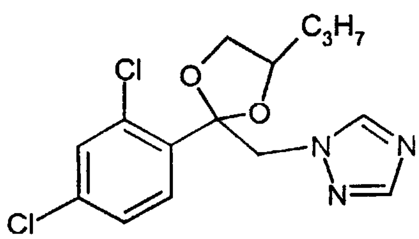

(XXXXVIIIe)

(Propiconazole)

und/oder

f)

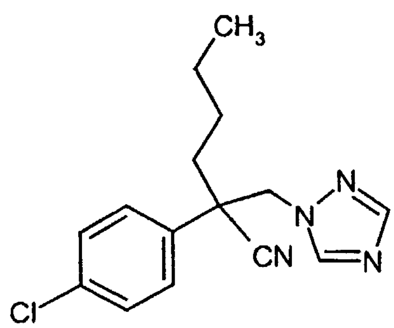

(XXXXVIIIf)

(Myclobutanil)

und/oder

g)

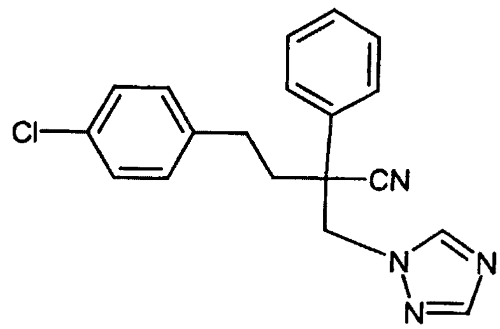

(XXXXVIIIg)

(Fenbuconazole)

und/oder

h)

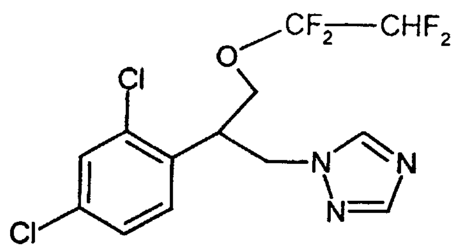

(XXXXVIIIh)

(Tetraconazole)

und/oder

(48) eine Verbindung der allgemeinen Formel

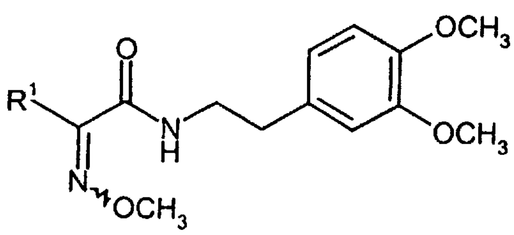

(XXXXIX)

in welcher

$R^1$ für unsubstituiertes oder durch Fluor, Chlor, Brom, Methyl oder Ethyl substituiertes Phenyl, 2-Naphthyl, 1,2,3,4-Tetrahydronaphthyl oder Indanyl steht,

und/oder

(49) N-Methyl-2-(methoxyimino)-2-[2-([1-(3-tri-fluoro-methylphenyl)ethoxy]iminomethyl)phenyl]acetamid der

Formel

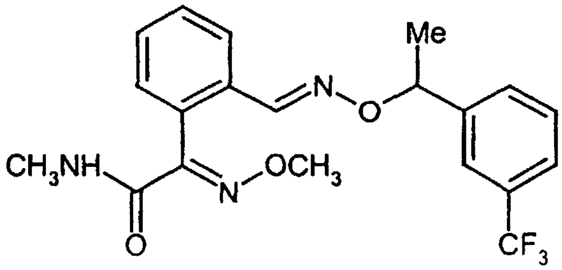

(XXXXX)

und/oder

(50) 2,4-Dihydro-5-methoxy-2-methyl-4-[2-([[( 1-(3-tri-fluoromethylphenyl)ethylidene]amino)oxy]methyl)phenyl]-3H-1,2,4-triazol-3-one der Formel

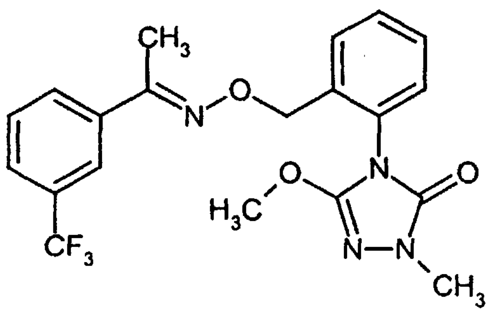

(XXXXXI)

und/oder

(51) die Verbindung der Formel

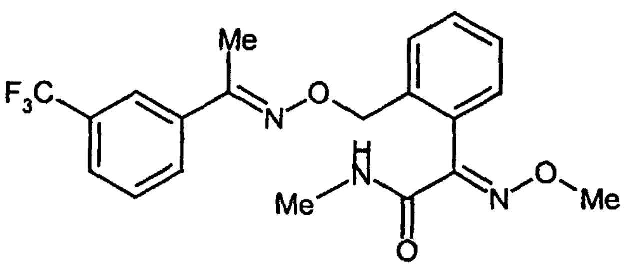

(XXXXXII)

**2.** Wirkstoffkombinationen, gemäß Anspruch 1, enthaltend mindestens eine Verbindung der Formel (I) wie in Anspruch 1 definiert und

(3) ein Anilin-Derivat der Formel

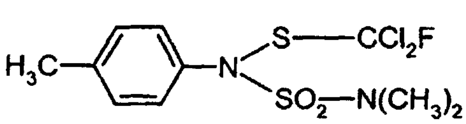

(IVb)

und/oder
(5) das Zink-propylen-1,2-bis-(dithiocarbamidat) der Formel

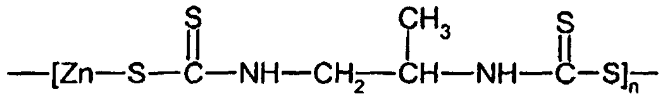

n > = 1 (Propineb) (VI)

und/oder
(6) mindestens ein Thiocarbamat der Formel

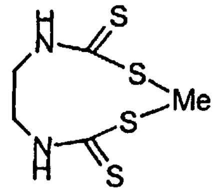

(VIIc)

Me = Gemisch aus Zn und Mn
und/oder
(7) das Anilin-Derivat der Formel

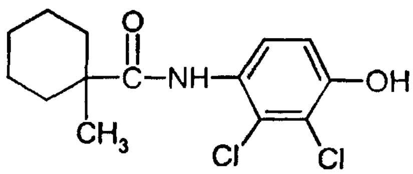

(VIII)

(Fenhexamid)

und/oder
(8) die Verbindung der Formel

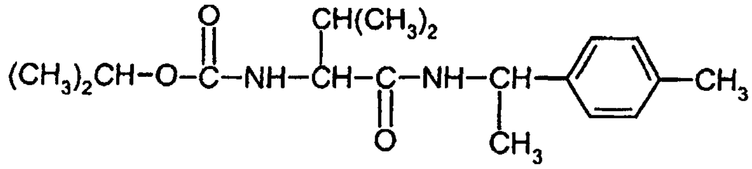

(IX)

(Iprovalicarb)

und/oder
(11) die Verbindung der Formel

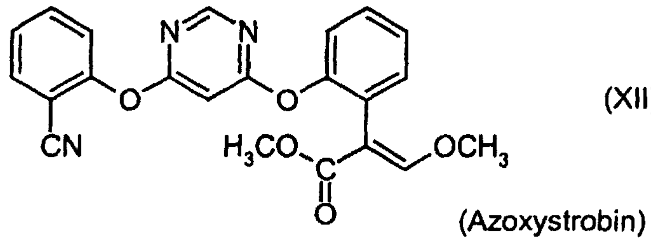

(XII)

(Azoxystrobin)

und/oder
(12) die Verbindung der Formel

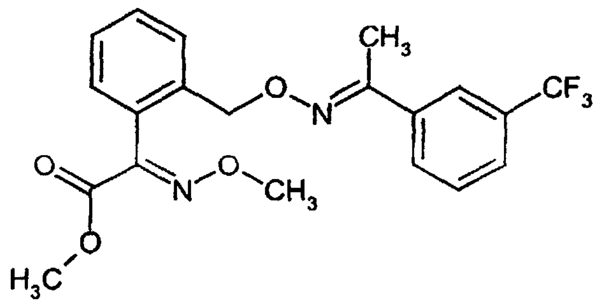

(XIII)

(Trifloxystrobin)

und/oder
(13) die Verbindung der Formel

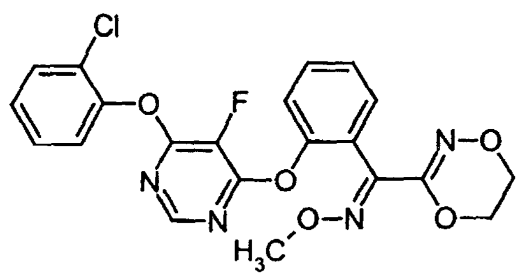

(XIV)

und/oder
(18) das Phthalimid-Derivat der Formel

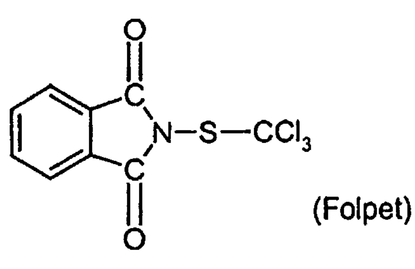

(XIX)

(Folpet)

und/oder
(20) das Hydroxyethyl-triazol-Derivat der Formel

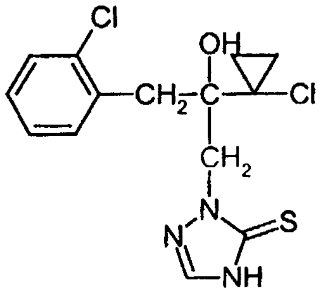

(XXI)

und/oder

(26) das Halogen-benzimidazol der Formel

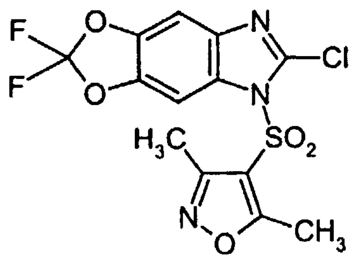

(XXVII)

und/oder

(27) das Halogenpyrimidin der Formel

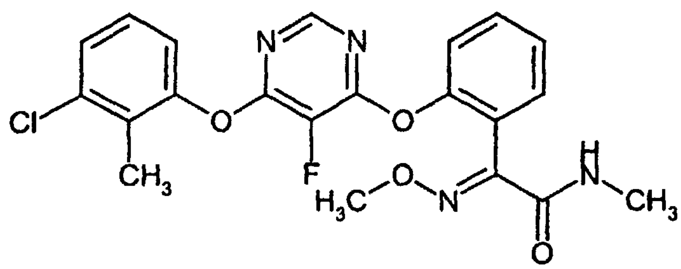

(XXVIII)

und/oder

(28) das Tetrachlor-isophthalo-dinitril der Formel

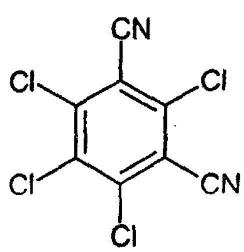

(XXIX)

(Chlorothalonil)

und/oder

(30) das Pyridinamin der Formel

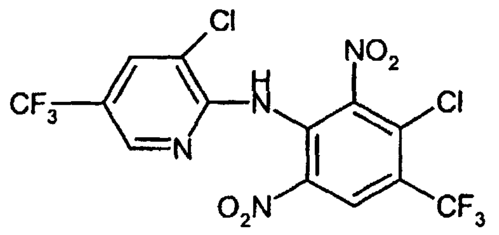

(XXXI)

(Fluazinam)

und/oder

(45) die Kupferverbindungen

a)

Kupferoxychlorid (XXXXVIa)

b)

Kupferhydroxid (XXXXVIb).

**3.** Mittel gemäß Anspruch 1, **dadurch gekennzeichnet, dass** in den Wirkstoffkombinationen das Gewichtsverhältnis von Wirkstoff der Formel (I) zu

- Wirkstoff der Gruppe (1) zwischen 1:0,1 und 1:50 liegt,
- Wirkstoff der Gruppe (2) zwischen 1:0,1 und 1:50 liegt,
- Wirkstoff der Gruppe (3) zwischen 1:1 und 1:150 liegt,
- Wirkstoff der Gruppe (4) zwischen 1:0,1 und 1:10 liegt,
- Wirkstoff der Gruppe (5) zwischen 1:1 und 1:150 liegt,
- Wirkstoff der Gruppe (6) zwischen 1:1 und 1:150 liegt,
- Wirkstoff der Gruppe (7) zwischen 1:0,1 und 1:50 liegt,
- Wirkstoff der Gruppe (8) zwischen 1:0,1 und 1:50 liegt,
- Wirkstoff der Gruppe (9) zwischen 1:0,02 und 1:50 liegt,
- Wirkstoff der Gruppe (10) zwischen 1:0,1 und 1:50 liegt,
- Wirkstoff der Gruppe (11) zwischen 1:0,1 und 1:50 liegt,
- Wirkstoff der Gruppe (12) zwischen 1:0,1 und 1:50 liegt,
- Wirkstoff der Gruppe (13) zwischen 1:0,1 und 1:50 liegt,
- Wirkstoff der Gruppe (14) zwischen 1:0,1 und 1:50 liegt,
- Wirkstoff der Gruppe (15) zwischen 1:0,2 und 1:50 liegt,
- Wirkstoff der Gruppe (16) zwischen 1:0,1 und 1:50 liegt,
- Wirkstoff der Gruppe (17) zwischen 1:0,1 und 1:50 liegt,
- Wirkstoff der Gruppe (18) zwischen 1:1 und 1:150 liegt,
- Wirkstoff der Gruppe (19) zwischen 1:0,1 und 1:150 liegt,
- Wirkstoff der Gruppe (20) zwischen 1:0,02 und 1:50 liegt,
- Wirkstoff der Gruppe (21) zwischen 1:0,05 und 1:20 liegt,
- Wirkstoff der Gruppe (22) zwischen 1:0,1 und 1:50 liegt,
- Wirkstoff der Gruppe (23) zwischen 1:0,1 und 1:50 liegt,
- Wirkstoff der Gruppe (24) zwischen 1:0,1 und 1:150 liegt,
- Wirkstoff der Gruppe (25) zwischen 1:0,1 und 1:50 liegt,
- Wirkstoff der Gruppe (26) zwischen 1:0,1 und 1:50 liegt,
- Wirkstoff der Gruppe (27) zwischen 1:0,1 und 1:50 liegt,
- Wirkstoff der Gruppe (28) zwischen 1:1 und 1:150 liegt,
- Wirkstoff der Gruppe (29) zwischen 1:1 und 1:150 liegt,
- Wirkstoff der Gruppe (30) zwischen 1:0,1 und 1:50 liegt,

- Wirkstoff der Gruppe (31) zwischen 1:0,1 und 1:50 liegt,
- Wirkstoff der Gruppe (32) zwischen 1:0,1 und 1:50 liegt,
- Wirkstoff der Gruppe (33) zwischen 1:0,1 und 1:50 liegt,
- Wirkstoff der Gruppe (34) zwischen 1:0,1 und 1:50 liegt,
- Wirkstoff der Gruppe (35) zwischen 1:1 und 1:50 liegt,
- Wirkstoff der Gruppe (36) zwischen 1:1 und 1:150 liegt,
- Wirkstoff der Gruppe (37) zwischen 1:0,1 und 1:50 liegt,
- Wirkstoff der Gruppe (38) zwischenl :0,1 und 1:50 liegt,
- Wirkstoff der Gruppe (39) zwischen 1:0,1 und 1:50 liegt,
- Wirkstoff der Gruppe (40) zwischen 1:0,1 und 1:50 liegt,
- Wirkstoff der Gruppe (41) zwischen 1:1 und 1:150 liegt,
- Wirkstoff der Gruppe (42) zwischen 1:1 und 1:150 liegt,
- Wirkstoff der Gruppe (43) zwischen 1:0,1 und 1:50 liegt,
- Wirkstoff der Gruppe (44) zwischen 1:0,1 und 1:50 liegt,
- Wirkstoff der Gruppe (45a) zwischen 1:1 und 1:150 liegt,
- Wirkstoff der Gruppe (45b) zwischen 1:1 und 1:150 liegt,
- Wirkstoff der Gruppe (46) zwischen 1:0,1 und 1:50 liegt,
- Wirkstoff der Gruppe (47a) zwischen 1:0,1 und 1:50 liegt,
- Wirkstoff der Gruppe (47b) zwischen 1:0,1 und 1:50 liegt,
- Wirkstoff der Gruppe (47c) zwischen 1:0,1 und 1:50 liegt,
- Wirkstoff der Gruppe (47d) zwischen 1:0,1 und 1:50 liegt,
- Wirkstoff der Gruppe (47e) zwischen 1:0,1 und 1:50 liegt,
- Wirkstoff der Gruppe (47f) zwischen 1:0,1 und 1:50 liegt,
- Wirkstoff der Gruppe (47g) zwischen 1:0,1 und 1:50 liegt,
- Wirkstoff der Gruppe (47h) zwischen 1:0,1 und 1:50 liegt,
- Wirkstoff der Gruppe (48) zwischen 1:0,1 und 1:50 liegt,
- Wirkstoff der Gruppe (49) zwischen 1:0,1 und 1:50 liegt,
- Wirkstoff der Gruppe (50) zwischen 1:0,1 und 1:50 liegt,
- Wirkstoff der Gruppe (51) zwischen 1:0,1 und 1:50 liegt.

4. Verfahren zur Bekämpfung von Pilzen, **dadurch gekennzeichnet, daß** man Wirkstoffkombinationen gemäß mindestens einem der Ansprüche 1 bis 3 auf die Pilze und/oder deren Lebensraum ausbringt.

5. Verwendung von Wirkstoffkombinationen gemäß mindestens einem der Ansprüche 1 bis 3 zur Bekämpfung von Pilzen.

6. Verfahren zur Herstellung von fungiziden Mitteln, **dadurch gekennzeichnet, daß** man Wirkstoffkombinationen gemäß mindestens einem der Ansprüche 1 bis 3 mit Streckmitteln und/oder oberflächenaktiven Stoffen vermischt.

## Claims

1. Active compound combinations, comprising at least one compound of the formula

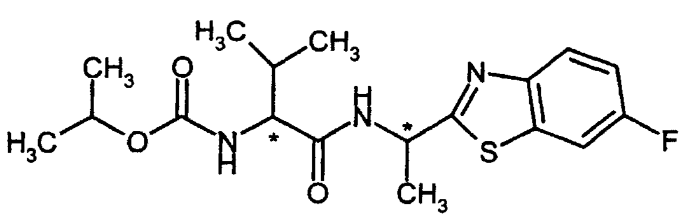

(I)

and

(1) a triazole derivative of the formula

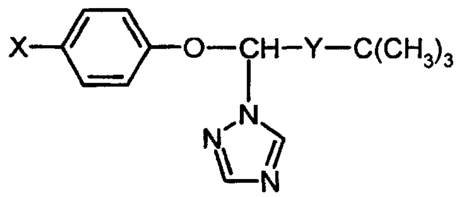

(II),

in which

X represents chlorine or phenyl and

Y represents

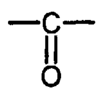

or

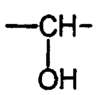

,

and/or

(2) the triazole derivative of the formula

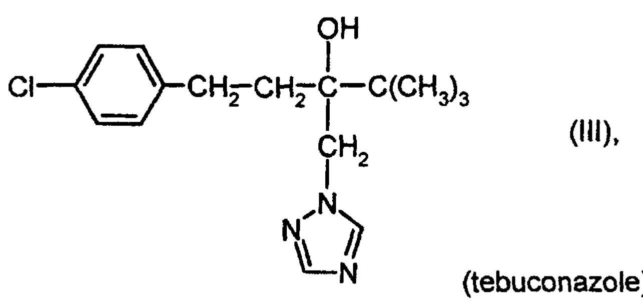

(III),

(tebuconazole)

and/or

(3) an aniline derivative of the formula

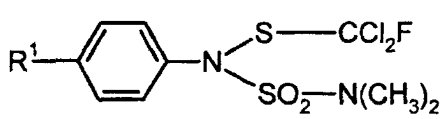

(IV),

in which

$R^1$ represents hydrogen or methyl,

and/or

(4) N-[1-(4-chloro-phenyl)-ethyl]-2,2-dichloro-1-ethyl-3-methyl-cyclopropane-carboxamide of the formula

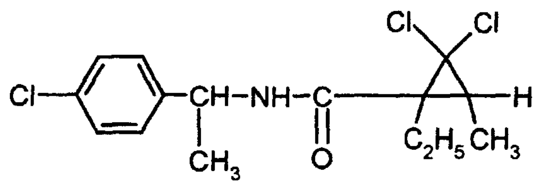

(V)

(carpropamid)

and/or

(5) the zinc propylene-1,2-bis-(dithiocarbamidate) of the formula

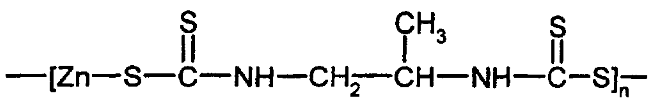

(VI)

n > = 1

(propineb)

and/or

(6) at least one thiocarbamate of the formula

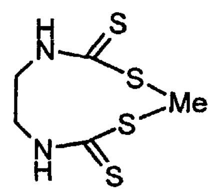

(VII),

Me = Zn or Mn or a mixture of Zn and Mn
and/or

(7) the aniline derivative of the formula

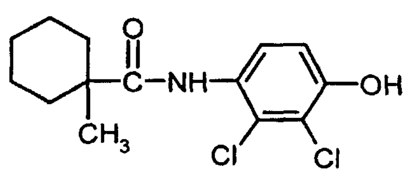

(VIII)

(fenhexamid)

and/or

(8) the compound of the formula

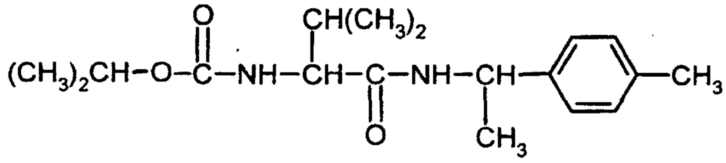

(IX)

(iprovalicarb)

and/or

(9) the benzothiadiazole derivative of the formula

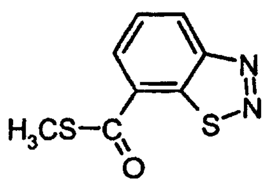

(X)

(acibenzolar-S-methyl)

and/or

(10) the 8-t-butyl-2-(N-ethyl-N-n-propyl-amino)-methyl-1,4-dioxaspiro[5,4]-decane of the formula

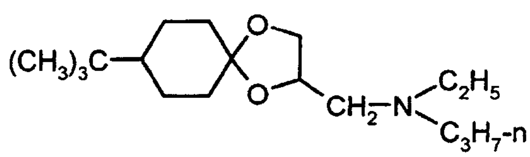

(XI)

(spiroxamine)

and/or

(11) the compound of the formula

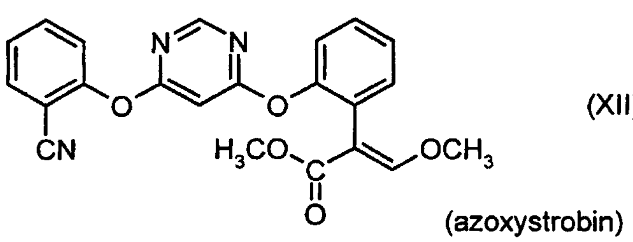

(XII)

(azoxystrobin)

and/or

(12) the compound of the formula

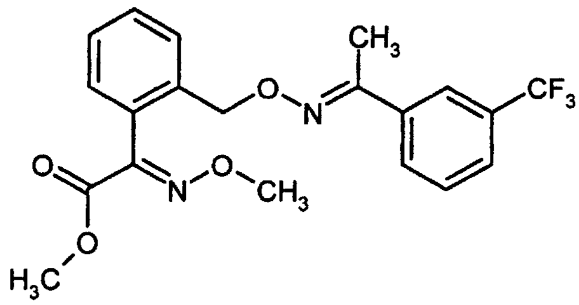

(XIII)

(trifloxystrobin)

and/or

(13) the compound of the formula

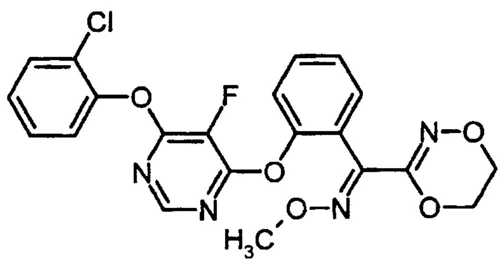

(XIV)

and/or

(14) the cyanoxime derivative of the formula

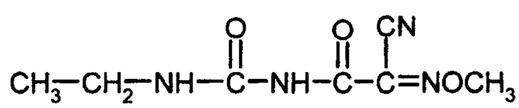

(XV)

(cymoxanil)

and/or

(15) a pyrimidine derivative of the formula

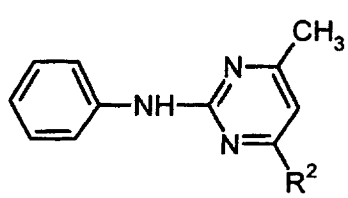

(XVI),

in which

$R^2$ represents methyl, $—C\equiv C—CH_3$ (mepanipyrim) or cyclopropyl (cyprodinyl),

and/or

(16) an aniline derivative of the formula

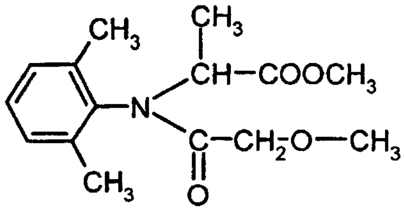

(XVII)

(metalaxyl or metalaxyl M)

and/or

(17) the morpholine derivative of the formula

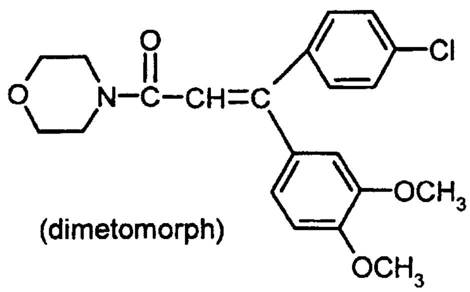

(dimetomorph)

(XVIII)

and/or

(18) the phthalimide derivative of the formula

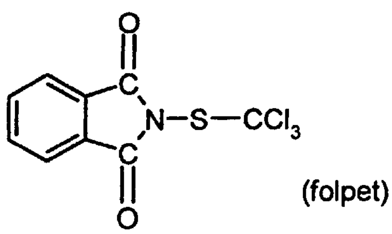

(XIX)

(folpet)

and/or

(19) the phosphorus compound of the formula

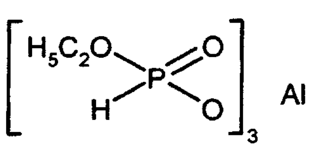

(XX)

(fosetyl-Al)

and/or

(20) the hydroxyethyl-triazole derivative of the formula

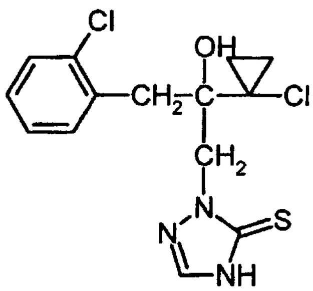

(XXI)

and/or

(21) the 1-[(6-chloro-3-pyridinyl)-methyl]-N-nitro-2-imidazolidinimine of the formula

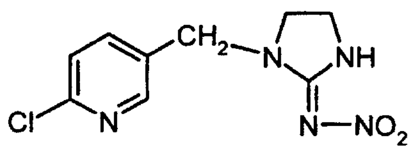

(XXII)

(imidacloprid)

and/or

(22) the oxazolidinedione of the formula

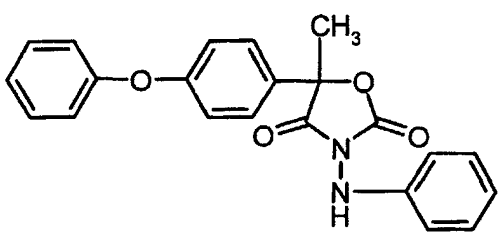

(XXIII)

(famoxadone)

and/or

(23) the benzamide derivative of the formula

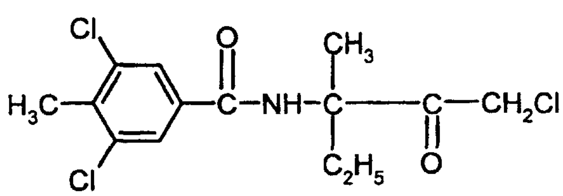

(XXIV)

(zoxamide)

and/or

(24) the guanidine derivative of the formula

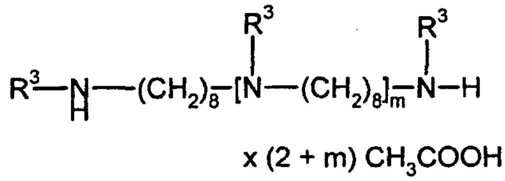

(XXV)

in which

m represents integers from 0 to 5 and

$R^3$ represents hydrogen (17 to 23%) or the radical of the formula

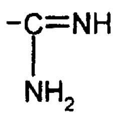

(77 to 83 %)

and/or

(25) the triazole derivative of the formula

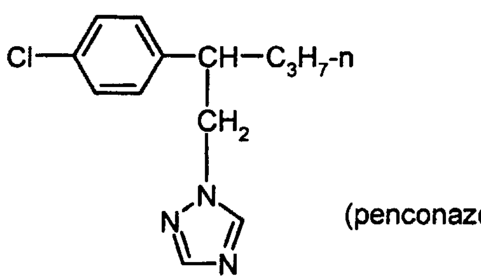

(XXVI)

(penconazole)

and/or

(26) the halogeno-benzimidazole of the formula

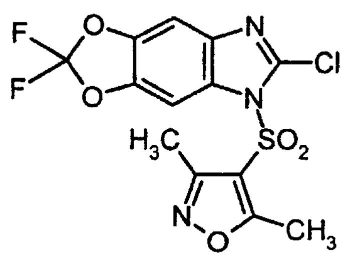

(XXVII)

and/or

(27) the halogenopyrimidine of the formula

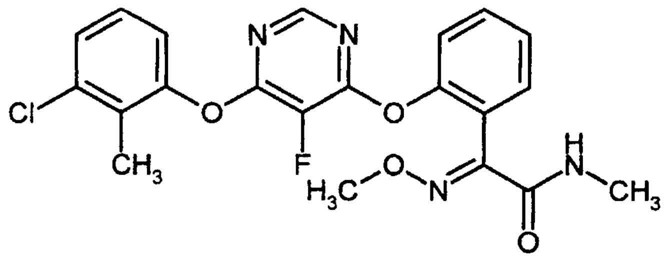

(XXVIII)

and/or

(28) the tetrachloro-isophthalo-dinitrile of the formula

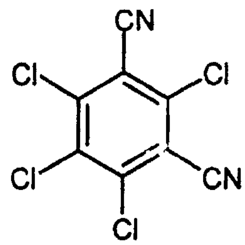

(XXIX)

(chlorothalonil)

and/or

(29) the compound of the formula

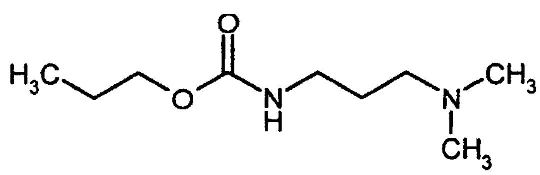

(XXX)

(propamocarb)

and/or

(30) the pyridineamine of the formula

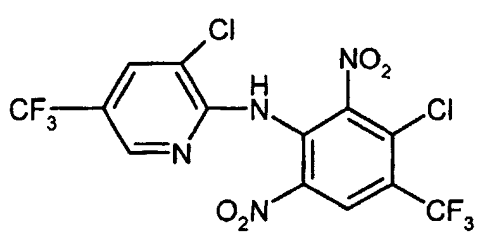

(XXXI)

(fluazinam)

and/or

(31) the thiazolecarboxamide of the formula

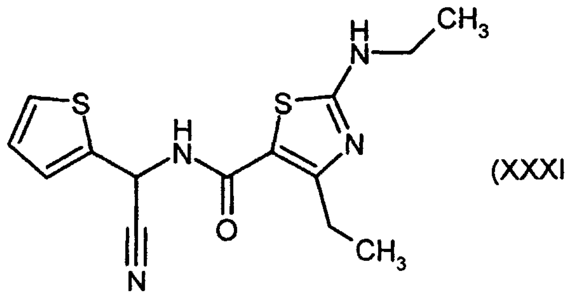

(XXXII)

(ethaboxam)

and/or

(32) the sulphonamide of the formula

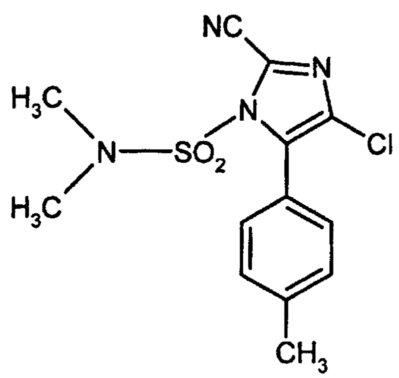

(XXXIII)

(cyamidazosulfamid)

and/or

(33) the compound of the formula

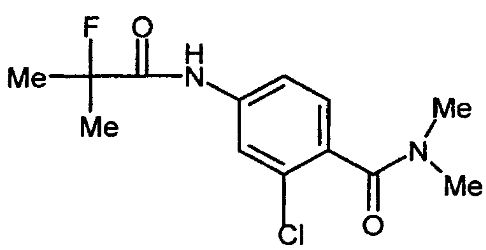

(XXXIV)

and/or

(34) the compound of the formula

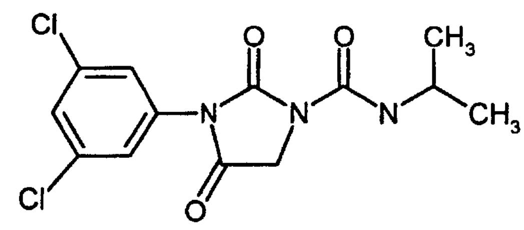

(XXXV)

(iprodione)

and/or

(35) the compound of the formula

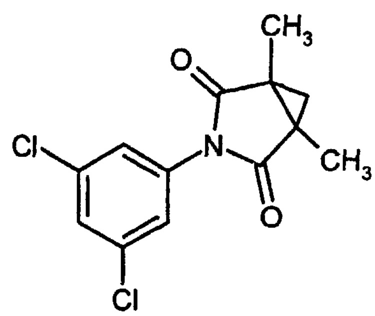

(XXXVI)

(procymidone)

and/or

(36) the diamide of the formula

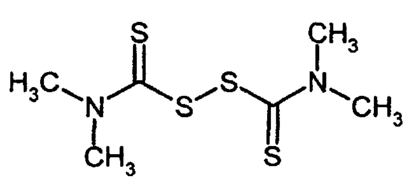

(XXXVII)

(thiram)

and/or

(37) the methoxyacrylate derivative of the formula

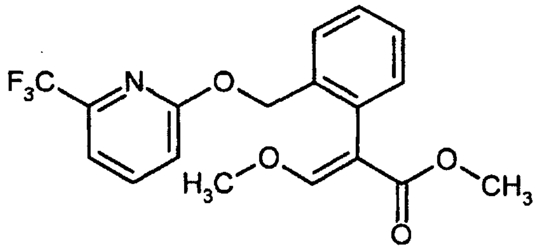

(XXXVIII)

(picoxystrobin)

and/or

(38) the quinoline derivative of the formula

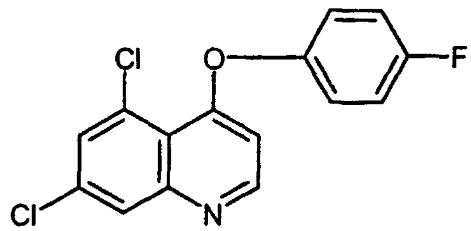

(XXXIX)

(quinoxyfen)

and/or

(39) the phenylamide derivative of the formula

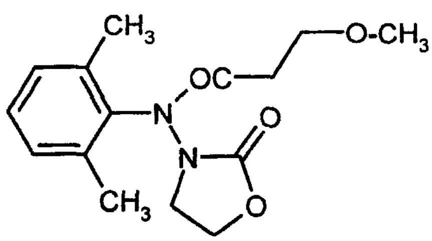

(XXXX)

(oxadixyl)

and/or

(40) the phenylamide derivative of the formula

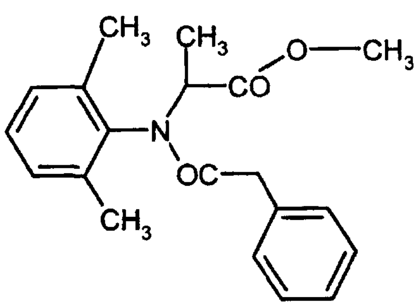

(XXXXI)

(benalaxyl)

and/or

(41) the dicarboximide derivative of the formula

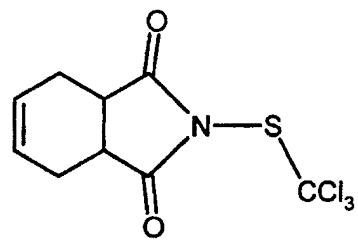

(XXXXIIa)

(captan)

and/or

(42) the phosphonic acid of the formula

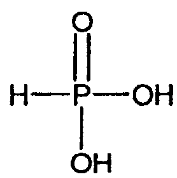

(XXXXIII)

(phosphonic acid)

and/or

(43) the pyrrole derivative of the formula

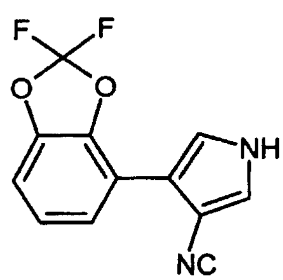

(XXXXIV)

(fludioxonil)

and/or

(44) the phenyl carbonate of the formula

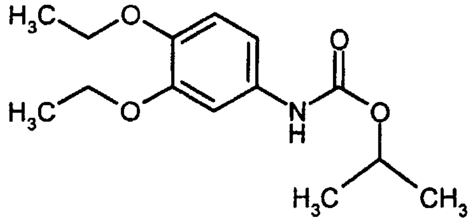

(XXXXV)

(diethofencarb)

and/or

(45) the copper compounds

a)

copper oxychloride (XXXXVIa)

b)

copper hydroxid (XXXXVIb)

and/or

(46) the imidazole derivative of the formula

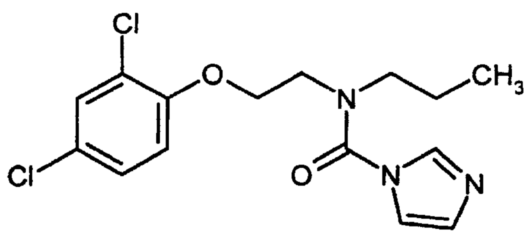

(XXXXVII)

(prochloraz)

and/or

(47) the triazole derivative of the formula

a)

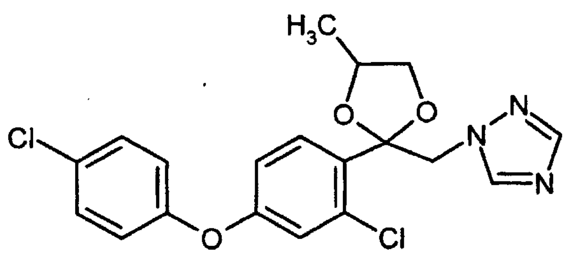

(XXXXVIIIa)

(difenconazole)

and/or

b)

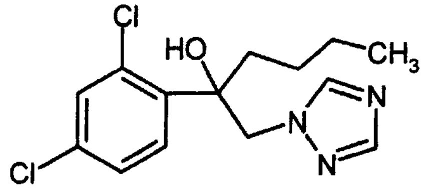

(XXXXVIIIb)

(hexaconazole)

and/or

c)

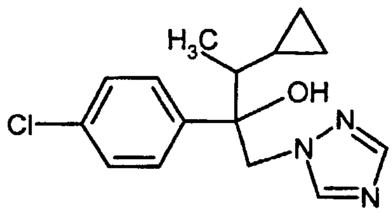

(XXXXVIIIe)

(cyproconazole)

and/or

d)

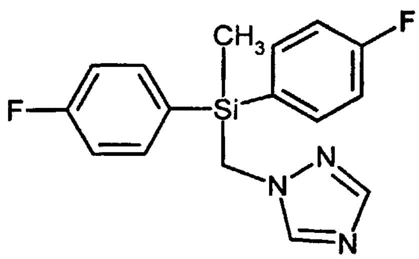

(XXXXVIIId)

(flusilazole)

and/or

e)

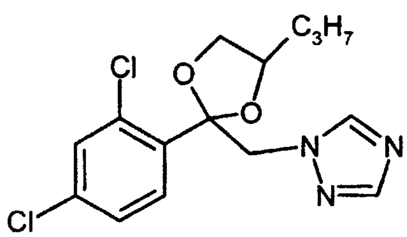

(XXXXVIIIe)

(propiconazole)

and/or

f)

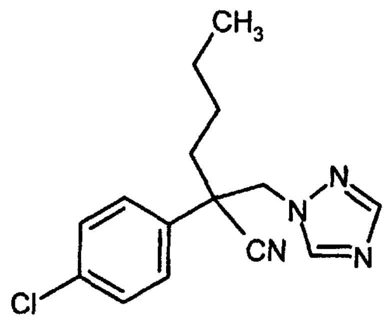

(XXXXVIIIf)

(myclobutanil)

and/or

g)

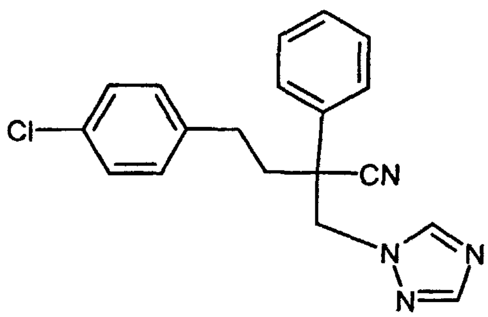

(XXXXVIIIg)

(fenbuconazole)

and/or

h)

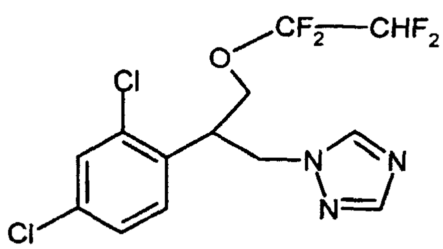

(XXXXVIIIh)

(tetraconazole)

and/or

(48) a compound of the general formula

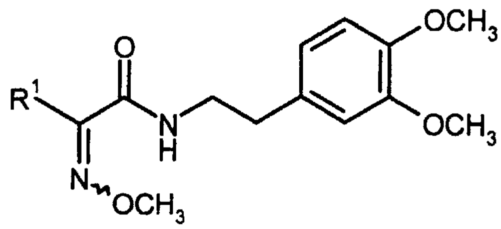

(XXXXIX)

in which

$R^1$ represents unsubstituted or fluorine-, chlorine-, bromine-, methyl- or ethyl-substituted phenyl, 2-naphthyl, 1,2,3,4-tetrahydronaphthyl or indanyl,

and/or

(49) N-methyl-2-(methoxyimino)-2-[2-([1-(3-tri-fluoro-methylphenyl)ethoxy]iminomethyl)-phenyl]acetamide of the formula

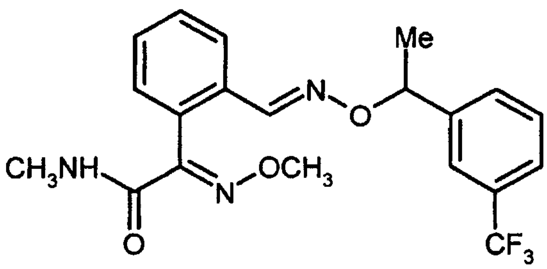

(XXXXX)

and/or

(50) 2,4-dihydro-5-methoxy-2-methyl-4-[2-([([1-(3-tri-fluoro-methylphenyl)ethylidene]amino)-oxy]methyl)phenyl]-3H-1,2,4-triazol-3-one of the formula

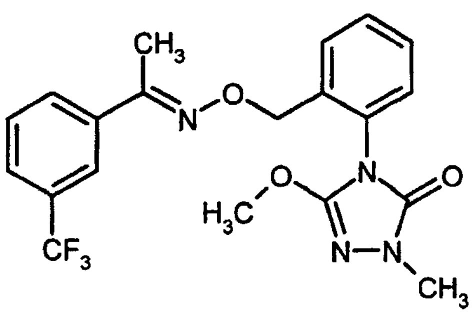

(XXXXXI)

and/or

(51) the compound of the formula

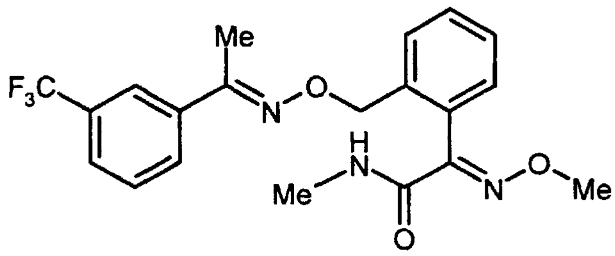

(XXXXXII)

**2.** Active compound combinations according to Claim 1, comprising at least one compound of the formula (I) as defined in Claim 1 and

(3) an aniline derivative of the formula

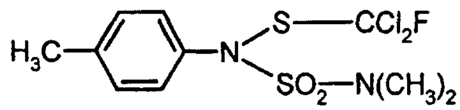

(IVb)

and/or

(5) the zinc propylene-1,2-bis-(dithiocarbamidate) of the formula

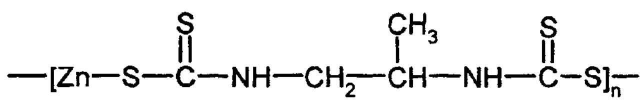

(VI)

n > = 1

(propineb)

and/or

(6) at least one thiocarbamate of the formula

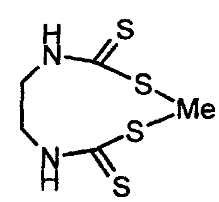

(VIIc)

Me = mixture of Zn and Mn

and/or

(7) the aniline derivative of the formula

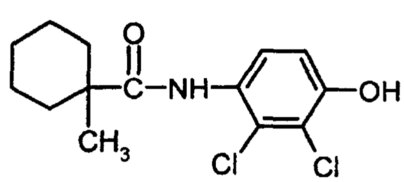

(VIII)

(fenhexamid)

and/or

(8) the compound of the formula

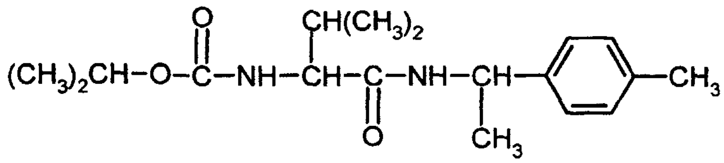

(IX)

(iprovalicarb)

and/or

(11) the compound of the formula

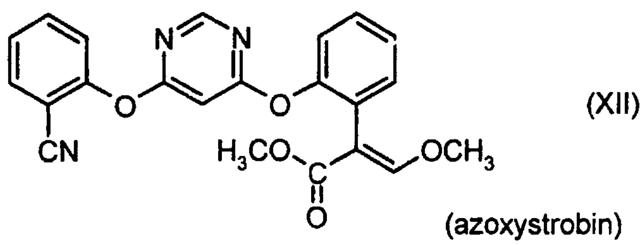

(XII)

(azoxystrobin)

and/or

(12) the compound of the formula

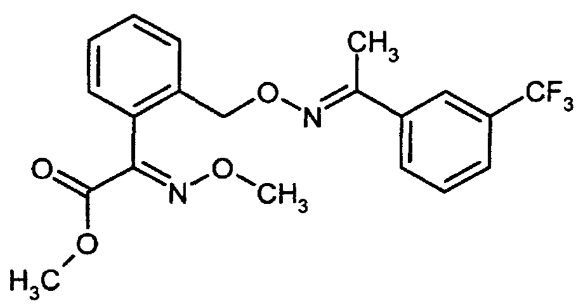

(XIII)

(trifloxystrobin)

and/or

(13) the compound of the formula

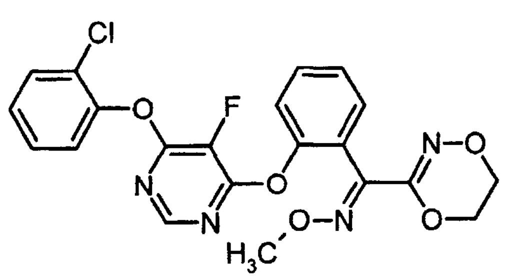

(XIV)

and/or

(18) the phthalimide derivative of the formula

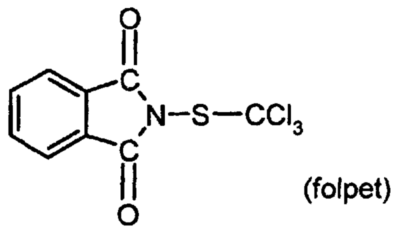

(XIX)

(folpet)

and/or

(20) the hydroxyethyl-triazole derivative of the formula

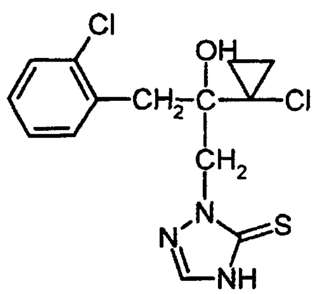

(XXI)

and/or

(26) the halogeno-benzimidazole of the formula

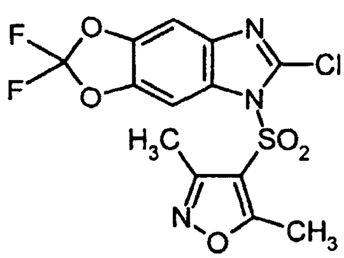

(XXVII)

and/or

(27) the halogenopyrimidine of the formula

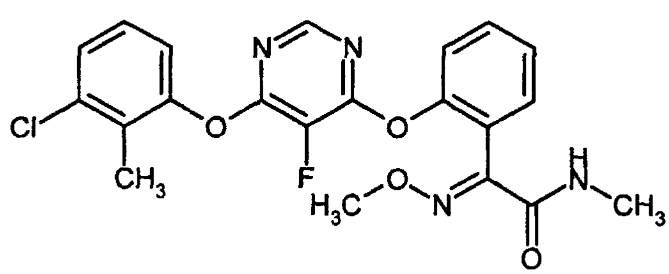

(XXVIII)

and/or

(28) the tetrachloro-isophthalo-dinitrile of the formula

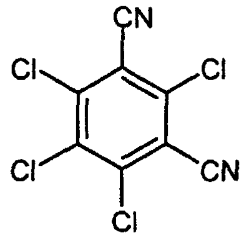

(XXIX)

(chlorothalonil)

and/or

(30) the pyridinamine of the formula

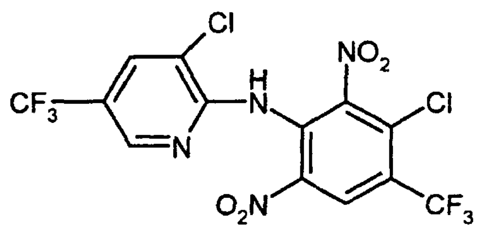

(XXXI)

(fluazinam)

and/or

(45) the copper compounds

a)

copper oxychloride (XXXXVIa)

b)

copper hydroxide (XXXXVIb).

**3.** Composition according to Claim 1, **characterized in that** in the active compound combinations the weight ratio of active compound of the formula (I) to

- active compound of group (1) is from 1:0.1 to 1:50,
- active compound of group (2) is from 1:0.1 to 1:50,
- active compound of group (3) is from 1:1 to 1:150,
- active compound of group (4) is from 1:0.1 to 1:10,
- active compound of group (5) is from 1:1 to 1:150,
- active compound of group (6) is from 1:1 to 1:150,
- active compound of group (7) is from 1:0.1 to 1:50,
- active compound of group (8) is from 1:0.1 to 1:50,
- active compound of group (9) is from 1:0.02 to 1:50,

- active compound of group (10) is from 1:0.1 to 1:50,
- active compound of group (11) is from 1:0.1 to 1:50,
- active compound of group (12) is from 1:0.1 to 1:50,
- active compound of group (13) is from 1:0.1 to 1:50,
- active compound of group (14) is from 1:0.1 to 1:50,
- active compound of group (15) is from 1:0.2 to 1:50,
- active compound of group (16) is from 1:0.1 to 1:50,
- active compound of group (17) is from 1:0.1 to 1:50,
- active compound of group (18) is from 1:1 to 1:150,
- active compound of group (19) is from 1:0.1 to 1:150,
- active compound of group (20) is from 1:0.02 to 1:50,
- active compound of group (21) is from 1:0.05 to 1:20,
- active compound of group (22) is from 1:0.1 to 1:50,
- active compound of group (23) is from 1:0.1 to 1:50,
- active compound of group (24) is from 1:0.1 to 1:150,
- active compound of group (25) is from 1:0.1 to 1:50,
- active compound of group (26) is from 1:0.1 to 1:50,
- active compound of group (27) is from 1:0.1 to 1:50,
- active compound of group (28) is from 1:1 to 1:150,
- active compound of group (29) is from 1:1 to 1:150,
- active compound of group (30) is from 1:0.1 to 1:50,
- active compound of group (31) is from 1:0.1 to 1:50,
- active compound of group (32) is from 1:0.1 to 1:50,
- active compound of group (33) is from 1:0.1 to 1:50,
- active compound of group (34) is from 1:0.1 to 1:50,
- active compound of group (35) is from 1:1 to 1:50,
- active compound of group (36) is from 1:1 to 1:150,
- active compound of group (37) is from 1:0.1 to 1:50,
- active compound of group (38) is from 1:0.1 to 1:50,
- active compound of group (39) is from 1:0.1 to 1:50,
- active compound of group (40) is from 1:0.1 to 1:50,
- active compound of group (41) is from 1:1 to 1:150,
- active compound of group (42) is from 1:1 to 1:150,
- active compound of group (43) is from 1:0.1 to 1:50,
- active compound of group (44) is from 1:0.1 to 1:50,
- active compound of group (45a) is from 1:1 to 1:150,
- active compound of group (45b) is from 1:1 to 1:150,
- active compound of group (46) is from 1:0.1 to 1:50,
- active compound of group (47a) is from 1:0.1 to 1:50,
- active compound of group (47b) is from 1:0,1 to 1:50,
- active compound of group (47c) is from 1:0.1 to 1:50,
- active compound of group (47d) is from 1:0.1 to 1:50,
- active compound of group (47e) is from 1:0.1 to 1:50,
- active compound of group (47f) is from 1:0.1 to 1:50,
- active compound of group (47g) is from 1:0.1 to 1:50,
- active compound of group (47h) is from 1:0.1 to 1:50,
- active compound of group (48) is from 1:0.1 to 1:50,
- active compound of group (49) is from 1:0.1 to 1:50,
- active compound of group (50) is from 1:0.1 to 1:50,
- active compound of group (51) is from 1:0.1 to 1:50.

**4.** Method for controlling fungi, **characterized in that** active compound combinations according to at least one of Claims 1 to 3 are applied to the fungi and/or their habitat.

**5.** Use of active compound combinations according to any of Claims 1 to 3 for controlling fungi.

**6.** Process for preparing fungicidal compositions, **characterized in that** active compound combinations according to any of Claims 1 to 3 are mixed with extenders and/or surfactants.

## Revendications

**1.** Combinaisons d'agents actifs, contenant au moins un composé de la formule :

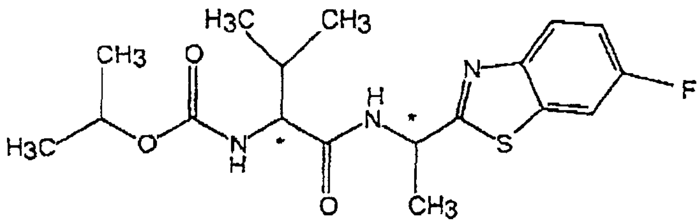

(I)

et

(1) un dérivé triazole de la formule :

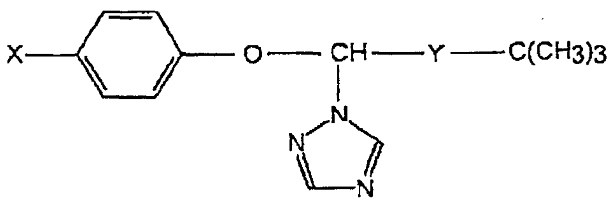

(II)

dans laquelle :

X représente l'atome de chlore ou le radical phényle, et
Y représente -C(O)- ou -CH(OH)-, et/ou

(2) le dérivé triazole de la formule :

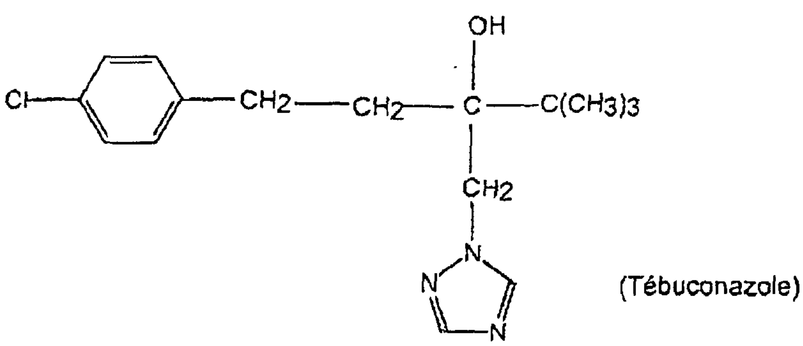

(III)

(Tébuconazole)

et/ou
(3) un dérivé aniline de la formule :

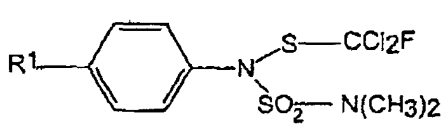

(IV)

dans laquelle :

$R^1$ représente l'atome d'hydrogène ou le radical méthyle,

et/ou

(4) le N-[1-(4-chlorophényl)éthyl]-2,2-dichloro-1-éthyl-3-méthylcyclopropanecarboxamide de la formule :

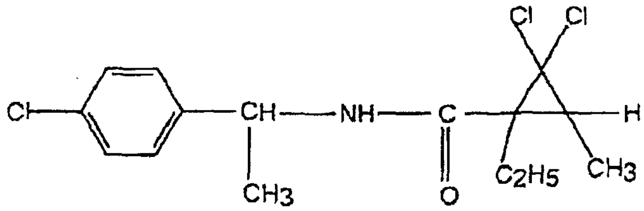

(V)

(Carpropamide)

et/ou

(5) le zinc-propylène-1,2-bis-(dithiocarbamidate) de la formule :

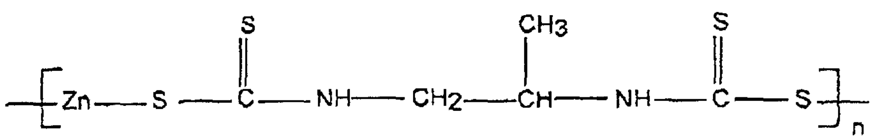

(VI)

n>=1

(Propinèbe)

et/ou

(6) au moins un thiocarbamate de la formule :

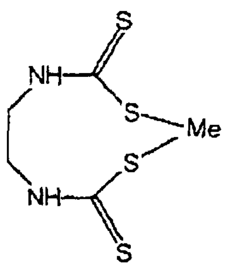

(VII)

Me = Zn ou Mn ou un mélange de Zn et de Mn, et/ou

(7) le dérivé aniline de la formule :

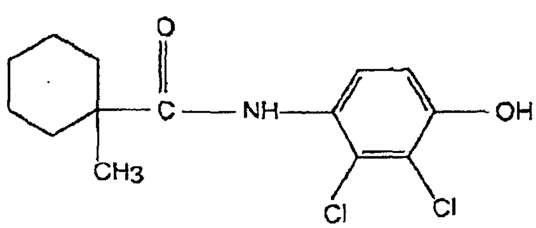

(VIII)

(Fenhexamide)

et/ou

(8) le composé de la formule :

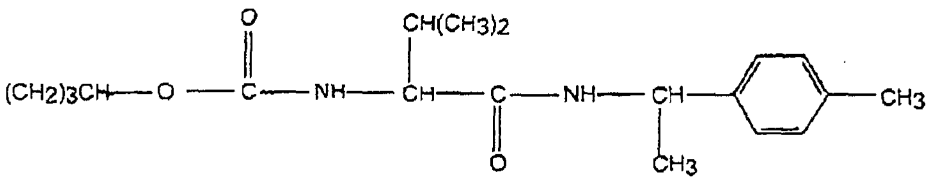

(IX)

(Iprovalicarbe)

et/ou

(9) le dérivé benzothiazole de la formule :

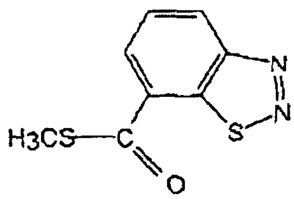

(X)

(Acibenzolar-S-méthyle)

et/ou

(10) le 8-t-butyl-2-(N-éthyl-N-n-propylamino)-méthyl-1,4-dioxaspiro[5,4]décane de la formule :

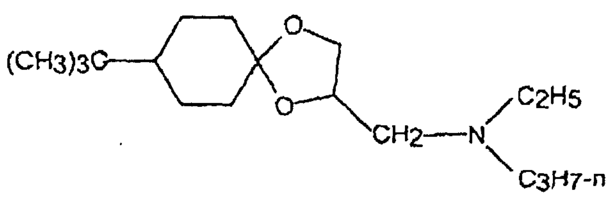

(XI)

(Spiroxamine)

(11) le composé de la formule :

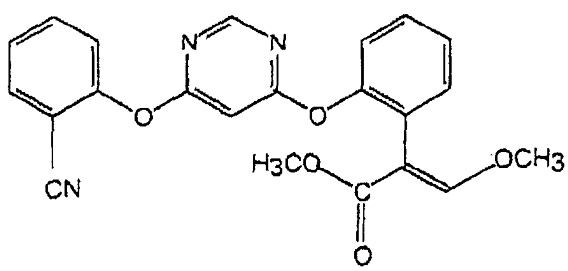

(XII)

(Azoxystrobine)

et/ou

(12) le composé de la formule :

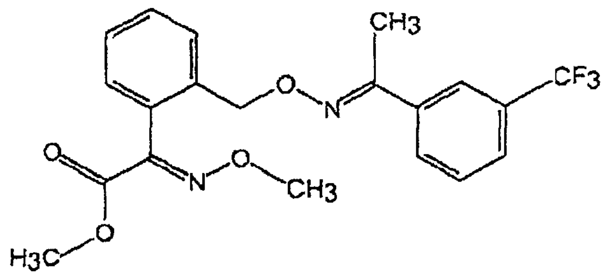

(XIII)

(Trifloxystrobine)

et/ou

(13) le composé de la formule :

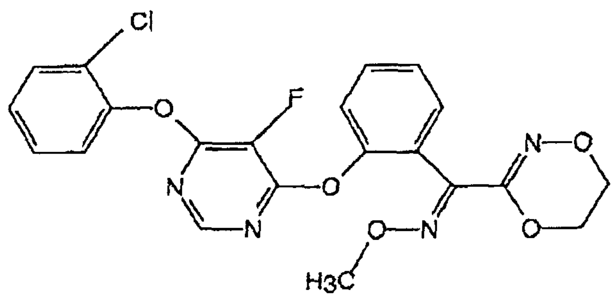

(XIV)

et/ou

(14) le dérivé cyanoxime de la formule :

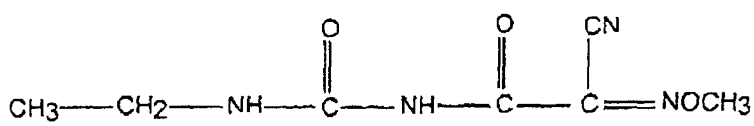

(XV)

(Cymoxanile)

et/ou

(15) un dérivé pyrimidine de la formule :

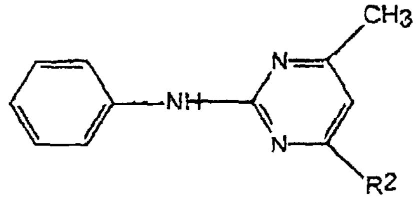

(XVI)

dans laquelle

$R^2$ représente le radical méthyle, $-C \equiv C-CH_3$ (mépanipyrim) ou cyclopropyle (cyprodinyle),

et/ou

(16) un dérivé aniline de la formule :

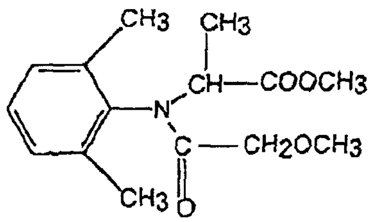

(XVII)

(Métalaxyle ou Métalaxyle M)

et/ou

(17) le dérivé morpholine de la formule :

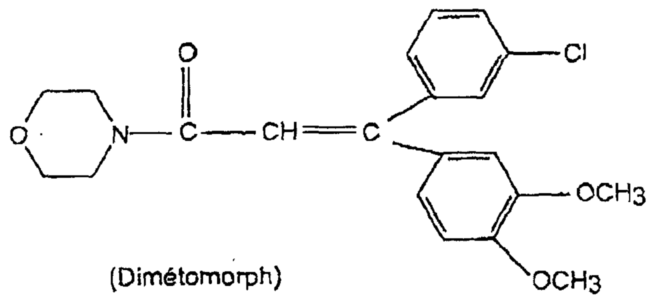

(XVIII)

(Dimétomorph)

et/ou

(18) le dérivé phtalimide de la formule :

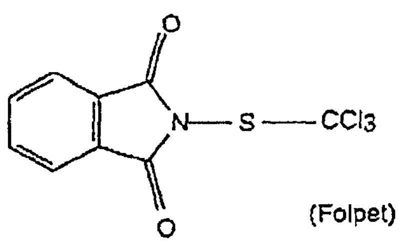

(XIX)

(Folpet)

et/ou

(19) le composé du phosphore de la formule :

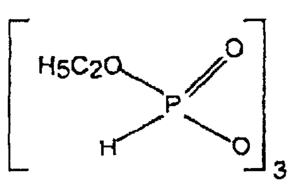

(XX)

(Fosétyle-Al)

et/ou

(20) le dérivé hydroxyéthyltriazole de la formule :

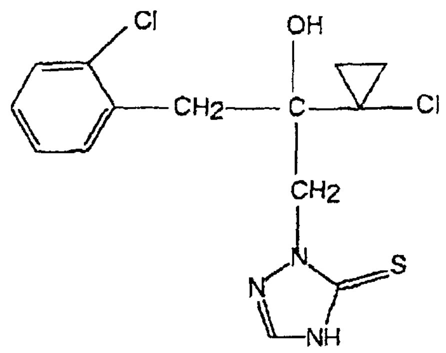

(XXI)

et/ou

(21) la 1-[(6-chloro-3-pyridinyl)méthyl]-N-nitro-2-imidazolidinimine de la formule :

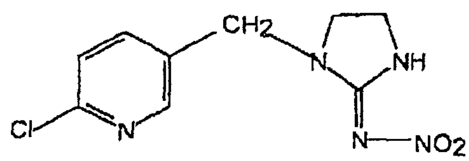

(XXII)

(Imidaclopride)

et/ou

(22) l'oxazolidinedione de la formule :

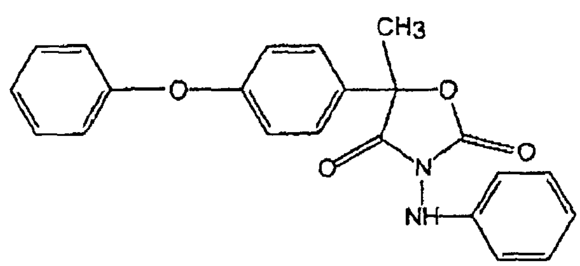

(XXIII)

(Famoxadone)

et/ou

(23) le dérivé benzamide de la formule :

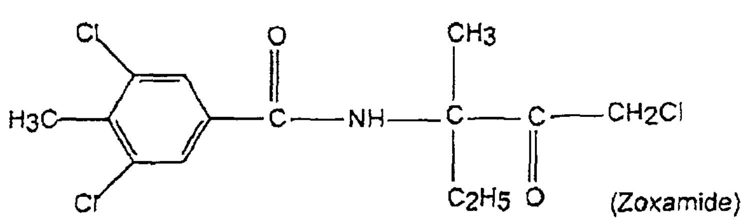

(XXIV)

(Zoxamide)

et/ou

(24) le dérivé guanidine de la formule :

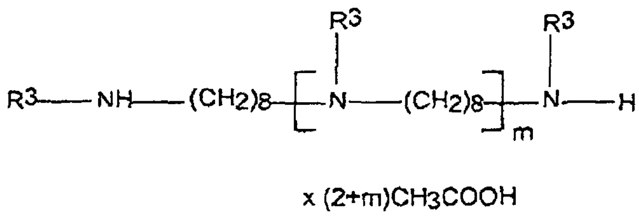

(XXV)

dans laquelle

m représente un nombre entier allant de 0 à 5, et

$R^3$ représente l'atome d'hydrogène (17 à 23%) ou le reste de la formule :

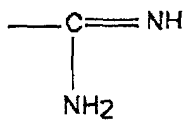

(77 à 83%)

et/ou

(25) le dérivé triazole de la formule :

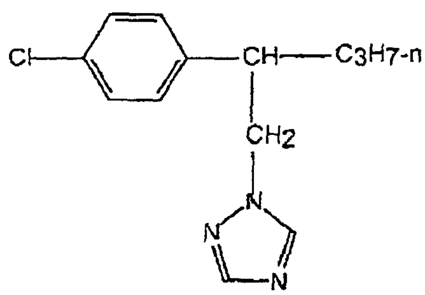

(XXVI)

(Penconazole)

et/ou

(26) le benzimidazole halogéné de la formule :

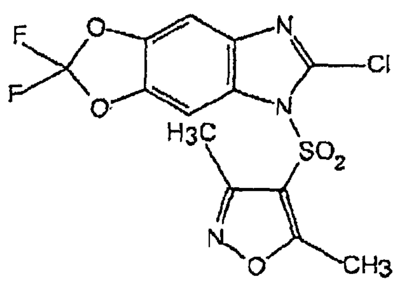

(XXVII)

et/ou

(27) l'halogénopyrimidine de la formule :

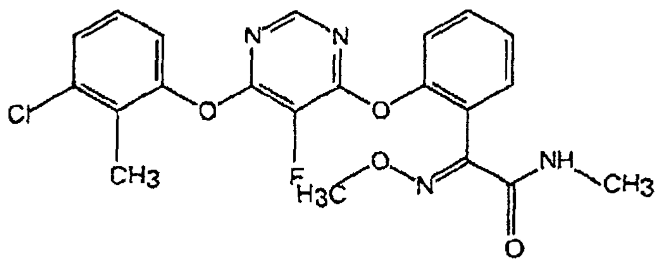

(XXVIII)

et/ou

(28) le tétrachloroisophtalodinitrile de la formule :

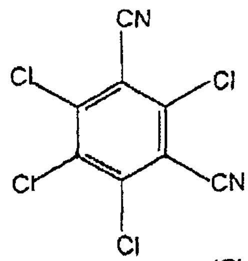

(XXIX)

(Chlorothalonile)

et/ou

(29) le composé de la formule :

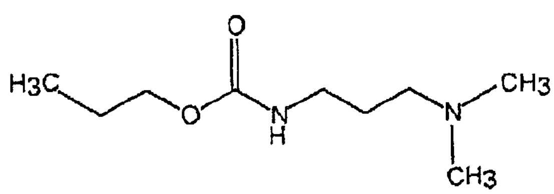

(XXX)

(Propamocarbe)

et/ou

(30) la pyridinamine de la formule :

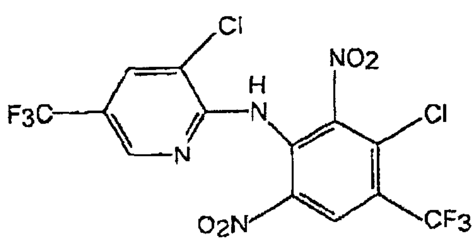

(XXXI)

(Fluazinam)

et/ou

(31) le thiazolcarboxamide de la formule :

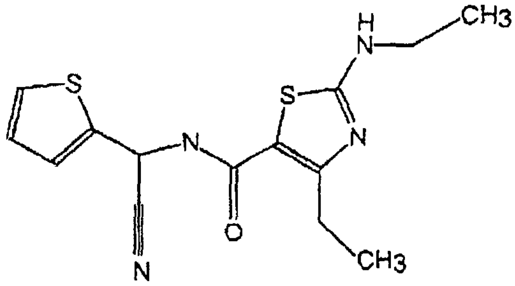

(XXXII)

(Ethaboxam)

et/ou

(32) le sulfonamide de la formule :

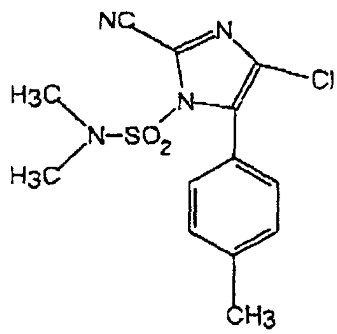

(XXXIII)

(Cyamidazosulfamide)

et/ou

(33) le composé de la formule :

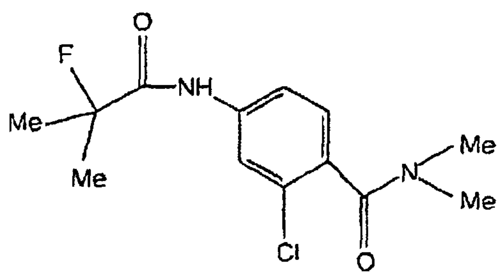

(XXXIV)

et/ou

(34) le composé de la formule :

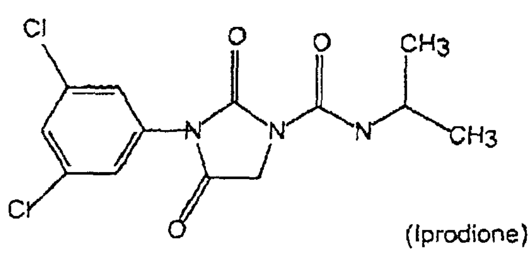

(XXXV)

(Iprodione)

et/ou

(35) le composé de la formule :

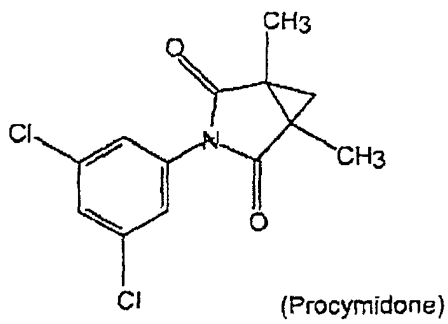

(XXXVI)

(Procymidone)

et/ou

(36) le diamide de la formule :

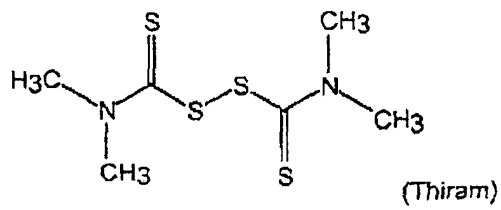

(XXXVII)

(Thiram)

et/ou

(37) le dérivé méthoxyacrylate de la formule :

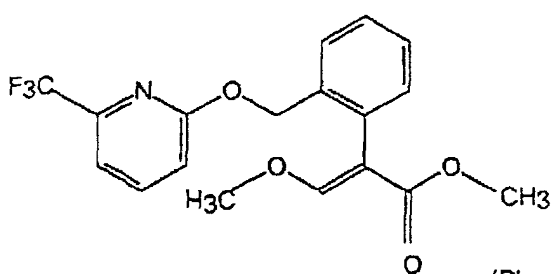

(XXXVIII)

(Picoxystrobine)

et/ou

(38) le dérivé quinoléine de la formule :

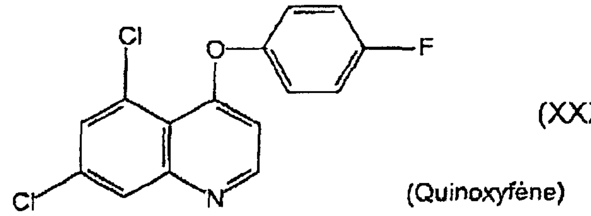

(XXXIX)

(Quinoxyfène)

et/ou

(39) le dérivé phénylamide de la formule :

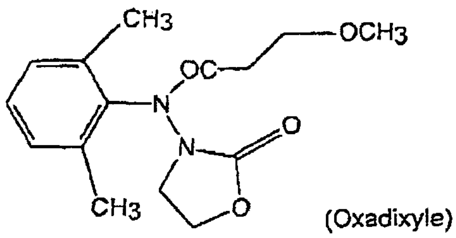

(XXXX)

(Oxadixyle)

et/ou

(40) le dérivé phénylamide de la formule :

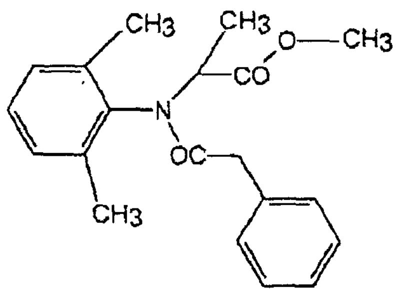

(XXXXI)

(Benalaxyle)

et/ou

(41) le dérivé dicarboxime de la formule :

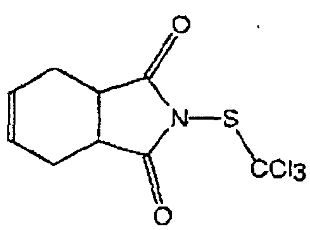

(XXXXIIa)

(Captan)

et/ou

(42) l'acide phosphonique de la formule :

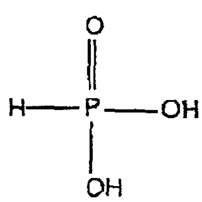

(XXXXIII)

(Acide phosphonique)

et/ou

(43) le dérivé pyrrole de la formule :

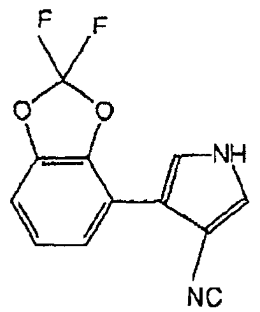

(XXXXIV)

(Fludioxonile)

et/ou

(44) le phénylcarbonate de la formule :

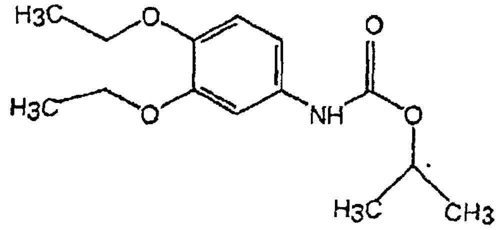

(XXXXV)

(Diéthofencarbe)

et/ou

(45) les composés du cuivre :

(a)

l'oxychlorure de cuivre (XXXXVIa)

(b)

l'hydroxyde de cuivre (XXXXVIb)

et/ou

(46) le dérivé imidazole de la formule :

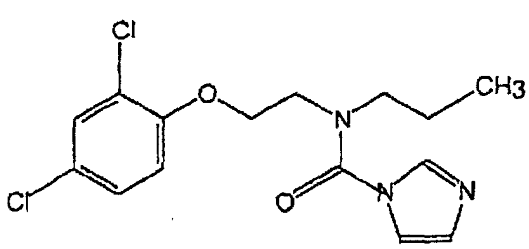

(XXXXVII)

(Prochloraz)

et/ou

(47) le dérivé triazole de la formule :

a)

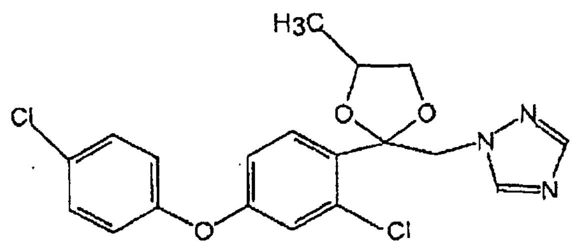

(XXXXVIIIa)

(Difenconazole)

et/ou

b)

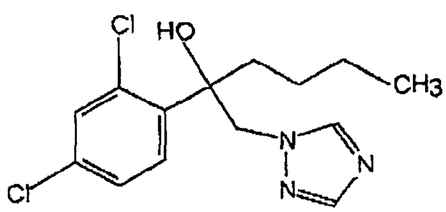

(XXXXVIIIb)

(Hexaconazole)

et/ou

c)

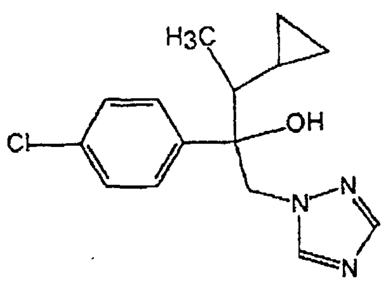

(XXXXVIIIc)

(Cyproconazole)

et/ou

d)

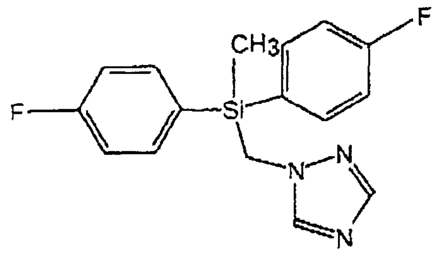

(XXXXVIIId)

(Flusilazole)

et/ou

e)

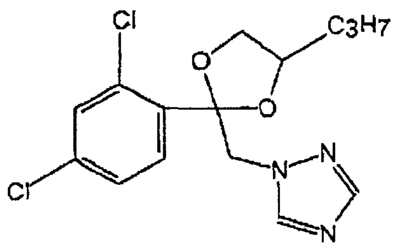

(XXXXVIIIe)

(Propiconazole)

et/ou

f)

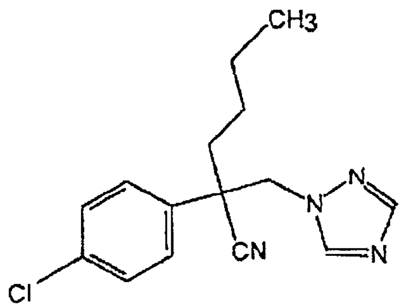

(XXXXVIIIf)

(Myclobutanile)

et/ou

g)

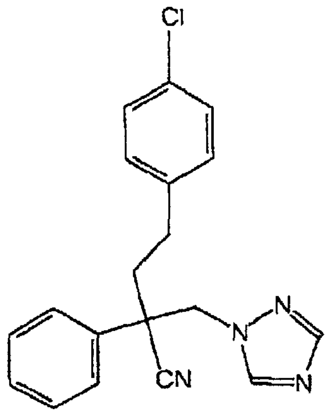

(XXXXVIIIg)

(fenbuconazole)

et/ou

h)

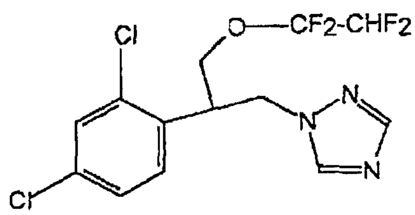

(XXXXVIIIh)

(Tétraconazole)

et/ou

(48) un composé de la formule générale :

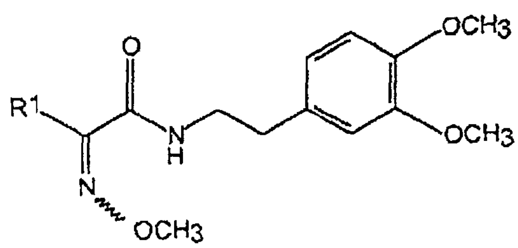

(XXXXIX)

dans laquelle :

$R^1$ représente un radical phényle, 2-naphtyle, 1,2,3,4-tétrahydronaphtyle ou indanyle non substitué ou substitué par l'atome de fluor, de chlore, de brome, le radical méthyle ou éthyle,

et/ou

(49) le N-méthyl-2-(méthoxyimino)-2-[2-([1-(3-trifluorométhylphényl)éthoxy]iminométhyl)phényl]-acétamide de la formule :

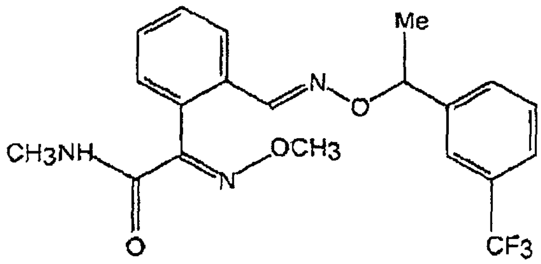

(XXXXX)

et/ou

(50) la 2,4-dihydro-5-méthoxy-2-méthyl-4-[2-([([1-(3-trifluorométhylphényl)éthylidène]amino)oxy]-méthyl) phényl]-3H-1,2,4-triazol-3-one de la formule :

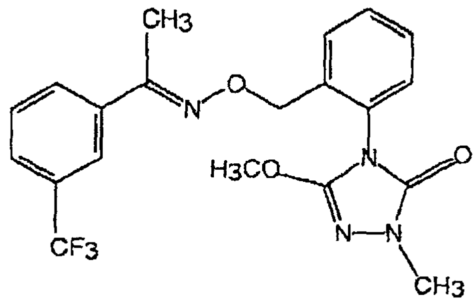

(XXXXXI)

et/ou

(51) le composé de la formule :

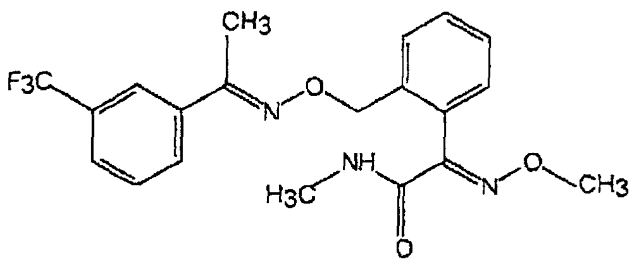

(XXXXXII)

**2.** Combinaisons d'agents actifs suivant la revendication 1, contenant au moins un composé de la formule (I) comme défini à la revendication 1, et

(3) un dérivé aniline de la formule :

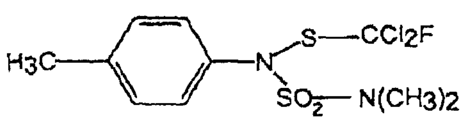

(IV)

et/ou

(5) le zinc-propylène-1,2-bis-(dithiocarbamidate) de la formule :

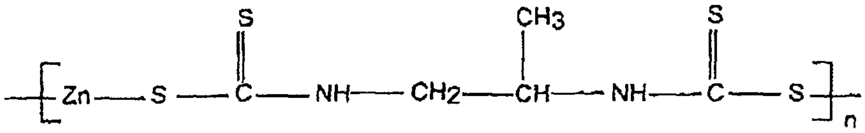 (VI)

n>=1

(Propinèbe)

et/ou

(6) au moins un thiocarbamate de la formule :

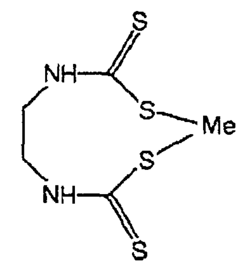 (VIIc)

Me = mélange de Zn et de Mn,

et/ou

(7) le dérivé aniline de la formule :

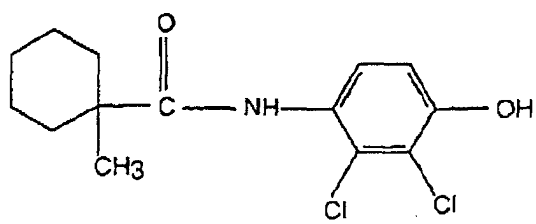 (VIII)

(Fenhexamide)

et/ou

(8) le composé de la formule :

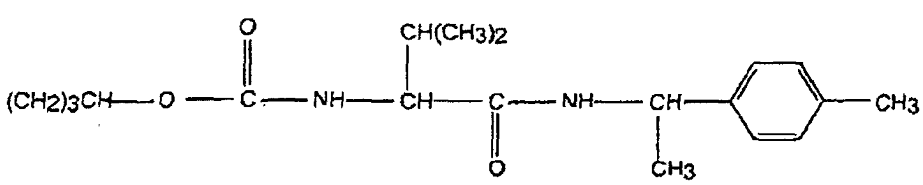 (IX)

(Iprovalicarbe)

et/ou

(11) le composé de la formule :

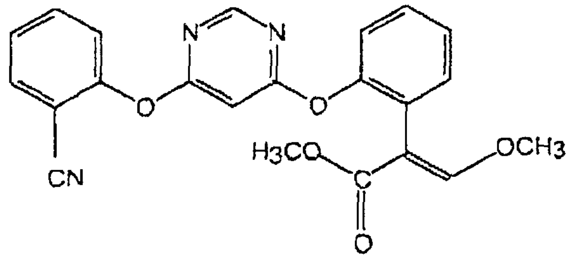

(XII)

(Azoxystrobine)

et/ou

(12) le composé de la formule :

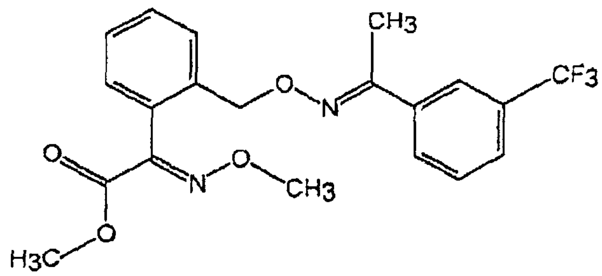

(XIII)

(Trifloxystrobine)

et/ou

(13) le composé de la formule :

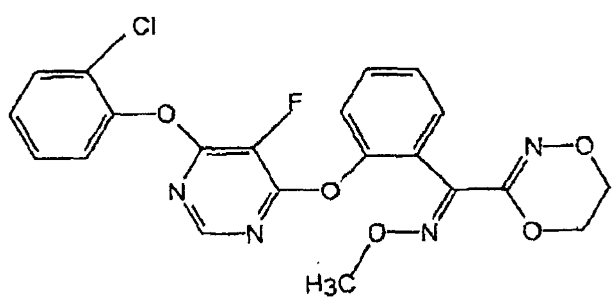

(XIV)

et/ou

(18) le dérivé phtalimide de la formule :

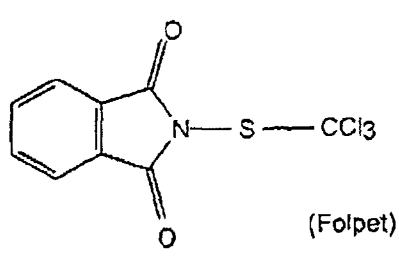

(XIX)

(Folpet)

et/ou

(20) le dérivé hydroxyéthyltriazole de la formule :

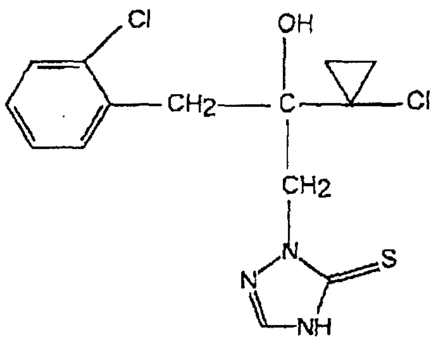

(XXI)

et/ou

(26) le benzimidazole halogéné de la formule :

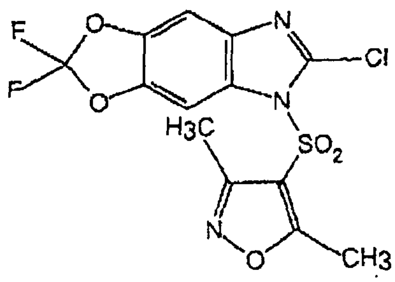

(XXVII)

et/ou

(27) l'halogénopyrimidine de la formule :

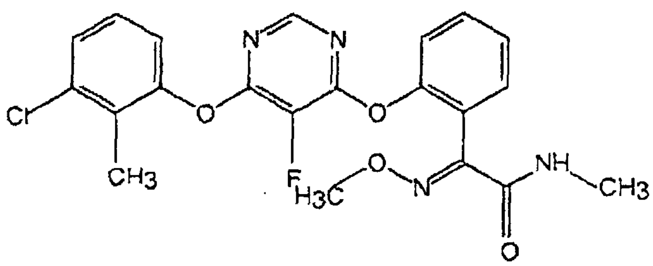

(XXVII)

et/ou

(28) le tétrachloroisophtalodinitrile de la formule :

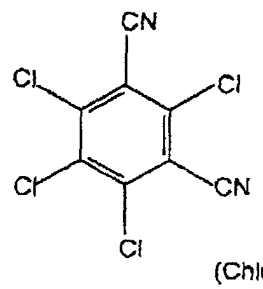

(XXIX)

(Chlorothalonile)

et/ou

(30) la pyridinamine de la formule :

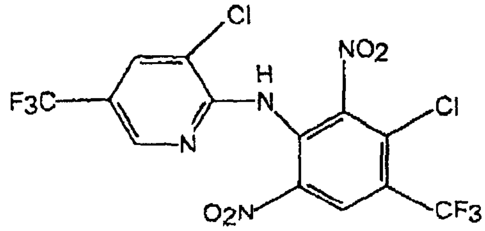

(XXXI)

(Fluazinam)

et/ou

(45) les composés du cuivre :

(a) l'oxychlorure de cuivre (XXXXVIa)
(b) l'hydroxyde de cuivre (XXXXVIb)

3. Agent suivant la revendication 1, **caractérisé en ce que** dans les combinaisons d'agents actifs, le rapport pondéral de l'agent actif de la formule (I) à

l'agent actif du groupe (1), se situe dans l'intervalle allant de 1:0,1 à 1:50 ;
l'agent actif du groupe (2), se situe dans l'intervalle allant de 1:0,1 à 1:50 ;
l'agent actif du groupe (3), se situe dans l'intervalle allant de 1:1 à 1:50 ;
l'agent actif du groupe (4), se situe dans l'intervalle allant de 1:0,1 à 1:10 ;
l'agent actif du groupe (5), se situe dans l'intervalle allant de 1:1 à 1:150 ;
l'agent actif du groupe (6), se situe dans l'intervalle allant de 1:1 à 1:150 ;
l'agent actif du groupe (7), se situe dans l'intervalle allant de 1:0,1 à 1:50 ;
l'agent actif du groupe (8), se situe dans l'intervalle allant de 1:0,1 à 1:50 ;
l'agent actif du groupe (9), se situe dans l'intervalle allant de 1:0,02 à 1:50 ;
l'agent actif du groupe (10), se situe dans l'intervalle allant de 1:0,1 à 1:50 ;
l'agent actif du groupe (11), se situe dans l'intervalle allant de 1:0,1 à 1:50 ;
l'agent actif du groupe (12), se situe dans l'intervalle allant de 1:0,1 à 1:50 ;
l'agent actif du groupe (13), se situe dans l'intervalle allant de 1:0,1 à 1:50 ;
l'agent actif du groupe (14), se situe dans l'intervalle allant de 1:0,1 à 1:50 ;
l'agent actif du groupe (15), se situe dans l'intervalle allant de 1:0,2 à 1:50 ;
l'agent actif du groupe (16), se situe dans l'intervalle allant de 1:0,1 à 1:50 ;
l'agent actif du groupe (17), se situe dans l'intervalle allant de 1:0,1 à 1:50 ;
l'agent actif du groupe (18), se situe dans l'intervalle allant de 1:1 à 1:150 ;
l'agent actif du groupe (19), se situe dans l'intervalle allant de 1:0,1 à 1:50 ;
l'agent actif du groupe (20), se situe dans l'intervalle allant de 1:0,02 à 1:50 ;

l'agent actif du groupe (21), se situe dans l'intervalle allant de 1:0,05 à 1:20 ;
l'agent actif du groupe (22), se situe dans l'intervalle allant de 1:0,1 à 1:50 ;
l'agent actif du groupe (23), se situe dans l'intervalle allant de 1:0,1 à 1:50 ;
l'agent actif du groupe (24), se situe dans l'intervalle allant de 1:0,1 à 1:150 ;
l'agent actif du groupe (25), se situe dans l'intervalle allant de 1:0,1 à 1:50 ;
l'agent actif du groupe (26), se situe dans l'intervalle allant de 1:0,1 à 1:50 ;
l'agent actif du groupe (27), se situe dans l'intervalle allant de 1:0,1 à 1:50 ;
l'agent actif du groupe (28), se situe dans l'intervalle allant de 1:1 à 1:150 ;
l'agent actif du groupe (29), se situe dans l'intervalle allant de 1:1 à 1:150 ;
l'agent actif du groupe (30), se situe dans l'intervalle allant de 1:0,1 à 1:50 ;
l'agent actif du groupe (31), se situe dans l'intervalle allant de 1:0,1 à 1:50 ;
l'agent actif du groupe (32), se situe dans l'intervalle allant de 1:0,1 à 1:50 ;
l'agent actif du groupe (33), se situe dans l'intervalle allant de 1:0,1 à 1:50 ;
l'agent actif du groupe (34), se situe dans l'intervalle allant de 1:0,1 à 1:50 ;
l'agent actif du groupe (35), se situe dans l'intervalle allant de 1:1 à 1:50 ;
l'agent actif du groupe (36), se situe dans l'intervalle allant de 1:1 à 1:150 ;
l'agent actif du groupe (37), se situe dans l'intervalle allant de 1:0,1 à 1:50 ;
l'agent actif du groupe (38), se situe dans l'intervalle allant de 1:0,1 à 1:50 ;
l'agent actif du groupe (39), se situe dans l'intervalle allant de 1:0,1 à 1:50 ;
l'agent actif du groupe (40), se situe dans l'intervalle allant de 1:0,1 à 1:50 ;
l'agent actif du groupe (41), se situe dans l'intervalle allant de 1:1 à 1:150 ;
l'agent actif du groupe (42), se situe dans l'intervalle allant de 1:1 à 1:150 ;
l'agent actif du groupe (43), se situe dans l'intervalle allant de 1:0,1 à 1:50 ;
l'agent actif du groupe (44), se situe dans l'intervalle allant de 1:0,1 à 1:50 ;
l'agent actif du groupe (45a), se situe dans l'intervalle allant de 1:1 à 1:150 ;
l'agent actif du groupe (45b), se situe dans l'intervalle allant de 1:1 à 1:150 ;
l'agent actif du groupe (46), se situe dans l'intervalle allant de 1:0,1 à 1:50 ;
l'agent actif du groupe (47a), se situe dans l'intervalle allant de 1:0,1 à 1:50 ;
l'agent actif du groupe (47b), se situe dans l'intervalle allant de 1:0,1 à 1:50 ;
l'agent actif du groupe (47c), se situe dans l'intervalle allant de 1:0,1 à 1:50 ;
l'agent actif du groupe (47d), se situe dans l'intervalle allant de 1:0,1 à 1:50 ;
l'agent actif du groupe (47e), se situe dans l'intervalle allant de 1:0,1 à 1:50 ;
l'agent actif du groupe (47f), se situe dans l'intervalle allant de 1:0,1 à 1:50 ;
l'agent actif du groupe (47g), se situe dans l'intervalle allant de 1:0,1 à 1:50 ;
l'agent actif du groupe (47h), se situe dans l'intervalle allant de 1:0,1 à 1:50 ;
l'agent actif du groupe (48), se situe dans l'intervalle allant de 1:0,1 à 1:50 ;
l'agent actif du groupe (49), se situe dans l'intervalle allant de 1:0,1 à 1:50 ;
l'agent actif du groupe (50), se situe dans l'intervalle allant de 1:0,1 à 1:50 ;
l'agent actif du groupe (51), se situe dans l'intervalle allant de 1:0,1 à 1:50.

**4.** Procédé pour lutter contre les champignons, **caractérisé en ce que** l'on applique des combinaisons d'agents actifs suivant au moins l'une des revendications 1 à 3 sur les champignons et/ou leur biotope.

**5.** Utilisation des combinaisons d'agents actifs suivant au moins l'une des revendications 1 à 3, pour lutter contre les champignons.

**6.** Procédé de préparation d'agents fongicides, **caractérisé en ce que** l'on mélange des combinaisons d'agents actifs suivant au moins l'une des revendications 1 à 3 avec des diluants et/ou tensioactifs.